(19) Europäisches Patentamt
European Patent Office
Office européen des brevets

(11) Veröffentlichungsnummer : **0 008 685**
**B1**

(12) # EUROPÄISCHE PATENTSCHRIFT

(45) Veröffentlichungstag der Patentschrift : **02.12.81**

(51) Int. Cl.³ : **C 05 C 11/00**, C 09 K 17/00

(21) Anmeldenummer : **79102816.0**

(22) Anmeldetag : **06.08.79**

(54) **Agrochemische Mittel und deren Verwendung.**

(30) Priorität : **18.08.78 DE 2836155**

(43) Veröffentlichungstag der Anmeldung : **19.03.80 (Patentblatt 80/06)**

(45) Bekanntmachung des Hinweises auf die Patenterteilung : **02.12.81 Patentblatt 81/48**

(84) Benannte Vertragsstaaten : **DE**

(56) Entgegenhaltungen :
**BE - A - 353 102**
**DE - A - 662 338**
**DE - A - 950 911**
**DE - C - 949 060**
**DE - C - 949 237**
**GB - A - 733 269**

(73) Patentinhaber : **BAYER AG**
**Zentralbereich Patente, Marken und Lizenzen**
**D-5090 Leverkusen 1, Bayerwerk (DE)**

(72) Erfinder : **Wagner, Kuno, Dr.**
**Am Kiesberg 8**
**D-5090 Leverkusen (DE)**
Erfinder : **Niggemann, Johannes, Dr.**
**Christian-Hess-Strasse 73**
**D-5090 Leverkusen (DE)**
Erfinder : **Findeisen, Kurt, Dr.**
**In der Follmühle 10**
**D-5068 Odenthal-2 (DE)**
Erfinder : **Scheinpflug, Hans, Dr.**
**Am Theienhof 15**
**D-5090 Leverkusen-1 (DE)**

**EP 0 008 685 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

# Agrochemische Mittel und deren Verwendung

Die vorliegende Erfindung betrifft agrochemische Mittel auf Basis von Azulminsäure, die durch Umsetzung mit Aminoplastbildnern und Carbonylverbindungen bzw. deren Kondensationsprodukten stabilisiert sind, sowie die Verwendung dieser agrochemischen Mittel in der Landwirtschaft.

Polymere Blausäuren, sogenannte Azulminsäuren, sowie mehrere Verfahren zu deren Herstellung sind bereits beschrieben worden (vgl. Houben-Weyl, Band 8 (1952), Seite 261 ; DE-B 662 338 und DE-B 949 060). So erhält man polymere Blausäure z.B. dadurch, daß man monomere Blausäure in verdünnter wäßriger Lösung in Gegenwart von basischen Katalysatoren, wie Ammoniak, Natriumcyanat, Kaliumcyanat oder Erdalkalien, auf die Reaktionstemperatur erhitzt und nach dem Eintreten der Umsetzung durch Kühlung dafür sorgt, daß bevorzugt eine Reaktionstemperatur von 120 °C nicht überschritten wird (vgl. DE-B 662 338). In einer besonderen Variante dieses Verfahrens wird dem Gemisch aus Lösungsmittel, Blausäure und Katalysator, in dem die Umsetzung bereits begonnen hat, weitere Blausäure zugeführt (vgl. DE-B 949 060). Bei diesen bekannten Blausäurepolymerisaten handelt es sich um braunschwarz bis schwarze pulvrige Produkte, die in allen inerten Solventien unlöslich sind, sich aber in 1 n wäßriger Natronlauge bereits in der Kälte unter Zersetzung lösen. Ein schwerwiegender Nachteil derartiger Blausäurepolymerisate besteht darin, daß sie sowohl bei der trockenen als auch bei der feuchten Lagerung schon bei Raumtemperatur fortlaufend kleine Mengen an Cyanwasserstoff abspalten. Mit steigender Temperatur nimmt auch die Rate der Cyanwasserstoffabspaltung zu. Selbst in noch so schonend gelagerten, Azulminsäuren enthaltenden Gebinden treten daher Blausäuremengen auf, die weit über dem gesetzlich festgesetzten Blausäure-MAK-Wert von 11 ppm liegen. Daher ist eine praktische Verwendung der bekannten Blausäurepolymerisate für die verschiedensten Zwecke außerordentlich umweltgefährdend und somit kaum möglich.

Weiterhin ist bereits bekannt, daß sich Blausäure-Polymerisate als Stickstoffdünger verwenden lassen (vgl. H. Banthien « Synthetische Stickstoffdüngemittel » in « Handbuch der Pflanzenernährung und Düngung » II/2, 1968, Springer-Verlag, Wien/New York, DE-B 911 018 sowie Angew. Chem. 72, (1960) Seiten 379-384). Nachteilig ist jedoch, daß diese Produkte, insbesondere unter hydrolytischen Bedingungen, Blausäure abspalten. Sie kommen deshalb für einen praktischen Einsatz als Düngemittel kaum in Frage.

Nach einem Vorschlag von Th. Völker kommt der braunschwarzen, in Wasser hergestellten polymeren Blausäure (Azulminsäure) im wesentlichen die folgende Formel zu (vgl. Angew. Chem. 72, (1960) Seiten 379-384) :

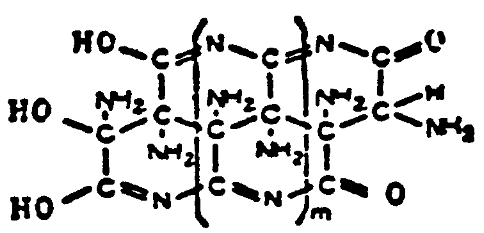

(I)

Aus den Sauerstoffgehalten der bekannten Azulminsäuren wurde ein Polymerisationsgrad (HCN) von X = 15-24 berechnet, so daß sich für m (Formel I) Werte von 1 bis 4 ergeben. Die maximal erzielten Molekulargewichte der Polymere liegen wenig oberhalb von 700.

Es wurde nun gefunden, daß sich

a) durch Umsetzung mit Aminoplastbildnern und Carbonylverbindungen oder deren gegebenenfalls chemisch modifizierten Kondensationsprodukten stabilisierte Azulminsäuren, die 0,5 bis 55 Gewichtsprozent an ionischen Gruppen der Formel

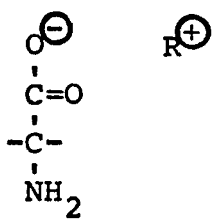

($F_1$)

enthalten,

in welcher

R für Wasserstoff, Ammonium, ein Äquivalent einer protonisierten oder quaternierten organischen Stickstoffbase, eines Sulfonium-Kations oder für ein Äquivalent eines Metallkations steht,

und die 0,5 bis 15 Gewichtsprozent an durch Decarboxylierungsreaktionen entstandenen Gruppen der

Formel

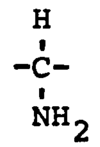

(F2

enthalten,

b) Säureadditions-Salze und Komplex-Verbindungen dieser stabilisierten Azulminsäuren,

c) Mischprodukte dieser stabilisierten Azulminsäuren mit Zusatzstoffen und

d) an der Oberfläche chemisch modifizierte Produkte der vorgenannten Stoffe

als agrochemische Mittel verwenden lassen.

Es its als äußerst überraschend zu bezeichnen, daß die erfindungsgemäß verwendbaren, durch Umsetzung mit Aminoplastbildnern und Carbonylverbindungen bzw. deren gegebenenfalls chemisch modifizierten Kondensationsprodukten stabilisierten Azulminsäuren, deren Säureadditions-Salze, Komplex-Verbindungen, Mischprodukte mit Zusatzstoffen sowie an der Oberfläche chemisch modifizierte Produkte der vorgenannten Stoffe im Gegensatz den den bisher bekannten Azulminsäuren gegenüber einer Abspaltung von Cyanwasserstoff extrem beständig sind. So spalten die erfindungsgemäß verwendbaren Produkte bei Temperaturen bis zu 130 °C, — in manchen Fällen bei Temperaturen bis zu 180 °C und in Extremfällen sogar bei Temperaturen bis zu 200 °C —, so gut wie keinen Cyanwasserstoff ab. Die analytisch feststellbaren Mengen an abgespaltenem Cyanwasserstoff sind gleich Null oder liegen auch unter ungünstiger Bedingungen unter den gesetzlich festgelegten MAK-Werten. Bei Temperaturen bis zu 180 °C spalten die erfindungsgemäßen Stoffe sogar in weit geringerem Maße Blausäure ab als Polyacrylnitril. Ferner sind die erfindungsgemäß verwendbaren Produkte auch gegenüber einer hydrolytischen Abspaltung von Cyanwasserstoff sehr stabil. So lassen sich selbst nach dreistündiger Behandlung von erfindungsgemäß verwendbaren stabilisierten Azulminsäuren in wäßrigem Medium bei 100 °C keine Cyanidionen oder weniger als $0{,}2.10^{-6}$ g Cyanidionen pro Gramm Wasser nachweisen. Überraschend ist ferner, daß sich die erfindungsgemäß verwendbaren Stoffe als agrochemische Mittel verwenden lassen. Aufgrund des bekannten Standes der Technik mußte angenommen werden, daß die erfindungsgemäß verwendbaren Produkte ähnlich wie die vorbekannten Blausäurepolymerisate bei der Lagerung und vor allem unter hydrolytischen Bedingungen Cyanwasserstoff abspalten. Im Gegensatz zu den Erwartungen ist dies jedoch nicht der Fall.

Die erfindungsgemäß verwendbaren, durch Umsetzung mit Aminoplastbildnern und Carbonylverbindungen bzw. deren gegebenenfalls chemisch modifizierten Kondensationsprodukten stabilisierten Azulminsäuren, deren Säureadditions-Salze, Komplex-Verbindungen, Mischprodukte mit Zusatzstoffen sowie an der Oberfläche chemisch modifizierte Produkte der vorgenannten Stoffe besitzen eine Reihe von Vorteilen. So weisen sie eine wesentlich höhere Quellbarkeit auf als die vorbekannten nahezu fehlerstellenfreien Azulminsäuren und sind deshalb im Gegensatz zu den vorbekannten Azulminsäuren vielseitig verwendbar. Z.B. sind sie nicht nur thermisch und hydrolytisch gegenüber Cyanwasserstoffabspaltung stabil, sondern lassen sich unter hydrolytischen Bedingungen, wie sie im Boden vorkommen, unter Mitwirkung von Bodenbakterien ohne Freisetzung von Blausäure abbauen. Sie lassen sich deshalb als Stickstoffdünger mit Langzeitwirkung verwenden. Weiterhin eignen sich erfindungsgemäß verwendbare Stoffe, die mit entsprechenden Ionen bzw. Salzen beladen sind, zur Versorgung von Pflanzen mit Makro- und/oder Mikronährstoffen. Diejenigen erfindungsgemäß verwendbaren Stoffe, die mit Säuren, wie z.B. Salpetersäure oder Phosphorsäure, oder mit Ammonium-Salzen beladen sind, stellen besonders wertvolle Düngemittel dar, da sie sowohl organisch gebundenen Stickstoff als auch anorganische Nährstoffe für Pflanzen zur Verfügung stellen. Außerdem zeichnen sich die erfindungsgemäß verwendbaren Stoffe durch ein hohes Bindungsvermögen für im Boden vorkommende Schadstoffe, wie z.B. unerwünschte Schwermetallionen oder in Überdosis vorhandene und deshalb schädigende Pflanzenschutzmittel aus. Sie lassen sich darüber hinaus als Bodenverbesserungsmittel sowie für andere Zwecke in der Landwirtschaft und im Gartenbau einsetzen. Die erfindungsgemäß verwendbaren Stoffe stellen somit eine wertvolle Bereicherung der Technik dar.

Die erfindungsgemäß verwendbaren Verbindungen lassen sich formelmäßig nicht eindeutig definieren. Sie sind jedoch dadurch charakterisiert, daß sie Molekülsegmente enthalten, die durch Kondensation von Aminoplastbildnern und Carbonylverbindungen mit reaktiven Gruppen der Azulminsäuren entstehen.

Unter Aminoplastbildnern sind in diesem Zusammenhang alle diejenigen Stickstoff-Verbindungen zu verstehen, die in der Lage sind, mit reaktionsfähigen Carbonylverbindungen N-Oligo- und N-Polykondensationsprodukte zu bilden.

Hierzu gehören Stickstoffverbindungen, wie Harnstoffe, z.B. der Harnstoff selbst, Acetylenharnstoff, Dimethylacetylenharnstoff und N-Methylharnstoff, ferner Thioharnstoffe, wie der unsubstituierte Thioharnstoff, weiterhin Diharnstoffe, wie Hexamethylendiharnstoff, Tetramethylendiharnstoff und Äthylendiharnstoff, außerdem Polyharnstoffe wie sie durch Umsetzung von aliphatischen, cycloaliphatischen bzw. araliphatischen Di- oder Triisocyanaten oder auch Biuret-polyisocyanaten mit Ammoniak oder primären

Aminen erhalten werden, darüber hinaus Polycarbonsäureamide, wie Oxalsäurediamid, Bernsteinsäurediamid und Adipinsäurediamid, ferner Mono-, Di- und Polyurethane, wie beispielsweise die Umsetzungsprodukte von aliphatischen, cycloaliphatischen, araliphatischen und aromatischen Mono- oder Bischlorameisensäureestern mit Ammoniak oder primären Aminen, außerdem Biurete, Melamine, wie das Melamin selbst, Amidine, wie Dicyandiamidin, Guanidine, wie Aminoguanidin, weiterhin Guanazole, Guanamine, Cyanamid, Dicyandiamid, primäre Monoamine, sekundäre Monoamine, Arylamine, Ammoniak, Diamine, Triamine, Hydrazine und Carbonsäurehydrazide, wie Hydrazodicarbonamid, Carbacinsäureester und Hydrazodicarbonsäureester, und außerdem ähnliche zur Aminoplastbildung befähigte Stickstoffverbindungen, vorzugsweise die den vorgenannten Stickstoffverbindungen entsprechenden N-Alkylolgruppen, vorzugsweise N-Methylolgruppen aufweisenden Derivate und bevorzugt die entsprechenden $C_1$-$C_4$-Alkyläther dieser N-Alkylol-Derivate.

Zu den Aminoplastbildnern im Sinne der Erfindung gehören auch höhermolekulare α,ω-Diharnstoffe, deren N-Methylolverbindungen und N-Methylolalkyläther, ferner α,ω-Bis-alkoxymethylurethane, welche zwischen den α,ω-ständigen funktionellen Gruppen Polyäther-, Polythioäther-, Polyacetal-, Polyester-, Polyesteramid- oder Polycarbonatreste vom Durchschnittsmolekulargewicht 400 bis 10 000 und gegebenenfalls zusätzliche Urethan- oder substituierte Harnstoffgruppen aufweisen. Besonders bevorzugt sind hierbei höhermolekulare zur Aminoplast-Bildung befähigte Stickstoffverbindungen, wasserlösliche oder in Wasser dispergierbare Verbindungen, z.B. Verbindungen, welche zwischen den α,ω-ständigen funktionellen Urethan- oder Harnstoffgruppen Polyäthylenoxidreste oder Reste von Mischpolymerisaten des Äthylenoxids mit Propylenoxid bzw. Tetrahydrofuran oder von wasserlöslichen Polyacetalen, hergestellt aus Di-, Tri- oder Tetraäthylenglykol und Formaldehyd, aufweisen.

Aminoplastbildner, die in den erfindungsgemäß verwendbaren Verbindungen in kondensierter Form vorhanden sein können, sind auch modifizierte Aminoplastbildner, also Aminoplastbildner, die zusätzliche Stoffe enthalten. Genannt seien z.B. Verbindungen, die rasch und leicht durch Mischkondensation einbaufähig sind. Hierzu gehören vorzugsweise Polyurethane und Polyharnstoffe mit $NH_2$-Endgruppen, Polyamide aus Poly-(β-alanin) mit Molgewichten bis 2 000, N-Methylolmethyläther von Polycaprolactam, Polythiolactame, Polypeptide aus N-Carboxy-α-aminocarbonsäuren, niedermolekulare Polyamide aus aliphatischen Dicarbonsäuren und Diaminen, Polyamide aus cycloaliphatischen Komponenten und aromatischen Komponenten, Polyamide mit O- bzw. S- oder N- als Heteroatome, Polyesteramide, Mischkondensate, die neben Amidgruppen noch Ester-, Urethan- oder Harnstoffgruppen enthalten, äthoxylierte und propoxylierte Mono- und Polyamide, Polyhydrazide und Polyaminotriazole, Polysulfonamide, Formaldehyd-Mischkondensate mit Harnstoff, Melamin und Dicyandiamid, niedermolekulare Anilin-Formaldehyd-Kondensate, Sulfonsäureamide, Mono- und Dinitrile, Acrylnitril, Urotropin, Hexahydrotriazine aus primären Aminen und Formaldehyd, Schiff'sche Basen und Ketimine oder Polyketimine, wie z.B. solche aus einem Mol Hexamethylendiamin und 2 Mol Cyclohexanon, Polyadditionsprodukte und Polykondensationsprodukte des Melamins und anderer Aminoheterocyclen mit Aldehyden und Alkoholen, Polyadditions- und Polykondensationsprodukte von Nitrilen mit Aldehyden, Umsetzungsprodukte von phosphoriger Säure und Dialkylphosphiten mit Carbonylverbindungen und Aminen bzw. Polyaminen. Ferner kommen als zur Aminoplastbildung befähigte Verbindungen in diesem Zusammenhang auch diejenigen Verbindungen in Frage, die in der DE-A 2 324 134 auf den Seiten 7 bis 12 angeführt sind.

Zu den modifizierten Aminoplastbildnern, die in den erfindungsgemäß verwendbarer Verbindungen in kondensierter Form vorhanden sein können, gehören weiterhin N-Alkylolverbindungen und insbesondere N-Methylolverbindungen, die zum Teil veräthert sind mit Verbindungen wie

— polyfunktionellen Hydroxylverbindungen, z.B. Polyalkoholen, wobei Äthylenglykol, Glyzerin, Formose-Zuckergemische, Glukose, Oligo- und Polysaccharide sowie Stärke beispielhaft genannt seien ;

— Polyäthern mehr oder weniger hoher OH-Funktionalität, wie sie in der Polyurethanchemie verwendet werden, also z.B. Polyäther aus Propylenoxid, die anteilweise Äthylenoxidsegmente, sei es in Mischblöcken, in statistischer Verteilung oder bevorzugt als endständige Segmente enthalten und die primäre Hydroxylgruppen als Endgruppen besitzen, wobei diese Polyäther bis zu 70 Gew.-% mehr an Polyäthylenoxid-Segmenten enthalten können und bevorzugt 13-30 Gew.-%, — bezogen auf eingebaute Propylen-oxid-Segmente —, an Polyäthylenoxid-Segmenten enthalten können ;

— höherschmelzende, reine Polyäthylenoxide vom Durchschnittsmolekulargewicht 500-60 000, wobei insbesondere in Frage kommen Additionsprodukte des Propylenoxids an Trimethylolpropan bzw. Glyzerin, die in zweiter Stufe mit Äthylenoxid derartig umgesetzt werden, daß auf etwa 83-87 Gew.-Teile an gebundenem Propylenoxid etwa 17-13 Gew.-Teile an Äthylenoxid entfallen ;

— Polyhydroxylverbindungen mit einem Durchschnittsmolekulargewicht von 250-14 000, vorzugsweise 400-6 000, welche gegebenenfalls im Gemisch mit niedermolekularen Polyhydroxylverbindungen des Molekulargewichtsbereiches 62-250 vorliegen ;

— höhermolekularen Polyhydroxylverbindungen, wie z.B. mindestens zwei endständige Hydroxylgruppen aufweisende Polyäther, in denen bevorzugt mindestens 10 % der Hydroxylgruppen primäre Hydroxylgruppen darstellen ;

— Polyhydroxylpolyestern, wie sie in großer Variationsbreite beim Diisocyanat-polyadditionsverfahren eingesetzt werden.

Als Carbonylverbindungen, die in den erfindungsgemäß verwendbaren Produkten in kondensierter

Form vorhanden sind, kommen vorzugsweise Aldehyde, Ketone und Ketoester mit reaktiven Carbonylgruppen in Betracht.

Unter Aldehyden sind hierbei gesättigte oder ungesättigte gegebenenfalls substituierte aliphatische, cycloaliphatische, araliphatische und aromatische Aldehyde zu verstehen. Beispielhaft genannt seien Formaldehyd, Acetaldehyd, Butyraldehyd, Isobutyraldehyd, Chloral, Hydroxyäthylaldehyd, Hydroxypivalinaldehyd, Acrolein, Crotonaldehyd, Glyoxal, Methylglyoxal, Cyclohexanaldehyd, Furfurol, Hydroxymethylfurfurol, Glukose, Glycerinaldehyd, Salicylaldehyd, Benzaldehyd, 4-Methylbenzaldehyd, Terephthaldialdehyd und andere Aldehyde, die unter den Bedingungen der Aldolkondensation, der Formose-Synthese oder der Acyloinkondensation gegebenenfalls in situ aus Formaldehyd und anderen niedermolekularen Aldehyden entstehen. Speziell erwähnt seien hierbei diejenigen Hydroxyaldehyde, deren Bildung durch die nachstehenden Reaktionsgleichungen schematisch wiedergegeben ist.

a) 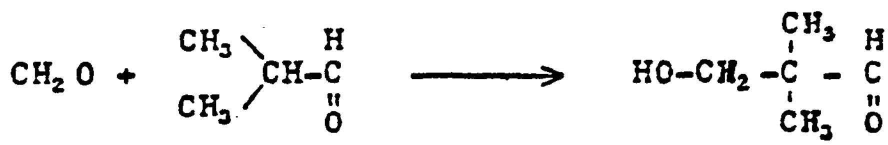

b) 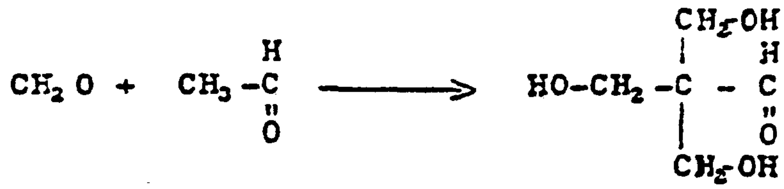

c) 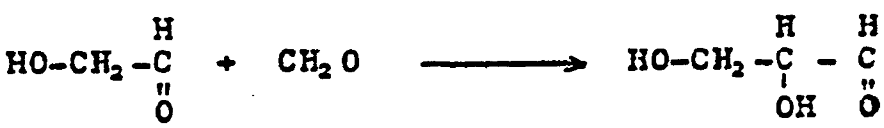

bzw. 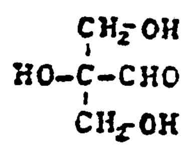

d) 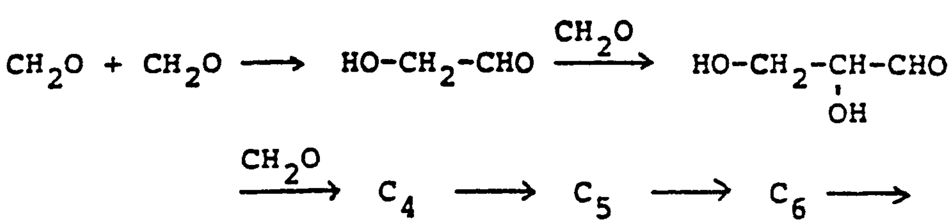

Polyhydroxyaldehyde

e) 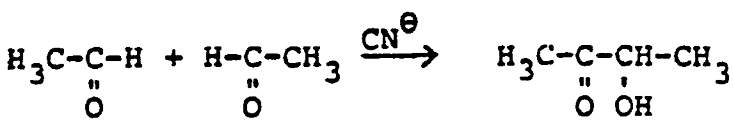

Die Umsetzung gemäß Gleichung (d) entspricht dabei der Butlerow-Löw-Formose-Reaktion.

Als Ketone, die in den erfindungsgemäß verwendbaren Produkten in kondensierter Form vorhanden sein können, seien Methyl-äthylketon, Methylisobutylketon, Hydroxyaceton, Dihydroxyaceton, Cyclohexanon, Acetophenon und Chinone, wie Benzochinon, beispielhaft genannt, wobei die Chinone insbesondere als Kondensationsprodukte mit Ammoniak oder Polyaminen vorliegen.

Als Ketoester sei im vorliegenden Zusammenhang Acetessigester beispielhaft erwähnt.

Wie bereits oben angeführt, sind die erfindungsgemäß verwendbaren Produkte dadurch charakterisiert, daß sie Molekülsegmente enthalten, die durch Kondensation von Aminoplastbildnern und Carbonylverbindungen mit reaktiven Gruppen der Azulminsäuren entstehen. In idealisierter Form läßt sich die Bindung eines solchen Molekülsegments « A » an Aminogruppen oder andere durch Verseifung von Nitrilgruppen bzw. durch Entcyclisierungen gebildete Gruppen durch folgende Formeln darstellen :

Fehlerstellen

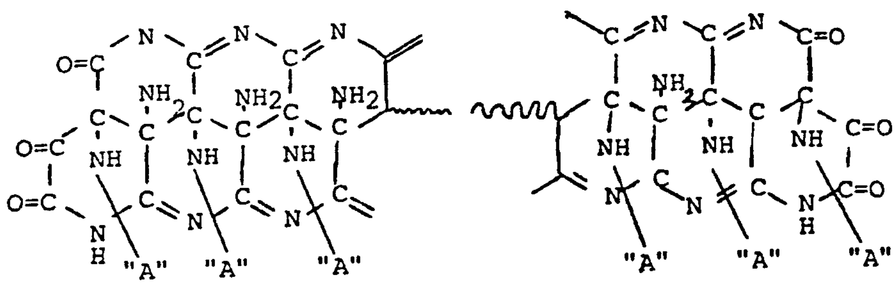

Der Rest « A » steht hierbei für die Molekülsegmente, die durch Kondensation von Aminoplastbildnern mit Carbonylverbindungen entstehen. Vorzugsweise steht A für

— Aryliden-polyharnstoff-Reste und Polyalkyliden-polyharnstoff-Reste, insbesondere Polymethylenpolyharnstoff-Reste, welche sich durch folgende idealisierte Formel veranschaulichen lassen

$$H_2N-\underset{O(S)}{\overset{\|}{C}}-NH-\left[\underset{R}{\overset{}{CH}}-NH-\underset{O(S)}{\overset{\|}{C}}-NH\right]_x-\underset{R}{CH}- \qquad (A-1)$$

in welcher

X für ganze Zahlen von 0 bis 18 steht und

R vorzugsweise für Wasserstoff, Methyl, Ethyl, Propyl, Isopropyl sowie für Reste der Formeln

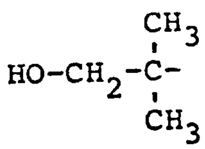 , $CH_3-CH=CH-$ ,

$HO-CH_2-$, $HO-CH_2-\underset{OH}{CH}-$, $HO-CH_2-\underset{OH}{CH}-\underset{OH}{CH}-$,

$HO-CH_2-\underset{OH}{CH}-\underset{OH}{CH}-\underset{OH}{CH}-$,

$HO-CH_2-\underset{OH}{CH}-\underset{OH}{CH}-\underset{OH}{CH}-\underset{OH}{CH}-$

steht sowie für isomere Hydroxyaldehydreste, wie sie in den Formose-Zuckergemischen vorliegen, außerdem für Oligosaccharide und ferner für die Reste der Formeln

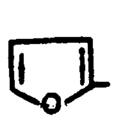 und 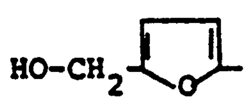 steht ;

— Biuretsulfone der Konstitution 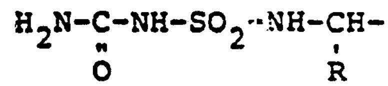

bzw.

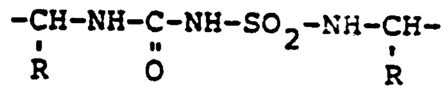

worin R die oben angegebene Bedeutung hat ;

— Hydrouracil-Reste, die aus 1 Mol an ungesättigter Carbonsäure, z.B. Crotonsäure, 1 Mol Harnstoff und Formaldehyd entstehen, wobei der Rest der Konstitution

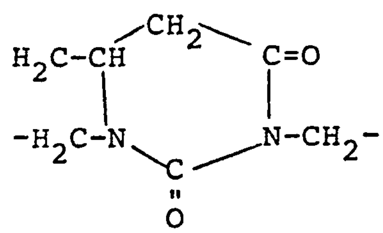

beispielhaft genannt sei ;

— Reste von Umsetzungsprodukten der Maleinsäureureide mit Aldehyden, bevorzugt Formaldehyd, wobei der Rest der Konstitution

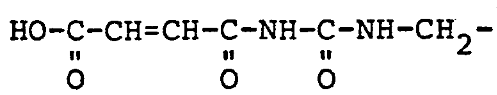

beispielhaft genannt sei ;

— Methylengruppen enthaltende Lactam- und Azalactam-Reste, z.B. Reste der Konstitution

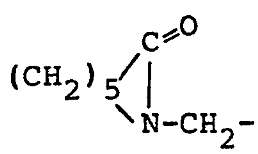 bzw. 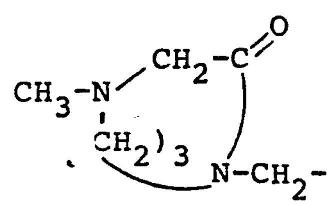

— Methylengruppen enthaltende Reste cyclischer Verbindungen der Konstitution

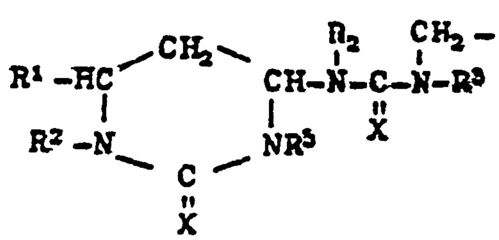

worin

X für Sauerstoff oder Schwefel steht und

$R^1$, $R^2$ und $R^3$ gleich oder verschieden sind und für Wasserstoff, Methyl, Äthyl oder Methylengruppen stehen ;

— Methylengruppen enthaltende Reste des Äthylendiharnstoffs wie z.B. der Konstitution

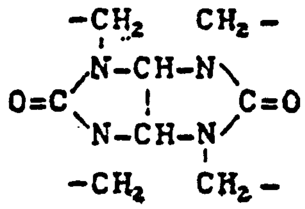

— Methylengruppen enthaltende Reste des Äthylenharnstoffs und Vinylidenharnstoffs, wie Reste der Formeln

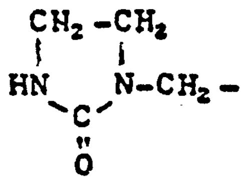 bzw. 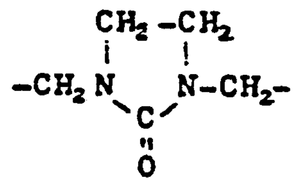 bzw.

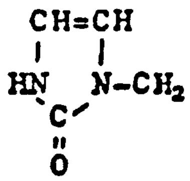 und 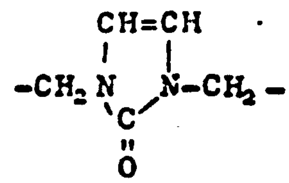 ;

— Methylengruppen enthaltende Reste des Harnstoffs, wie z.B. Reste der Konstitution

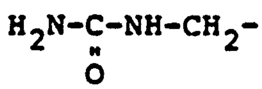 bzw. 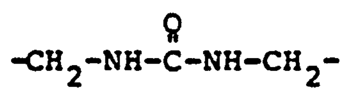 ;

— Methylen- bzw. Alkyliden-Reste des 2-Oxo-4-methyl-6-ureido-hexahydropyrimidins der Konstitution

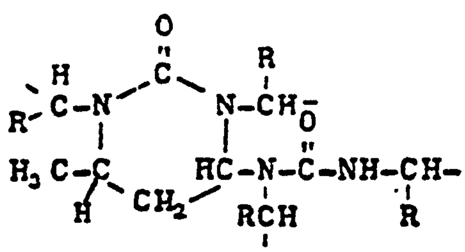

wobei R die obengenannte Bedeutung hat ;

— Methylen- bzw. Alkyliden-Reste mit Melamin-Strukturen wie

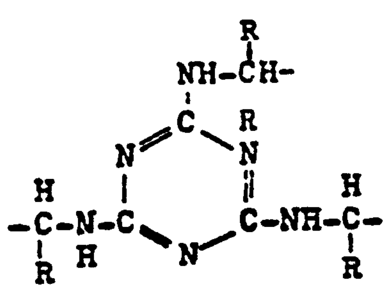

wobei R die obengenannte Bedeutung hat ;

— Reste der Formel

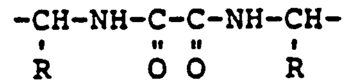

worin

R die oben angegebene Bedeutung hat ;

— Methylen- bzw. Alkyliden-Reste mit Sulfonamid-Strukturen wie z.B.

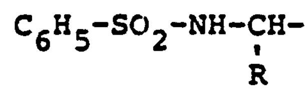

bzw.

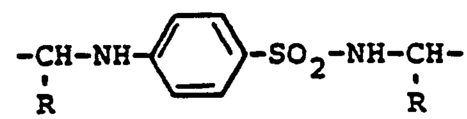

worin R die oben angegebene Bedeutung hat ;

— Methylen- bzw. Alkyliden-Reste mit Dicyandiamid-, Guanidin-Strukturen ;

— durch Methylen- bzw. Alkyliden-Reste substituierte aromatische und aliphatische Amine, Polyamine und Hydrazine.

Die in den erfindungsgemäß verwendbaren Stoffen enthaltenden Fehlerstellen sind durch die Formeln ($F_1$) und ($F_2$) definiert. In der Formel ($F_1$) steht R vorzugsweise für Wasserstoff, Ammonium oder ein Äquivalent eines Kations von einem Metall aus der I. bis V. Hauptgruppe bzw. aus der I. bis VIII. Nebengruppe, wobei die Kationen von Lithium, Natrium, Kalium, Beryllium, Magnesium, Calcium, Strontium, Barium, Aluminium, Thallium, Zinn, Wismut, Kupfer, Silber, Gold, Zink, Cadmium, Titan, Zirkon, Chrom, Mangan, Eisen, Cobalt, Nikkel, Platin und Palladium, Rhodium und Ruthenium beispielhaft genannt seien. R steht ferner vorzugsweise für ein Äquivalent eines protonisierten Alkylamins mit 1 bis 6 Kohlenstoffatomen, eines protonisierten Dialkylamins mit 1 bis 6 Kohlenstoffatomen pro Alkylgruppe, eines protonisierten Trialkylamins mit 1 bis 6 Kohlenstoffatomen pro Alkylgruppe, eines protonisierten Hydroxyalkylamins mit 1 bis 6 Kohlenstoffatomen, eines protonisierten Di-(hydroxy-alkyl)-amins mit 1 bis 6 Kohlenstoffatomen pro Hydroxyalkylgruppe, eines protonisierten Tri-(hydroxy-alkyl)-amins mit 1 bis 6 Kohlenstoffatomen pro Hydroxy-alkylgruppe, eines protonisierten Cycloalkylamins mit 3 bis 8 Kohlenstoffatomen, eines protonisierten Alkylendiamins mit 2 bis 6 Kohlenstoffatomen, eines protonisierten Guanidins, Melamins oder Dicyandiamids oder einer protonisierten, gesättigten oder ungesättigten heterocyclischen Stickstoffbase mit 5 bis 7 Ringgliedern und 1 bis 3 Stickstoffatomen im heterocyclischen Ring, sowie für diejenigen Kationen, die durch Quaternisierung, wie z.B. Permethylierung, der vorgenannten basischen Stickstoff-Verbindungen entstehen. Besonders bevorzugte Stickstoffbasen sind in diesem Zusammenhang Methylamin, Dimethylamin, Trimethylamin, Äthylamin, Diäthylamin, Triäthylamin, tert.-Butylamin, Äthanolamin, Diäthanolamin, Triäthanolamin, N-Methyläthanolamin, Propanolamin, Dipropanolamin, Tripropanolamin, Cyclopropylamin, Cyclopentylamin, Cyclohexylamin, Äthylendiamin, Diäthylentriamin, Triäthylentetramin, Tetramethylendiamin, Isophorondiamin, Oleylamin, Fettamine, Pyrrolidin, Piperidin, Morpholin, Imidazol, Pyrazol, 1,2,4-Triazol, 1,2,3-Triazol, 2-Äthylimidazol und Aminotriazol. Weiterhin steht R vorzugsweise für Trialkylsulfonium-Kationen, insbesondere für das Triäthylsulfonium-Kation.

Unter erfindungsgemäß verwendbaren, durch Umsetzung mit Aminoplastbildnern und Carbonylverbindungen bzw. deren gegebenenfalls chemisch modifizierten Kondensationsprodukten stabilisierten Azulminsäure-Säureadditionssalzen sind solche Salze zu verstehen, die sich durch Addition eines Protons einer anorganischen oder organischen Säure an eine Aminogruppe oder eine andere geeignete Gruppe in einer anmeldungsgemäß stabilisierten Azulminsäure bilden. Als anorganische Säuren kommen hierbei vorzugsweise in Frage Halogenwasserstoffsäuren, wie Fluorwasserstoffsäure, Chlorwasserstoffsäure und Bromwasserstoffsäure, weiterhin Säuren des Phosphors, wie Phosphorsäure, phosphorige Säure, Dialkylphosphorsäuren, z.B. Dibutylphosphorsäure, Polyphosphorsäuren mit Molekulargewichten von 6 000 bis 40 000 und Phospholinoxid-phosphonsäuren, z.B. solchen der Formeln

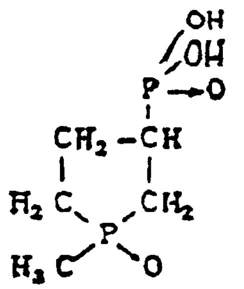

und

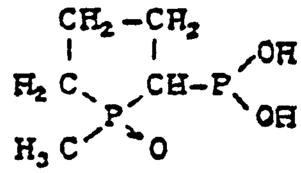

,

ferner Salpetersäure und vom Schwefel abgeleitete Säuren, wie Schwefelsäure und Sulfonsäuren, wobei Äthylsulfonsäure, p-Toluolsulfonsäure und Naphthalin-1,5-disulfonsäure beispielhaft gerannt seien. Als organische Säuren kommen vorzugsweise in Betracht gesättigte oder ungesättigte Carbonsäuren, wie Ameisensäure, Essigsäure, Propionsäure, 2-Äthylcapronsäure, Acrylsäure, Methacrylsäure, Ölsäure und Ricinolsäure, weiterhin Halogencarbonsäuren, wie Chloressigsäure, Dichloressigsäure und Trichloressigsäure, ferner Dicarbonsäuren, wie Maleinsäure, Fumarsäure und Bernsteinsäure und davon abgeleitete Halbester, und außerdem Hydroxycarbonsäuren, wie Hydroxyessigsäure, Weinsäure, Zitronensäure und Salicylsäure.

Unter erfindungsgemäß verwendbaren, durch Umsetzung mit Aminoplastbildnern und Carbonylverbindungen bzw. deren gegebenenfalls chemisch modifizierten Kondensationsprodukten stabilisierten Azulminsäure-Komplex-Verbindungen sind vorzugsweise Komplexe aus anmeldungsgemäß stabilisierten Azulminsäuren und Metallverbindungen oder Ammoniumsalzen zu verstehen.

Als Metallverbindungen kommen hierbei insbesondere Salze, Säuren, Hydroxide bzw. Oxide von Metallen der II. bis V. Hauptgruppe bzw. der I. bis VIII. Nebengruppe in Betracht. Beispielhaft genannt seien Calcium-chlorid, -acetat, -nitrat und -hydroxid, bzw. -oxid, Strontiumnitrat, Bariumchlorid und -acetat, Borate, Aluminium-acetat und -formiat, Thalliumsulfat, Thalliumnitrat, Silizium-tetrachlorid, Natrium- bzw. Kaliumsilikat, Zinn-II-chlorid, Wismut-III-hydroxid und Wismut-III-nitrat, Kupfer-sulfat, -nitrat und -acetat, Silbernitrat, Tetrachlorogoldsäure, Zink-chlorid und -acetat, Cadmium-chlorid, Titantetrachlorid und -tetrabutylat, Zirkonsulfat, Vanadate, Chrom-II-chlorid, Molybdate, Wolframate und deren Heteropolysäuren, Mangan-II-sulfat und -II-acetat, Eisen-II-sulfat, -II-acetat und -III-chlorid, Cobaltchlorid, Nickelchlorid, Hexachloroplatinsäure und Palladium-II-chlorid. Als Ammoniumsalze kommen insbesondere Ammoniumnitrat und Ammoniumacetat in Frage.

Als Zusatzstoffe können in den anmeldungsgemäßen Produkten organische Naturstoffe und daraus gewonnene Produkte, anorganische Naturstoffe und daraus gewonnene Produkte, synthetische organische Produkte, synthetische anorganische Produkte und/oder Mischprodukte aus organischen und anorganischen Produkten enthalten sein.

Vorzugsweise in Frage kommende organische Naturstoffe und daraus gewonnene Produkte sind hierbei Holzpulver, Ligninpulver, Ligninsulfonsäuren, ammonifizierte Ligninsulfonsäuren, Humus, Huminsäuren, ammonifizierte Huminsäuren, Torf, Proteine und deren Abbauprodukte, z.B. Hydrolyseprodukte von Hefen, Algenmaterial (Alginate), Polypeptiden, wie Wolle und Gelatine, Fischmehl und Knochenmehl, ferner Aminosäuren, Oligopolypeptide, Pektine, Monosaccharide, wie Glucose und Fructose, Disaccharide, wie Saccharose, Oligosaccharide, Polysaccharide, wie Stärke und Cellulose, weiterhin Hemicellulosen, homogenisierte Materialien pflanzlichen und tierischen Ursprungs, Aktivkohlen sowie Aschen, die durch Partialoxidation, vollständige Oxidation oder Verbrennung organischer, durch Photosynthese gebildeter Stoffe oder üblicher Brennstoffe erhältlich sind, wobei Tannenasche, Ginsterasche, Asche von serbischen Fichten, Eichenasche, Birkenasche, Buchenasche, Weidenasche und Tabakblätter-Asche speziell genannt seien.

Als anorganische Naturstoffe und daraus gewonnene Produkte kommen vorzugsweise in Betracht Silikate, wie Aluminium-silikate, Calciumsilikate, Magnesiumsilikate und Alkalisilikate, ferner Seesand und andere natürlich vorkommende Siliziumdioxide, Kieselsäuren, insbesondere disperse Kieselsäuren, Kieselgele, weiterhin Tonmineralien, Glimmer, Carbonate wie Calciumcarbonat, Phosphorit und Phosphate wie Calciumphosphat und Ammoniummagnesiumphosphat, Sulfate wie Calciumsulfat und Bariumsulfat, außerdem Oxide wie Zirkondioxid, Nickeloxid, Palladiumoxid, Bariumoxid, disperse Antimonoxide und Aluminiumoxide, wie Bauxit, Aluminiumoxidhydrat, darüber hinaus Flugaschen und Ruß-Sorten verschiedenster Art.

Als synthetische organische Produkte kommen vorzugsweise in Frage Aminoplastkondensate, insbesondere solche aus Harnstoff, Dicyandiamid, Melamin oder Oxamid und Aldehyden wie Formaldehyd, Acetaldehyd, Isobutyraldehyd, Hydroxypivalinaldehyd, Crotonaldehyd, Hydroxyacetaldehyd, Furfurol, Hydroxymethylfurfurol, Glyoxal und Glucose, wobei speziell genannt seien Kondensationsprodukte aus Harnstoff und Formaldehyd, Harnstoff und Glyoxal, Harnstoff und Acetaldehyd, Harnstoff und Isobutyraldehyd, Harnstoff und Crotonaldehyd, Harnstoff und Hydroxypivalinaldehyd sowie das 2-Oxo-4-methyl-6-ureido-hexahydropyrimidin, welches ein bekanntes Kondensationsprodukt aus 1 Mol Crotonaldehyd und 2 Mol Harnstoff ist, das aus intermediär anfallendem Crotonyliden-diharnstoff unter Absättigung der Doppelbindung entsteht und dem die Konstitution

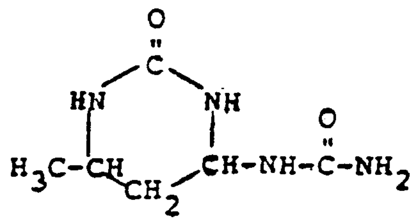

zukommt. Ferner genannt seien Polyalkylidenharnstoffe, wie Polymethylenharnstoffe, außerdem Polymethylenthioharnstoffe, hochvernetzte Aminoplastkondensate, Harnstoff-Hydrazodicarbonamid-Formaldehyd-Kondensate, Dicyandiamid-Kondensate, Oxamid-Kondensate und hochmolekulare Polyammonium-polyphosphate der Konstitution

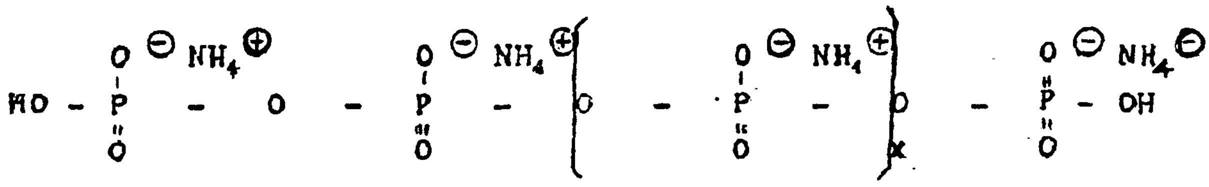

Weiterhin kommen als synthetische organische Produkte vorzugsweise in Betracht Kunststoffe, wie Polyamidpulver, Polyurethanpulver und Polycarbodiimide, ferner polymere Chinone, Additions- bzw. Kondensationsprodukte aus Chinonen, insbesondere Benzochinon, mit Aminen oder Ammoniak, außerdem mit Aldehyden, insbesondere Formaldehyd, vernetzte Gelatine, synthetische Bodenverbesserungsmittel, wie z.B. das als Hygromull bekannte Produkt (= Harnstoff-Formaldehyd-Harzflocken), darüber hinaus synthetische Zucker, wie z.B. aus Formaldehyd hergestellte Formose-Zuckergemische, ferner schwerlösliche Rohrzucker-Komplexe, wie der Saccharose-Calciumoxid-Komplex der Zusammensetzung 1 Mol Saccharose. 3 Mol Calciumoxid, und schließlich organische Ammoniumsalze, wie Ammoniumcarbaminat, und andere organische Stickstoffverbindungen wie Hexamethylentetramin und Hexahydrotriazine.

Als synthetische anorganische Produkte, die vorzugsweise in Frage kommen, seien genannt Düngemittel, wie Superphosphat, Thomasschlacke, Rhenaniaphosphat, Phosphorit, Kalkstickstoff, Kalkammonsalpeter, Leunasalpeter, Kaliumphosphate, Kaliumnitrat und Ammoniumnitrat, ferner Pigmente, wie Eisenoxide und Titandioxide, außerdem Metalloxide und Metallhydroxide, wie Calciumoxid, Calciumhydroxid, Wismuthydroxid, Manganhydroxid und Magnesiumhydroxid, wobei in situ hergestellte Hydroxide besonders bevorzugt sind, außerdem Schwefel, schwerlösliche Metall-Sulfate, -Carbonate, -Phosphate und Silikate, Heteropolysäuren des Wolframs, Vanadins und Molybdäns, weiterhin synthetische Kieselsäuren, insbesondere in situ hergestellte Kieselsäure und deren Salze, außerdem Wasserglas, Salze wie Cobaltmolybdat, Ammoniumcarbonat und Calciumcarbonat.

Als Mischprodukte aus anorganischen und organischen Produkten kommen vorzugsweise neutrale, basische oder säure Böden, natürliche Bodenverbesserungsmittel und biologisch aktive Gartenerde in Betracht.

Die Zusatzstoffe können in den erfindungsgemäß verwendbaren Produkten in physikalischer und/oder chemischer Bindung in einer Menge von 1 bis 95 Gewichtsprozent, vorzugsweise von 5 bis 90 Gewichtsprozent enthalten sein. In manchen Fällen können Produkte vorliegen, in denen die stabilisierten Azulminsäuren von den Zusatzstoffen umhüllt sind. Als Beispiel für derartige Produkte seien mit Polycarbodiimiden umhüllte, z.B. mikroverkapselte stabilisierte Azulminsäuren genannt.

Die Oberfläche der erfindungsgemäß verwendbaren Produkte kann chemisch modifiziert sein mit den verschiedenartigsten Komponenten. Vorzugsweise in Frage kommen hierbei solche Produkte, deren Oberfläche modifiziert ist

— durch Behandlung mit Harnstoffschmelzen (= Isocyansäurelieferant), Mono- oder Polyisocyanaten, wobei die Behandlung mit den letztgenannten Stoffen zu vernetzten, unlöslichen, Harnstoffgruppen enthaltenden Makropolyisocyanaten mit Isocyanat-Werten zwischen 0,5 und 3 Gew.-% an NCO führt ;

— durch Behandlung mit Acylierungsmitteln, wie Ameisensäure, Essigsäureanhydrid, Buttersäureanhydrid, gemischten Säureanhydriden aus Essigsäure und Ölsäure, vorzugsweise in Gegenwart von Natrium- oder Kaliumacetat ;

— durch Behandlung mit cyclischen Säureanhydriden, wie Maleinsäureanhydrid, Phthalsäureanhydrid oder Hexahydrophthalsäureanhydrid ;

— durch Behandlung mit Schmelzen von Dicarbonsäuren, wie Adipinsäure, Phthalsäure, Hexahydrophthalsäure oder Trimellithsäure ;

— durch Behandlung mit anorganischen Säurechloriden, wie Chlorcyan, Phosgen, Thionylchlorid, Schwefelchloriden, Phosphoroxychlorid, Phosphorpentachlorid, Siliziumtetrachlorid, Antimontrichlorid oder Titantetrachlorid ;

— durch Behandlung mit organischen Säurechloriden, wie Acetylchlorid, Benzoylchlorid, Chlora-

meisensäureestern der Formel

$$R'-O-\underset{\overset{\|}{O}}{C}-Cl,$$

in welcher R' für Alkyl mit 1 bis 8 Kohlenstoffatomen steht, bifunktionellen Chlorameisensäureestern der Formel

$$Cl-\underset{\overset{\|}{O}}{C}-O-R''-O-\underset{\overset{\|}{O}}{C}-Cl,$$

in welcher R'' für Alkylen mit 2 bis 8 Kohlenstoffatomen steht, Benzolsulfonsäurechloriden, Phosphorsäureesterchloriden, Chlormethansulfochlorid oder Cyanursäurechlorid ;

— durch Behandlung mit Alkylierungsmitteln, wie Dimethylsulfat, Methyljodid oder Methylbromid ;

— durch Behandlung mit Dichloräthan, Glykolchlorhydrin, Chloressigsäureäthylester, Dichloressigsäure-äthylester, Chloracetaldehyd-di-äthylacetal, Allylchlorid, Benzylchlorid, Trichlormethylisocyaniddichlorid oder anderen Isocyanidchloriden bzw. Alkylierungsreagentien ;

— durch Behandlung mit ε-Caprolactam, ε-Caprolacton, Hydroxypivalinsäurelacton, cyclischen 6-gliedrigen oder 8-gliedrigen Siloxanen, Azalactamen wie sie aus der DT-OS 2 035 800 bekannt sind, Glykolcarbonat, Äthylenoxid, Propylenoxid, Butylenoxid, Styroloxid, Epichlorhydrin, Butyrolacton, Valerolacton, Oxazolidinen, Oxazolinen, Imidazolidinen, Isatosäureanhydrid oder cyclischen Anhydriden aus Aminosäuren und Phosgen ;

— durch Behandlung mit Acrylnitril oder anderen Vinylmonomeren, wie Acrylsäure, Methacrylsäure bzw. deren Methyl-, Äthyl-, ß-Hydroxyäthyl- oder Propylestern ;

— durch Behandlung mit Alkoholen oder bifunktionellen Alkoholen, wie Äthylenglykol, Hexandiol oder Octandiol, unter den Bedingungen der Pinner-Reaktion ;

— durch Behandlung mit Carbodiimiden, Isocyanatocarbodiimiden bzw. Polyisocyanatocarbodiimiden wie sie aus DE-A 2 504 334 und DE-A 2 504 400 bekannt sind, bzw. mit verkappten Carbodiimiden, den sogenannten Uretonimin-polyisocyanaten, ferner mit Mono- oder Biscyanaten bzw. Mono- oder Biscyanamiden ;

— durch Behandlung mit Hydroxy-alkan-phosphonsäureestern bzw. den zugrundeliegenden Säuren, insbesondere mit Hydroxymethyl-phosphonsäureestern bzw. der freien Hydroxymethyl-phosphonsäure ;

— durch Behandlung mit Chlormethylalkoxysilanen, z.B. solchen der Formeln

$$Cl-CH_2-Si(-OC_2H_5)_3,\quad Cl-CH_2-\underset{\underset{CH_3}{|}}{Si}(-OC_2H_5)_2,$$

$$Cl-CH_2-\underset{\underset{CH_3}{|}}{\overset{\overset{CH_3}{|}}{Si}}(-OC_2H_5)$$ bzw.

$$Cl-CH_2-\underset{\underset{CH_3}{|}}{\overset{\overset{CH_3}{|}}{Si}}-O-\underset{\underset{CH_3}{|}}{\overset{\overset{CH_3}{|}}{Si}}-CH_2-Cl$$ und $$Cl-CH_2-CH_2-CH_2-Si(-OC_2H_5)_3.$$

— durch Behandlung mit den verschiedensten Mono- oder Polynitrilen, bevorzugt Hydroxymethylnitril, unter den Bedingungen der Thorpe-Reaktion.

Die an der Oberfläche chemisch modifizierten erfindungsgemäß verwendbaren Produkte können pro Mol Azulminsäure bis zu 0,06 Mol, vorzugsweise 0,01 bis 0,05 Mol, an der durch Oberflächenbehandlung eingeführten Gruppe enthalten.

Die erfindungsgemäß verwendbaren Produkte können außerdem Katalysatoren und Kettenabbrecher enthalten, die bei der Durchführung der Herstellungs-Verfahren eingesetzt werden.

Die erfindungsgemäß verwendbaren, durch Umsetzung mit Aminoplastbildnern und Carbonylverbindungen bzw. deren gegebenenfalls chemisch modifizierten Azulminsäuren, deren Säureadditions-Salze, Komplex-Verbindungen, Mischprodukte mit Zusatzstoffen sowie an der Oberfläche chemisch modifizierte Produkte der vorgenannten Stoffe sind noch nicht bekannt. Sie lassen sich jedoch in einfacher Weise nach mehreren Verfahren herstellen. So erhält man die erfindungsgemäß verwendbaren Produkte z.B. dadurch, daß man.

1) gegebenenfalls Zusatzstoffe enthaltende modifizierte Azulminsäuren mit einem Gehalt von 0,5 bis 55 Gewichtsprozent an ionischen Gruppen der Formel

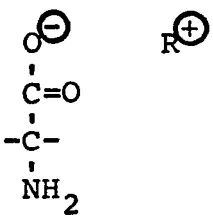

$(F_1)$

in welcher

R die oben angegebene Bedeutung hat,

und mit einem Gehalt von 0,5 bis 15 Gewichtsprozent an Gruppen der Formel

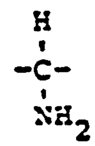

$(F_2)$

in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umsetzt,

oder daß man

2) gegebenenfalls Zusatzstoffe enthaltende Säureadditionssalze bzw. Komplex-Verbindungen von modifizierten Azulminsäuren mit einem Gehalt von 0,5 bis 55 Gewichtsprozent an ionischen Gruppen der Formel

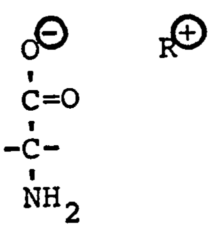

$(F_1)$

in welcher

R die oben angegebene Bedeutung hat,

und mit einem Gehalt von 0,5 bis 15 Gewichtsprozent an Gruppen der Formel

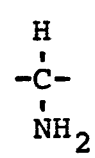

$(F_2)$

in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umsetzt,

oder daß man

3) nahezu fehlerstellenfreie Azulminsäuren in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umsetzt,

oder daß man

4) Blausäure mit Hilfe basischer Katalysatoren unter hydrolysierenden Bedingungen in wäßrigem Medium gegebenenfalls in Gegenwart von Zusatzstoffen polymerisiert und anschließend ohne vorherige Isolierung der Reaktionsprodukte gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten in wäßrigem Medium umsetzt,

oder daß man

5) Blausäure mit Hilfe basischer Katalysatoren in Gegenwart von Aminoplastbildnern unter hydrolysierenden Bedingungen in wäßrigem Medium, gegebenenfalls in Gegenwart von Zusatzstoffen polymerisiert und anschließend ohne vorherige Isolierung der Reaktionsprodukte gegebenenfalls in Gegenwart von Zusatzstoffen und gegebenenfalls in Gegenwart von Katalysatoren sowie gegebenenfalls in Gegenwart von Kettenabbrechern mit Carbonylverbindungen in wäßrigem Medium umsetzt,

oder daß man

6) gegebenenfalls Zusatzstoffe enthaltende modifizierte Azulminsäuren mit einem Gehalt von 0,5 bis 55 Gewichtsprozent an ionischen Gruppen der Formel

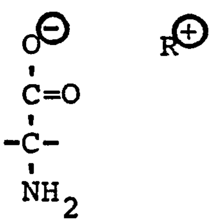

$(F_1)$

in welcher

R die oben angegebene Bedeutung hat,

und mit einem Gehalt von 0,5 bis 15 Gewichtsprozent an Gruppen der Formel

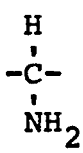

$(F_2)$

in wäßrigem Medium mit Basen umsetzt, gegebenenfalls das Kation durch Behandlung mit Metallsalzen austauscht und anschließend in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umsetzt,

oder daß man

7) gegebenenfalls Zusatzstoffe enthaltende modifizierte Azulminsäuren in wäßrigem Medium mit organischen oder anorganischen Säuren behandelt und anschließend in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umsetzt,

oder daß man

8) nahezu fehlerstellenfreie Azulminsäuren in Anwesenheit von hydrolytisch abbaubaren Naturstoffen in Gegenwart von Säure in wäßrigem Medium, gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umsetzt,

oder daß man

9) partiell oder vollständig mit Carbonylverbindungen stabilisierte, gegebenenfalls Zusatzstoffe enthaltende Azulminsäuren in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umsetzt,

oder daß man

10) thermisch vorbehandelte Blausäure-Polymerisate in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umsetzt,

oder daß man

11) an der Oberfläche chemisch modifizierte, gegebenenfalls Zusatzstoffe enthaltende Azulminsäuren in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umsetzt,

und die nach den genannten Verfahren hergestellten Produkte gegebenenfalls anschließend mit Säuren oder Basen oder anderen Nachbehandlungsreagentien modifiziert. Unter modifizierten Azulminsäuren, die bei einigen der oben angegebenen Verfahren als Ausgangstoffe dienen, sind im vorliegenden Fall solche Blausäurepolymerisate zu verstehen, die ionische Gruppen der Formel

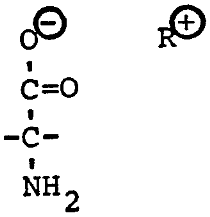

und Gruppen der Formel

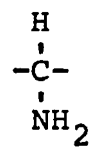

enthalten. Derartige Gruppen haben ihren Ursprung in Nitrilgruppen, die in der Azulminsäure vorhanden sind und als Haltepunkte der cyclisierenden Nitrilpolymerisation aufgefaßt werden können.

In idealisierter Darstellung kann der Übergang von einer Nitrilgruppe der Azulminsäure in eine entsprechende Carboxylgruppe formelmäßig wie folgt veranschaulicht werden:

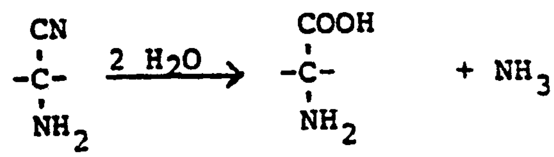

bzw.

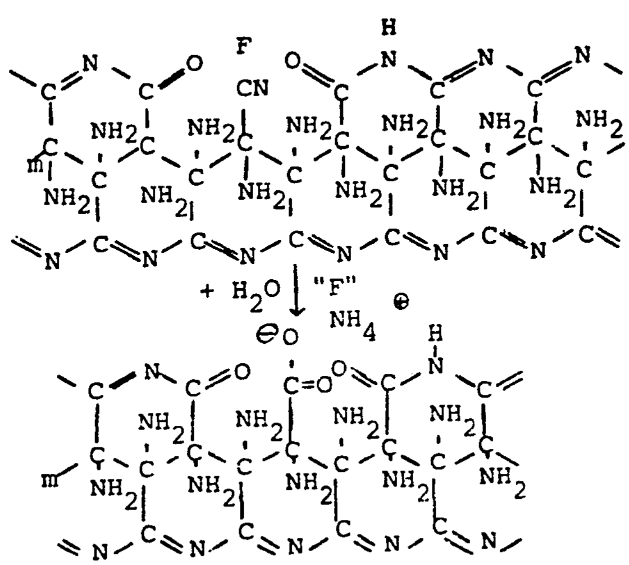

(II)

Selbstverständlich ist auch die Bildung von Amid-, Imid-, Amindin- oder Lactamgruppen aus Nitrilgruppen möglich. So läßt sich z.B. die Bildung von Amidgruppen durch das nachstehende Formelschema wiedergeben.

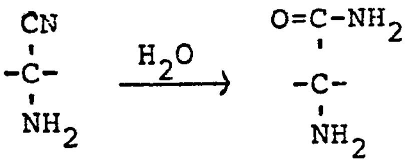


Die Erzeugung ionischer oder nicht-ionischer Gruppen der obigen Formeln erfolgt nicht nur an Nitrilgruppen, die in dem eingesetzten Polymerisat bereits vorhanden sind, sondern auch an solchen Nitrilgruppen, die durch katalytische Entcyclisierungen entstehen. Darüber hinaus sind verschiedene andere Hydrolyse-Reaktionen für die Bildung von Fehlerstellen verantwortlich. z.B. kann eine

$$H_2N-\overset{|}{\underset{|}{C}}-CN-\text{Gruppe,}$$

die im Molekularverband der Azulminsäure als α-Aminonitril aufzufassen ist, durch Cyanwasserstoff-Abspaltung und anschließende topochemische Hydrolysereaktionen gemäß nachstehendem Formelschema in eine Carbonylgruppe überführt werden:

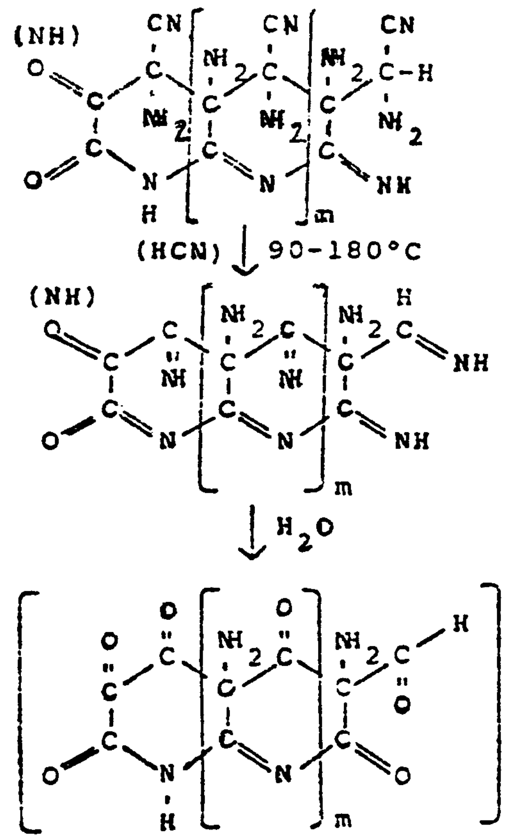


Im folgenden werden die ionischen Gruppen der Formel

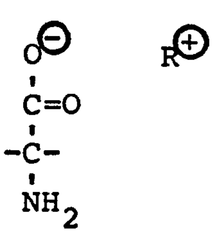

als *$F_1$-Fehlerstellen* und die Gruppen der Formel

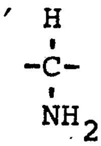

als *$F_2$-Fehlerstellen* bezeichnet.

Die $F_2$-Fehlerstellen entstehen aus den $F_1$-Fehlerstellen, in denen R für Wasserstoff oder ein anderes geeignetes Ion steht, gemäß nachstehendem Formelschema:

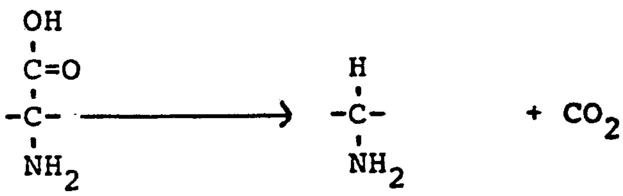

bzw. im Molekularverband der Azulminsäure:

Fehlerstellen durch Decarboxylierungsreaktion

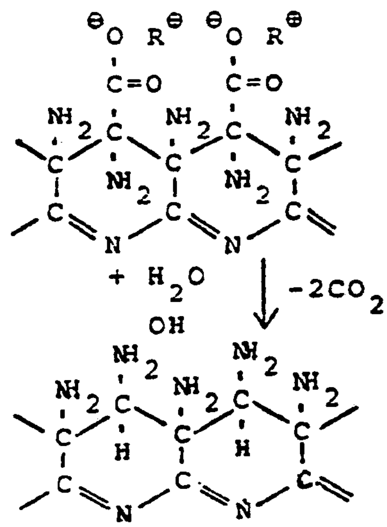


Erhöhung der $NH_2$-Gruppen-Konzentration, Aciditätsverlust, Basizitätsanstieg.

Wie aus der oben angegebenen Formel (II) zu ersehen ist, steht jede erzeugte $F_1$-Fehlerstelle in unmittelbarer Nachbarschaft zu einer α-ständigen und zu einer β-ständigen Aminogruppe. Somit bilden sich an den $F_1$-Fehlerstellen der Konstitution

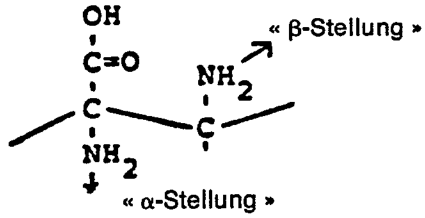


entweder intramolekulare zwitterionische Salze der Konstitution

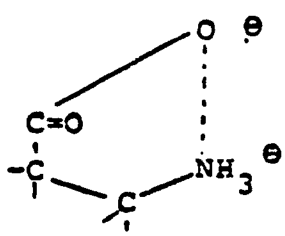 (= 5 gliedrige Ringe)

oder intermolekular vernetzte Salze zwischen mehreren Azulminsäuremolekülen der folgenden idealisierten Darstellung:

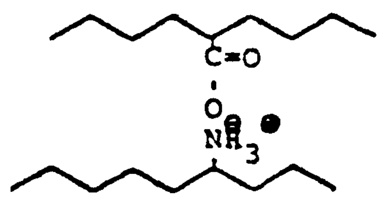

Die Bildung intramolekular Salze, d.h. 5-gliedriger Ringe, ist bevorzugt.

Da die Entstehung der $F_1$-Fehlerstellen mit der Freisetzung von Ammoniak und die Entstehung der $F_2$-Fehlerstellen mit der Freisetzung von Kohlendioxid gekoppelt ist, stellt die entbundene Menge an Ammoniak und Kohlendioxid ein quantitatives Maß für die Menge der erzeugten Fehlerstellen dar. Der Quotient aus der entbundenen Molmenge an Ammoniak und der entbundenen Molmenge an Kohlendioxid gibt Aufschluß über das Verhältnis von $F_1$- zu $F_2$-Fehlerstellen.

Der Fehlerstellengehalt der modifizierten

Azulminsäuren in Gewichtsprozent wird im folgenden jeweils in der Weise bestimmt, daß man das Äquivalentgewicht der betreffenden Fehlerstelle (= ionische oder nicht-ionische Gruppierung $F_1$ oder $F_2$) in Relation setzt zu der entsprechenden nicht in eine ionische oder nicht-ionische Gruppierung überführten Gewichtsgröße (100 g). So errechnet sich beispielsweise die Fehlerstellenkonzentration für eine $F_1$-Fehlerstelle, in der R für Wasserstoff steht, aus der jeweils entstandenen molaren Menge an Ammoniak und der Tatsache, daß die zugehörige ionische Gruppierung der Formel

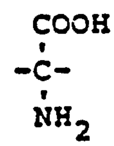

ein Äquivalentgewicht von 73 aufweist.

In analoger Weise errechnet sich der $F_2$-Fehlerstellengehalt aus der jeweils entbundenen molaren Menge an Kohlendioxid und der Tatsache, daß die betreffende Gruppierung der Formel

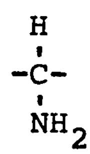

ein Äquivalentgewicht von 29 aufweist.

Gemeinsames Merkmal der Verfahren (1) bis (11) zur Herstellung der erfindungsgemäß verwendbaren Stoffe ist die Kondensation von Amino-, Amid-, Amidin- und Lactam-Gruppen, die in den eingesetzten Azulminsäuren vorhanden sind, mit Aminoplastbildnern und Carbonylverbindungen bzw. deren gegebenenfalls chemisch modifizierten Kondensationsprodukten. Verwendet man als Aminoplastbildner z.B. Harnstoff und als Carbonylkomponente z.B. Formaldehyd, so läßt sich deren Kondensation mit einer Aminogruppe einer Azulminsäure beispielsweise durch das folgende idealisierte Formelschema veranschaulichen:

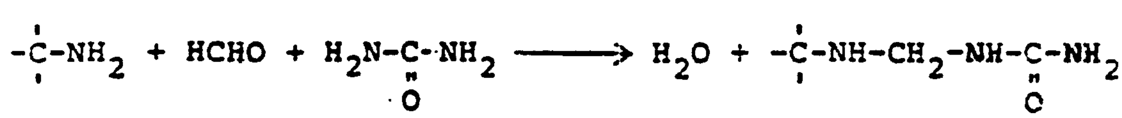

Außer der formelmäßig dargestellten Umsetzung können zahlreiche andere Reaktionen ablaufen; so z.B. solche, die zu Methylol-Verbindungen, N,N-Methylenverbindungen oder Verbindungen mit Methylenäther-Verknüpfungen (>N—$CH_2$—O—$CH_2$—N<) führen.

Nach dem Verfahren (1) werden gegebenenfalls Zusatzstoffe enthaltende modifizierte Azulminsäuren mit einem Gehalt von 0,5 bis 55 Gewichtsprozent an ionischen Gruppen der Formel

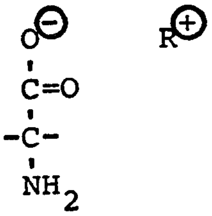

$(F_1)$

und mit einem Gehalt von 0,5 bis 15 Gewichtsprozent an Gruppen der Formel

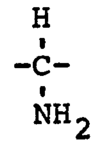

$(F_2)$

in wäßrigem Medium gegebenenfalls in Anwesenheit von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umgesetzt.

In der Formel ($F_1$) steht R vorzugsweise für diejenigen Substituenten, die bereits im Zusammenhang mit der Beschreibung der erfindungsgemäß verwendbaren Stoffe vorzugsweise für R genannt wurden.

Die bei dem Verfahren (1) als Ausgangsstoffe zu verwendenden modifizierten Azulminsäuren (= fehlerstellenhaltige Azulminsäuren) können 1 bis 95 Gewichtsprozent, vorzugsweise 5 bis 90 Gewichtsprozent an Zusatzstoffen enthalten. Als Zusatzstoffe kommen dabei organische Naturstoffe und daraus gewonnene Produkte, anorganische Naturstoffe und daraus gewonnene Produkte, synthetische organische Produkte, synthetische anorganische Produkte und/oder Mischprodukte aus organischen und anorganischen Produkten in Frage. Hierzu gehören vorzugsweise diejenigen Materialien, die bereits im Zusammenhang mit der Beschreibung der in den erfindungsgemäß verwendbaren Stoffen gegebenenfalls vorhandenen Zusatzstoffe vorzugsweise genannt wurden.

Die als Ausgangstoffe benötigten gegebenenfalls Zusatzstoffe enthaltenden modifizierten Azulminsäuren sind bis-lang noch nicht bekannt. Sie lassen sich jedoch nach verschiedenen Verfahren in einfacher Weise herstellen. So erhält man die betreffenden Produkte, die Gegenstand eines gesonderten Schutzbegehrens sind, dadurch, daß man

A) nahezu fehlerstellenfreie bekannte Azulminsäure in wäßrigem Medium,

a) gegebenenfalls in Anwesenheit von Zusatzstoffen mit organischen oder anorganischen Säuren behandelt, oder

b) gegebenenfalls in Anwesenheit von Zusatzstoffen mit Basen oder basischen Salzen behandelt, oder

c) mit Wasser im Neutralbereich behandelt, oder

d) mit pflanzlichen Aschen, katalytisch wirksamen Naturstoffen und/oder Düngemitteln behandelt, oder

e) gegebenenfalls in Anwesenheit von Oxidationsmitteln sowie gegebenenfalls in Anwesenheit von organischen Säuren mit Metallsalzen behandelt, oder

f) mit Metallsalz-Komplexen stabilisierter Azulminsäuren behandelt, oder

g) mit Oxidationsmitteln behandelt,

oder daß man

B) Blausäure mit Hilfe basischer Katalysatoren unter hydrolysierenden Bedingungen in wäßrigem Medium gegebenenfalls in Gegenwart von Zusatzstoffen polymerisiert,

und die nach den genannten Verfahren hergestellten Produkte gegebenenfalls anschließend mit Säure oder Base behandelt.

Bei der Herstellung der gegebenenfalls Zusatzstoffe enthaltenden modifizierten Azulminsäuren nach dem Verfahren (A), Varianten (a) bis (g) dienen nahezu fehlerstellenfreie Blausäurepolymerisate, sogenannte Azulminsäuren, als Ausgangsstoffe. Derartige nahezu fehlerstellenfreie Azulminsäuren sind bereits bekannt (vgl. Houben-Weyl, Band 8 (1952), Seite 261 ; DE-B 662 338 und DE-B 949 060).

Nach der Variante (a) des Verfahrens (A) werden die nahezu fehlerstellenfreien Azulminsäuren gegebenenfalls in Anwesenheit von Zusatzstoffen mit anorganischen oder organischen Säuren behandelt. Hierzu kommen als anorganische oder organische Säuren vorzugsweise alle diejenigen in Frage, die bereits im Zusammenhang mit der Beschreibung der erfindungsgemäß verwendbaren stabilisierten Azulminsäure-Säureadditionsprodukte vorzugsweise aufgezählt wurden.

Als Zusatzstoffe können organische Naturstoffe und daraus gewonnene Produkte, anorganische Naturstoffe und daraus gewonnene Produkte, synthetische organische Produkte, synthetische anorganische Produkte und/oder Mischprodukte aus organischen und anorganischen Produkten verwendet werden. Hierzu gehören vorzugsweise alle diejenigen Materialien, die bereits im Zusammenhang mit der Beschreibung der in den erfindungsgemäß verwendbaren Stoffen gegebenenfalls vorhandenen Zusatzstoffen vorzugsweise genannt wurden.

Bei der Durchführung der Variante (a) des Verfahrens (A) arbeitet man in wäßrigem Medium, vorzugsweise in Wasser. Es ist jedoch auch möglich, das Wasser partiell durch andere Verdünnungsmittel wie Schwefelwasserstoff, verflüssigtes Schwefeldioxid, verflüssigten Ammoniak oder Alkohole zu ersetzen, wobei Methanol und Äthanol speziell genannt seien.

Die Reaktionstemperaturen können im Falle der Variante (a) der Verfahrens (A) innerhalb eines größeren Bereiches variiert werden. Im allgemeinen arbeitet man zwischen 0 °C und 200 °C, vorzugsweise zwischen 20 °C und 120 °C.

Die Umsetzung nach Variante (a) des Verfahrens (A) wird im allgemeinen unter Normaldruck ausgeführt. Es ist jedoch auch möglich, unter erhöhtem Druck zu arbeiten.

Bei der Durchführung der Variante (a) des Verfahrens (A) setzt man auf 1 Mol (bezogen auf die Moleküleinheit $NC-\overset{|}{\underset{|}{C}}-NH_2$ mit dem Äquivalentgewicht 54) nahezu fehlerstellenfreier Azulminsäure eine katalytische Menge oder 1 bis 4 Mol einer anorganischen oder organischen Säure sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet.

Verwendet man bei der Durchführung der Variante (a) des Verfahrens (A) Salpetersäure zur Fehlerstellenerzeugung und hält dabei die Reaktionstemperatur relativ niedrig, vorzugsweise zwischen 20 und 30 °C, so werden Spuren abgespaltener Blausäure oxidiert, während gleichzeitig außerordentlich leicht Additionen von Salpetersäure an die Aminogruppen der modifizierten Azulminsäuren stattfinden und man in einfacher topochemischer Reaktion modifizierte Azulminsäurentypen erhält, die an ihren Aminogruppen ionische Gruppen der Konstitution

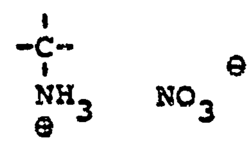
enthalten.

Auf diese Weise werden pro 100 Gramm an modifizierter Azulminsäure etwa 0,5 Mol an Salpetersäure gebunden. Je nach Verfahrensart und Einwirkungsdauer der verdünnten Salpetersäure auf die modifizierten Azulminsäuren sind etwa 30 bis 50 % der vorhandenen Aminogruppen der Salzbildung zugänglich. Spuren freier Salpetersäure können vorteilhaft durch Begasung der Produkte mit gasförmigem Ammoniak in Ammoniumnitrat umgewandelt werden, wobei die Reaktion vorteilhafterweise in fester Phase im Wirbelbett ausgeführt wird.

Verwendet man bei der Durchführung der Variante (a) des Verfahrens (a) Phosphorsäure oder phosphorige Säure zur Fehlerstellenerzeugung und hält dabei die Reaktionstemperaturen relativ niedrig, vorzugsweise zwischen 20 °C und 55 °C, so werden Decarboxylierungsreaktionen und die damit verbundene Erzeugung von $F_2$-Fehlerstellen weitgehend zurückgedrängt. Die Säuren werden gleichzeitig in heterogener Reaktion außerordentlich leicht von den Aminogruppen der modifizierten Azulminsäuren gebunden. Auf diese Weise werden von 100 Gramm modifizierter Azulminsäure innerhalb von fünf Minuten bereits etwa 0,2 Mol Phosphorsäure bzw. etwa 0,5 Mol phosphorige Säure gebunden. Die entstehenden Salze sind nahezu wasserunlöslich. In den Produkten enthaltene kleine Mengen an freier Phosphorsäure bzw. phosphorige Säure können vorteilhaft durch Behandlung der Produkte mit gasförmigem Ammoniak zu den entsprechenden Ammoniumsalzen umgesetzt werden, wobei die Reaktion vorteilhafterweise in fester Phase im Wirbelbett ausgeführt wird.

In einer besonderen Ausführungsform der Variante (a) des Verfahrens (A) setzt man die Azulminsäure in Gegenwart von hydrolytisch abbaubaren Naturstoffen, wie z.B. Cellulosen, Hemicellulosen, Zukkern, Lignin, polymeren Chinonen, Holzpulver, pflanzlichem Material, Polypeptiden wie Gelatine und Wolle, ferner Hefeproteinen, Algenmassen und Torfmassen, mit 0,2 bis 80 %iger Phosphorsäure bzw. phosphoriger Säure um. Hierbei erfolgt die Fehlerstellenerzeugung unter gleichzeitigem hydrolytischen Abbau der jeweiligen eingesetzten Naturstoffe. Im Falle der Verwendung von Polypeptiden werden diese in Aminosäuregemische gespalten. Die Azulminsäure bindet infolge ihrer zahlreichen Aminogruppen etwa 0,3 bis 0,4 Mol an Phosphorsäure bzw. phosphoriger Säure, während die phosphorsäuren Salze der Aminosäuren oder die der Oligopolypeptide, bzw. die anderen niedermolekularen Spaltprodukte der eingesetzten Naturstoffe, auch wenn sie wasserlöslich sind, oft in großer Menge von der Azulminsäure-Matrix fixiert werden. Überschüssige Säure, z.B. Phosphorsäure, kann durch Zugabe von Calciumhydroxid als Calciumphosphat auf der Azulminsäure-Matrix gefällt werden. Sind hierbei hydrolysierte Zucker und Oligosaccharide vorhanden, so werden diese in Form ihrer meist schwer löslichen Calcium-Komplexe auf der Azulminsäure aufgezogen. Die nach dieser Variante des Verfahrens (A) erhaltenen Verfahrensprodukte können über längere Zeit gelagert werden ohne daß eine unangenehme Geruchsbildung eintritt, wie es ansonsten der Fall ist, wenn Naturstoffe wie Oligopeptide, Peptid-Zuckergemische usw. durch biologische Prozesse abgebaut werden.

Eine weitere besondere Ausführungsform der Variante (a) des Verfahrens (A) besteht darin, daß man zur Erzeugung der Fehlerstellen 1 bis 4 Mol an 1 molarer Phosphorsäure-Lösung einsetzt und die überschüssige Phosphorsäure anschließend durch Zugabe von Calciumchlorid als Calciumphosphat, durch Zugabe von Magnesiumchlorid als Magnesiumphosphat oder durch Zugabe von Ammoniak und Magnesiumsalzen als Ammonium-magnesium-phosphat fällt. Hierbei können gleichzeitig Zusatzstoffe der verschiedensten Art mitverwendet werden. Besonders bevorzugte Zusatzstoffe sind in diesem Fall pflanzliche Aschen, unlösliche Polychinone, Additions- bzw. Kondensationsprodukte des Benzochinons mit Aminen, insbesondere mit Ammoniak, ferner Lignin, Ligninsulfonsäuren, Huminsäuren, diverse Flugaschen, Bauxit, Aluminiumoxid, Cobaltmolybdat, Silicium dioxid, Aktivkohle, Zirkondioxid, Nickeloxid, Palladiumoxid und Bariumoxid. Weiterhin kommen als bevorzugte Zusatzstoffe auch Zucker, wie Rohrzucker und andere keine freien Aldehydgruppen aufweisenden Zucker, oder auch aus Formaldehyd hergestellte Formose-Zuckergemische in Frage. Diese verschiedensten Zuckerarten können in Kanälen und Foren der starren Azulminsäurekörper fixiert werden. Darüber hinaus können die verschiedenen Zucker auch in Form ihrer meist schwer löslichen Calcium-Komplexe auf den Azulminsäuren aufziehen.

Nach der Variante (b) des Verfahrens (A) werden die nahezu fehlerstellenfreien Azulminsäuren gegebenenfalls in Anwesenheit von Zusatzstoffen mit Basen oder basischen Salzen behandelt. Hierbei kommen als Basen sowohl organische als auch anorganische Basen in Frage. Vorzugsweise verwendbare organische Basen sind Ammoniak, Alkylamine mit 1 bis 6 Kohlenstoffatomen, Dialkylamine mit 1 bis 6 Kohlenstoffatomen pro Alkylgruppe, Trialkylamine mit 1 bis 6 Kohlenstoffatomen pro Alkylgruppe, Hydroxyalkylamine mit 1 bis 6 Kohlenstoffatomen, Di-(hydroxyalkyl)-amine mit 1 bis 6 Kohlenstoffatomen pro Hydroxyalkylgruppe, Tri(hydroxyalkyl)-amin mit 1 bis 6 Kohlenstoffatomen pro Hydroxyalkylgruppe, Alkyl-hydroxyalkyl-amine mit 1 bis 6 Kohlenstoffatomen in der Alkyl- bzw. in der Hydroxyalkyl-gruppe, Cycloalkylamine mit 3 bis 8 Kohlenstoffatomen, Alkylendiamine mit 2 bis 6 Kohlenstoffatomen, Guanidin, Melamin, Dicyandiamid, gesättigte oder ungesättigte heterocyclische Stickstoffbasen mit 5 bis 7 Ringgliedern und 1 bis 3 Stickstoffatomen im heterocyclischen Ring, sowie diejenigen Basen, die sich von den durch Quaternisierung, z.B. Permethylierung, der vorgenannten Stickstoffverbindungen entstehenden Verbindungen ableiten, und weiterhin diejenigen Basen, die sich von Trialkylsulfonium-Verbindungen ableiten. Besonders bevorzugte Stickstoffbasen sind in diesem Zusammenhang Ammoniak, Methylamin, Methyläthanolamin, Dimethylamin, Trimethylamin, Äthylamin, Diäthylamin, Triäthylamin, tert.-Butylamin, Äthanolamin, Diäthanolamin, Triäthanolamin, Cyclopropylamin, Cyclopentylamin, Cyclohexylamin, Äthylendiamin, Pyrrolidin, Piperidin, Morpholin, Imidazol, Pyrazol, 1,2,4-Triazol, 1,2,3-Triazol, 2-Äthyl-imidazol, Aminotriazol. Eine besonders bevorzugte Trialkylsulfonium-Verbindung ist das Triäthylsulfoniumhydroxid.

Vorzugsweise verwendbare anorganische Basen sind Alkali- und Erdalkalimetall-hydroxide. Speziell genannt seien Lithiumhydroxid, Natriumhydroxid, Kaliumhydroxid, Magnesiumhydroxid, Calciumhydroxid, Strontiumhydroxid und Bariumhydroxid.

Als basische Salze kommen bei der Durchführung der Variante (b) des Verfahrens (A) vorzugsweise Alkalisulfide, wie Natriumsulfid, Natriumhydrogensulfid und Kaliumhydrogensulfid, ferner Natriumthiosulfat, Ammoniumthiosulfat, Ammoniumpolysulfide, Calciumhydrogensulfid, Calciumthiosulfat und Calciumcyanamid, weiterhin Kaliumcarbonat, Kaliumhydrogencarbonat, Kaliumcyanat und Wasserglas (Natrium- oder Kaliumwasserglas) in Betracht. Besonders geeignet zur Fehlerstellenerzeugung nach dieser Methode sind auch Gemische von Ammoniak und Natriumthiosulfat, Ammoniumthiosulfat, Natriumhydrogensulfid, Natriumsulfid und/oder Ammoniumpolysulfiden.

Als Zusatzstoffe können bei der Durchführung der Variante (b) des Verfahrens (A) organischen Naturstoffe und daraus gewonnene Produkte, anorganische Naturstoffe und daraus gewonnene Produkte, synthetische organische Produkte, synthetische anorganische Produkte und/oder Mischprodukte aus organischen und anorganischen Produkten verwendet werden. Hierzu gehören vorzugsweise alle diejenigen Materialien, die bereits im Zusammenhang mit der Beschreibung der in den erfindungsgemäß verwendbaren Stoffen gegebenenfalls vorhandenen Zusatzstoffe vorzugsweise genannt wurden.

Bei der Durchführung der Variante (b) des Verfahrens (A) arbeitet man in wäßrigem Medium oder in wäßrig-alkoholischem Medium. Vorzugsweise kommt Wasser oder ein Gemisch aus Wasser und Alkohol, wie Methanol oder Äthanol, als Reaktionsmedium in Betracht. Es ist jedoch auch möglich, Wasser partiell durch Schwefelwasserstoff, Schwefeldioxid oder Ammoniak zu ersetzen. Arbeitet man in Anwesenheit von Schwefelwasserstoff oder in Anwesenheit von Reagenzien, die unter den Reaktionsbedingungen Schwefelwasserstoff abgeben, und hält die Reaktionstemperatur zwischen 70 °C und 100 °C, so werden geringe Mengen an abgespaltener Blausäure bei gleichzeitiger Fehlerstellenerzeugung in Kohlenoxysulfid und Ammoniak überführt.

Die Reaktionstemperaturen können im Falle der Variante (b) des Verfahrens (A) innerhalb eines größeren Bereiches variiert werden. Im allgemeinen arbeitet man bei Temperaturen zwischen 0 °C und 200 °C, vorzugsweise zwischen 20 °C und 150 °C.

Die Umsetzung nach Variante (b) des Verfahrens (A) wird im allgemeinen unter Normaldruck ausgeführt. Es ist jedoch auch möglich, unter erhöhtem Druck zu arbeiten. Letzteres empfiehlt sich insbesondere dann, wenn gasförmiges Ammoniak zur Fehlerstellenerzeugung verwendet wird.

Bei der Durchführung der Variante (b) des Verfahrens (A) setzt man auf 1 Mol (bezogen auf die Moleküleinheit $NC{-}\underset{|}{C}{-}NH_2$ mit dem Äquivalentgewicht 54) nahezu fehlerstellenfreier Azulminsäure eine

katalytische Menge oder 1 bis 4 Mol, vorzugsweise 1 bis 2 Mol an Base bzw. basischem Salz sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet. Vorteilhafterweise kann auch die im Endprodukt noch enthaltene Base durch Zugabe einer entsprechenden Menge an Säure, wie z.B. Phosphorsäure, neutralisiert werden, so daß die entstehenden Produkte dann auch die jeweiligen Salze enthalten.

Verwendet man bei dieser Neutralisation einen Überschuß an Säure, so entstehen Säureadditions-Salze der jeweiligen modifizierten Azulminsäuren.

Verwendet man bei der Durchführung der Variante (b) des Verfahrens (A) starke Basen zur Fehlerstellenerzeugung, so lassen sich nach längeren Reaktionszeiten Azulminsäuren mit besonders hohen Fehlerstellengehalten herstellen. Die entstehenden Produkte besitzen Polyelektrolytcharakter. Der Ablauf einer derartigen Umsetzung läßt sich für den Fall, daß Kaliumhydroxid als Base eingesetzt wird, idealisiert durch das folgende Formelschema veranschaulichen.

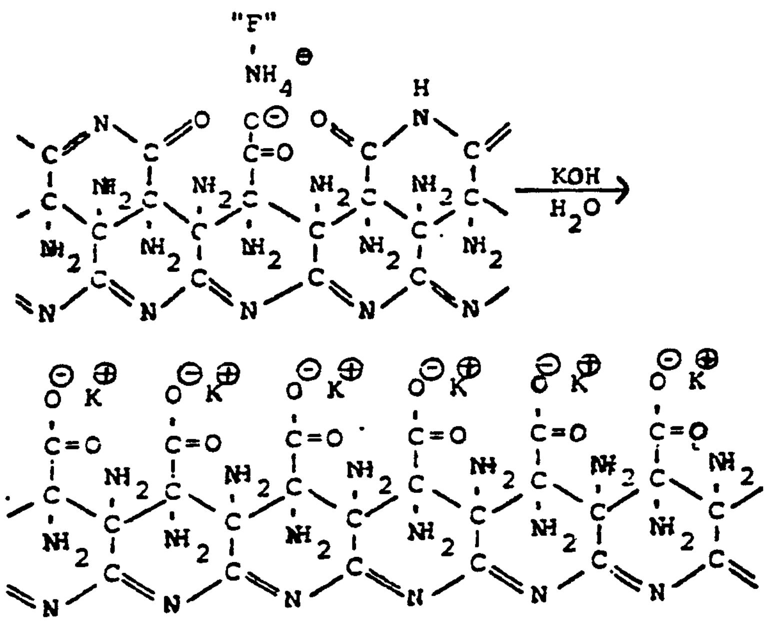


Verwendet man bei dieser Variante (b) des Verfahrens (A) einen Überschuß an konzentrierter (25 %iger) Ammoniak-Lösung und arbeitet man bei Raumtemperatur, so erhält man nach etwa 6 bis 20-stündiger Reaktionsdauer stark fehlerstellenhaltige modifizierte Azulminsäuren, deren Carboxylgruppen teilweise in Form von Ammoniumcarboxylat-Gruppen vorliegen. Es ist jedoch auch möglich, modifizierte Azulminsäuren, in denen freie Carboxylgruppen vorhanden sind, durch Begasung mit Ammoniak im Wirbelbett in die entsprechenden Ammoniaksalz enthaltenden Produkte zu überführen.

In einer besonderen Ausführungsform der Variante (b) des Verfahrens (A) setzt man die Azulminsäure in wäßrigalkoholischem Medium bei Temperaturen zwischen 120 °C und 140 °C mit gasförmigem Ammoniak unter Druck um. Hierbei entstehen modifizierte Azulminsäuren, die einen hohen Gehalt an Ammoniumcarboxylat-gruppen besitzen. Die in diesen Produkten enthaltenen freien Aminogruppen sind in der Lage, zusätzlich noch Säuren, wie z.B. Phosphorsäure, zu binden, so daß die Endprodukte nebeneinander Ammoniumionen und Säurereste enthalten.

In einer weiteren besonderen Ausführungsform der Variante (b) des Verfahrens (A) setzt man die Azulminsäure in topochemischer Reaktion mit katalytischen oder auch mit größeren Mengen Wasserglas, — etwa 1 bis 4 Mol Wasserglas auf 100 g Azulminsäure —, um. Hierbei entstehen mit Kalium- bzw. Natriumionen beladene modifizierte Azulminsäuren, deren verseifbare Nitrilgruppen als latente Säuren wirken und Kieselsäuren ausfällen. Letztere ziehen in feiner Verteilung auf den Reaktionsprodukten auf. Eventuell vorhandenes überschüssiges Natrium- bzw. Kaliumsilikat kann durch einfaches Begasen der jeweiligen Dispersionen mit Kohlendioxid gefällt werden, oder in besonders vorteilhafter Weise durch Zugabe von Phosphorsäure oder Calciumchlorid in Mischung mit Kalium- bzw. Natriumphosphaten oder Calciumsilikaten ausgefällt werden.

Nach der Variante (c) des Verfahrens (A) werden die nahezu fehlerstellenfreien Azulminsäuren A bis 60 Stunden mit destilliertem Wasser im Neutralbereich, vorzugsweise bei pH-Werten zwischen 6 und 6,5, behandelt. Die Reaktionstemperaturen können hierbei innerhalb eines größeren Bereiches variiert werden. Im allgemeinen arbeitet man bei Temperaturen zwischen 60 °C und 150 °C, vorzugsweise zwischen 80 °C und 120 °C. Die Umsetzung wird im allgemeinen unter Normaldruck ausgeführt. Es ist

jedoch auch möglich, unter erhöhtem Druck zu arbeiten. Die Isolierung der Reaktionsprodukte erfolgt auch bei dieser Variante des Verfahrens (A) nach üblichen Methoden. Im allgemeinen verfährt man in der Weise, daß man das Reaktionsgemisch nach beendeter Umsetzung filtriert und das erhaltene Festprodukt trocknet.

Nach der Variante (d) des Verfahrens (A) werden die nahezu fehlerstellenfreien Azulminsäuren mit pflanzlichen Asche, katalytisch wirksamen Naturstoffen und/oder Düngemitteln behandelt.

Als pflanzliche Aschen kommen hierbei die Verbrennungsprodukte von verschiedensten durch Photosynthese gebildeten Stoffen in Betracht. Vorzugsweise genannt seien die Aschen von Tannen, Ginster, serbischen Fichten, Eichenstroh, Birken, Buchen, Weiden, Tabakblättern, Tabakstengeln, ferner von Getreide, wie Roggen oder Gerste, weiterhin von Pilzen, z.B. Steinpilzen, Äpfeln, Möhrenwurzeln, Kartoffelknollen und Weißkrautblättern. Besonders vorteilhaft ist die Verwendung von kaliumreichen Aschesorten. Unter Aschen sind hierbei auch Gemische von verschiedenen pflanzlichen Aschen zu verstehen.

Als katalytisch wirksame Naturstoffe kommen vorzugsweise biologisch aktive Gartenerde sowie basische oder saure Böden der verschiedensten Art in Frage.

Als Düngemittel können bei der Fehlerstellenerzeugung nach der Variante (d) des Verfahrens (A) alle handelsüblichen Düngemittel verwendet werden. Vorzugsweise genannt seien mit Pflanzennährstoffen beladene Torfsorten, Superphosphat, Thomasschlacke, Rhenaniaphosphat, Phosphorit, Kalkstickstoff, Kalkammonsalpeter, Leunasalpeter, Kaliumphosphate, Kaliumnitrat und Ammoniumnitrat.

Bei der Durchführung der Variante (d) des Verfahrens (A) arbeitet man in wäßrigem Medium, vorzugsweise in Wasser. Es ist jedoch auch möglich, das Wasser partiell durch andere Verdünnungsmittel, wie Schwefelwasserstoff oder Alkohole zu ersetzen, wobei Methanol und Äthanol speziell genannt seien.

Die Reaktionstemperaturen können im Falle der Variante (d) des Verfahrens (A) innerhalb eines größeren Bereiches variiert werden. Im allgemeinen arbeitet man zwischen 50 °C und 150 °C, vorzugsweise zwischen 80 °C und 120 °C.

Die Umsetzungen nach Variante (d) des Verfahrens (A) werden im allgemeinen unter Normaldruck ausgeführt. Es ist jedoch auch möglich, unter erhöhtem Druck zu arbeiten.

Bei der Durchführung der Variante (d) des Verfahrens (A) setzt man die Azulminsäure mit katalytischen oder auch mit größeren Mengen an pflanzlichen Aschen, katalytisch wirksamen Naturstoffen und/oder Düngemitteln um. Verwendet man die pflanzlichen Aschen, katalytisch wirksamen Naturstoffe und/oder Düngemittel in größerer Menge, so dienen diese Stoffe nicht nur zu Fehlerstellenerzeugung, sondern sie sind in den entstehenden Produkten gleichzeitig auch als Zusatzstoffe enthalten. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet.

Nach der Variante (e) des Verfahrens (A) werden die nahezu fehlerstellenfreien Azulminsäuren gegebenenfalls in Anwesenheit von Oxidationsmitteln sowie gegebenenfalls in Anwesenheit von organischen Säuren mit Metallverbindungen behandelt.

Als Metallverbindungen kommen hierbei vorzugsweise Salze von Metallen der II. bis V. Hauptgruppe bzw. der I. bis VIII. Nebengruppe in Betracht. Beispielhaft genannt seien Calciumchlorid, -acetat und -nitrat, Strontium-nitrat, Bariumchlorid und -acetat, Aluminiumacetat und -formiat, Thalliumsulfat und -nitrat, Siliziumtetrachlorid, Natrium- bzw. Kaliumsilikat, Zinn-II-chlorid, Wismut-III-nitrat, Kupfersulfat, -nitrat und -acetat, Silbernitrat, Tetrachlorogoldsäure, Zinkchlorid und -acetat, Cadmiumchlorid, Titantetrachlorid und -tetrabutylat, Zirkonsulfat, Chrom-III-chlorid, Mangan-II-sulfat und -acetat, Eisen-II-sulfat, -II-acetat und -III-chlorid, Cobaltchlorid, Nickelchlorid, Hexachloroplatinsäure und Palladium-II-chlorid. Weiterhin bevorzugt verwendbare Metallverbindungen sind die Säuren des Vanadins, Molybdäns und des Wolframs, sowie deren Heteropolysäuren.

Als Oxidationsmittel, die bei der Durchführung der Variante (e) des Verfahrens (A) anwesend sein können, kommen alle üblichen sauerstoffabgebenden Mittel in Frage. Vorzugsweise verwendbar sind Luft und Salpetersäure, unterchlorige Säure, Perchlorsäure, Calciumhypochlorit, Wasserstoffperoxid.

Als organische Säuren, die bei der Durchführung der Variante (e) des Verfahrens (A) anwesend sein können, kommen vorzugsweise gesättigte und ungesättigte gegebenenfalls substituierte Carbonsäuren in Betracht. Speziell genannt seien Ameisensäuren, Essigsäure, Propionsäure, 2-Äthylcapronsäure, Acrylsäure, Methacrylsäure, Ölsäure, Ricinolsäure, Chloressigsäure, Dichloressigsäure, Trichloressigsäure und Hydroxyessigsäure.

Bei der Durchführung der Variante (e) des Verfahrens (A) arbeitet man im allgemeinen in wäßrigem Medium, vorzugsweise in Wasser. Es ist jedoch auch möglich, das Wasser partiell durch andere Verdünnungsmittel, wie Säuren oder organische Kohlenwasserstoffe zu ersetzen, wobei Ameisensäure und Xylol speziell genannt seien.

Die Reaktionstemperaturen können im Falle der Variante (e) des Verfahrens (A) innerhalb eines größeren Bereiches variiert werden. Im allgemeinen arbeitet man zwischen 0 °C und 150 °C, vorzugsweise zwischen 20 °C und 120 °C.

Die Umsetzung nach Variante (e) des Verfahrens (A) wird im allgemeinen unter Normaldruck ausgeführt. Es ist jedoch auch möglich, unter erhöhtem Druck zu arbeiten.

Bei der Durchführung der Variante (e) des Verfahrens (A) setzt man auf 1 Mol (bezogen auf die Moleküleinheit $NC-C-NH_2$ mit dem Äquivalentgewicht 54) Azulminsäure eine katalytische Menge oder auch eine größere Menge, — etwa 1 bis 2 Mol —, an Metallverbindung sowie gegebenenfalls eine katalytische oder auch größere Menge an Oxydationsmittel und gegebenenfalls eine katalytische oder auch größere Menge an organischer Säure ein. Die Aufarbeitung erfolgt nach üblichen Methoden. Im allgemeinen verfährt man in der Weise, daß man das Reaktionsgemisch nach beendeter Umsetzung filtriert und das dabei erhaltenen Festprodukt gegebenenfalls wäscht und trocknet.

In den anfallenden Produkten eventuell vorhandene überschüssige Metallverbindungen lassen sich je nach der Metallverbindung durch Zugabe von Basen, wie Ammoniak, Natriumhydroxid oder Kaliumhydroxid, oder durch Zugabe von Säuren, wie Phosphorsäure, in Form von fein verteilten oft schwer löslichen Niederschlägen fällen.

Nach der Variante (f) des Verfahrens (A) werden die nahezu fehlerstellenfreien Azulminsäuren mit Metallsalz-Komplexen von mit Carbonylverbindungen stabilisierten Azulminsäuren behandelt.

Die Herstellung der als Ausgangsstoffe benötigten Metallsalz-Komplexe von mit Carbonylverbindungen stabilisierten Azulminsäuren wird im Zusammenhang mit der Beschreibung des Verfahrens (9) erläutert (vgl. Seiten 114 und 115).

Vorzugsweise verwendbare Metallsalz-Komplexe sind hierbei solche, die sich von denjenigen Metallverbindungen ableiten, die bereits im Zusammenhang mit der Variante (e) des Verfahrens (A) vorzugsweise genannt wurden.

Bei der Durchführung der Variante (f) des Verfahrens (A) arbeitet man in wäßrigem Medium, vorzugsweise in Wasser. Es ist jedoch auch möglich, das Wasser partiell durch andere Verdünnungsmittel, wie Alkohole, zu ersetzen.

Die Reaktionstemperaturen können im Falle der Variante (f) des Verfahrens (A) innerhalb eines größeren Bereiches variiert werden. Im allgemeinen arbeitet man zwischen 0 °C und 150 °C, vorzugsweise zwischen 20 °C und 120 °C.

Die Umsetzung nach Variante (f) des Verfahrens (A) wird im allgemeinen unter Normaldruck ausgeführt. Es ist jedoch auch möglich, unter erhöhtem Druck zu arbeiten.

Bei der Durchführung der Variante (f) des Verfahrens (A) setzt man auf 1 Mol (bezogen auf die Moleküleinheit $NC-C-NH_2$ mit dem Äquivalentgewicht 54) nahezu fehlerstellenfreier Azulminsäure vorzugsweise 0,5 bis 1 Mol an Metallsalz-Komplex stabilisierter Azulminsäure ein. Die Aufarbeitung erfolgt nach üblichen Methoden. Im allgemeinen verfährt man in der Weise, daß man das Reaktionsgemisch nach beendeter Umsetzung filtriert und das so erhaltene Festprodukt gegebenenfalls wäscht und trocknet.

In den nach der Variante (f) des Verfahrens (A) herstellbaren Produkten eventuell vorhandene überschüssige Metallverbindungen lassen sich je nach Metallverbindung durch Zugabe von Basen, wie Ammoniak, Natriumhydroxid oder Kaliumhydroxid, oder durch Zugabe von Säuren, wie Phosphorsäure, in Form von fein verteilten, oft schwer löslichen Niederschlägen fällen.

Nach der Variante (g) des Verfahrens (A) werden die nahezu fehlerstellenfreien Azulminsäuren mit Oxydationsmitteln behandelt. Hierbei kommen als Oxydationsmittel alle üblichen oxidierend wirkenden Reagenzien in Frage. Vorzugsweise verwendbar sind Luft, Sauerstoff, Kaliumpermanganat, Wasserstoffperoxid, Chromsäure und Chlorkalk.

Bei der Durchführung der Variante (g) des Verfahrens (A) arbeitet man in wäßrigem Medium, vorzugsweise in Wasser. Es ist jedoch auch möglich, das Wasser partiell durch andere Verdünnungsmittel wie organische Carbonsäuren zu ersetzen, wobei Ameisensäure und Essigsäure speziell genannt seien.

Die Reaktionstemperaturen können im Falle der Variante (g) des Verfahrens (A) innerhalb eines größeren Bereiches variiert werden. Im allgemeinen arbeitet man zwischen 0 °C und 150 °C, vorzugsweise zwischen 20 °C und 120 °C.

Die Umsetzung nach Variante (g) des Verfahrens (A) wird im allgemeinen unter Normaldruck durchgeführt. Es ist jedoch auch möglich, unter erhöhtem Druck zu arbeiten.

Bei der Durchführung der Variante (g) des Verfahrens (A) setzt man auf 1 Mol (bezogen auf die Moleküleinheit $NC-C-NH_2$ mit dem Äquivalentgewicht 54) nahezu fehlerstellenfreier Azulminsäure eine katalytische Menge oder auch eine größere, gegebenenfalls äquimolare Menge an Oxydationsmittel ein. Die Aufarbeitung erfolgt nach üblichen Methoden. Im Allgemeinen verfährt man in der Weise, daß man das Reaktionsgemisch nach beendeter Umsetzung filtriert und das erhaltene Festprodukt gegebenenfalls wäscht und trocknet.

Nach dem Verfahren (B) wird monomere wäßrige Blausäure gegebenenfalls in Anwesenheit von Zusatzstoffen mit Hilfe basischer Katalysatoren unter hydrolysierenden Bedingungen polymerisiert. Man geht hierbei von verdünnten wäßrigen Blausäure-Lösungen aus. Im allgemeinen verwendet man Lösungen, deren Blausäure-Konzentration zwischen 10 und 30 %, vorzugsweise zwischen 15 und 25 % liegt.

Als basische Katalysatoren kommen bei dem Verfahren (B) organische und anorganische Basen sowie basische Salze der verschiedensten Art in Betracht. Vorzugsweise verwendbar sind Alkalicyanide und Alkalicyanate, wie Natriumcyanid, Kaliumcyanid, Natriumcyanat und Kaliumcyanat, ferner Amine und Ammoniak. Vorteilhafterweise können auch Gemische verschiedenster Basen bzw. basischer Salze

eingesetzt werden; beispielsweise genannt sei ein Gemisch aus Natriumcyanat und wäßriger Ammoniak-Lösung.

Als Zusatzstoffe können bei der Durchführung des Verfahrens (B) organische Naturstoffe und daraus gewonnene Produkte, anorganische Naturstoffe und daraus gewonnene Produkte, synthetische organische Produkte, synthetische anorganische Produkte und/oder Mischprodukte aus organischen und anorganischen Produkten verwendet werden. Hierzu gehören vorzugsweise alle diejenigen Materialien, die bereits im Zusammenhang mit der Beschreibung der in den erfindungsgemäß verwendbaren Stoffen gegebenenfalls vorhandenen Zusatzstoffe vorzugsweise genannt wurden.

Bei der Durchführung des Verfahrens (B) arbeitet man in wäßrigem Medium, vorzugsweise in Wasser. Es ist jedoch auch möglich, das Wasser partiell durch andere Verdünnungsmittel, wie Schwefelwasserstoff oder Alkohole zu ersetzen, wobei Methanol und Äthanol speziell genannt seien.

Die Reaktionstemperaturen können im Falle des Verfahrens (B) innerhalb eines bestimmten Bereiches variiert werden, wobei die Temperaturführung jedoch der jeweiligen Reaktionsphase angepaßt sein muß. Im allgemeinen arbeitet man so, daß man zunächst 1 bis 4 Stunden bei Temperaturen zwischen 30 °C und 70 °C, vorzugsweise zwischen 40 °C und 60 °C polymerisiert, so daß ein etwa 60 %iger Umsatz der monomeren Blausäure erreicht wird. Danach wird weitere 4 bis 10 Stunden bei Temperaturen zwischen 70 °C und 95 °C, vorzugsweise zwischen 80 °C und 90 °C polymerisiert, wodurch ein Umsatz von etwa 90 bis 95 % erzielt wird. Anschließend kann man zur Vervollständigung der Umsetzung sowie zur Entfernung von noch vorhandener Blausäure und gegebenenfalls vorhandenen flüchtigen Aminen oder Ammoniak mehrere Stunden auf Temperaturen um etwa 100 °C erhitzen.

Die Umsetzung nach dem Verfahren (B) wird im allgemeinen unter Normaldruck ausgeführt. Es ist jedoch auch möglich, unter erhöhtem Druck bei Temperaturen zwischen 120 °C und 150 °C zu arbeiten. Hierbei lassen sich in gezielter Weise relativ große Mengen an Fehlerstellen in den Verfahrensprodukten erzeugen.

Bei der Durchführung des Verfahrens (B) setzt man den basischen Katalysator in einer solchen Menge ein, daß sein Anteil 1 bis 15 %, vorzugsweise 2 bis 10 % der eingesetzten monomeren Blausäure beträgt.

Die Zusatzstoffe werden dem Reaktionsgemisch gegebenenfalls in einer solchen Menge zugesetzt, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden. Im allgemeinen verfährt man in der Weise, daß man nach der Entfernung von überschüssiger Blausäure und gegebenenfalls vorhandener flüchtiger Amine bzw. Ammoniak das Reaktionsgemisch filtriert und das dabei erhaltene Festprodukt gegebenenfalls wäscht und trocknet.

Bei dem Verfahren (1) werden als Ausgangsverbindungen weiterhin Aminoplastbildner eingesetzt. Unter Aminoplastbildnern sind hierbei alle diejenigen Stickstoffverbindungen zu verstehen, die in der Lage sind, mit reaktionsfähigen Carbonylverbindungen N-Oligo- und N-Polykondensationsprodukte zu bilden. Hierzu gehören vorzugsweise Stickstoff-Verbindungen, wie Harnstoffe, z.B. der Harnstoff selbst, Acetylenharnstoff, Dimethylacetylenharnstoff und N-Methylharnstoff, ferner Thioharnstoffe, wie der unsubstituierte Thioharnstoff, weiterhin Diharnstoffe, wie Hexamethylendiharnstoff, Tetramethylendiharnstoff und Ethylendiharnstoff, außerdem Polyharnstoffe wie sie durch Umsetzung von aliphatischen, cycloaliphatischen bzw. araliphatischen Di- oder Triisocyanaten oder durch Biuret-polyisocyanate mit Ammoniak oder primären Aminen erhalten werden, darüber hinaus Polycarbonsäureamide, wie Oxalsäurediamid, Bernsteinsäurediamid und Adipinsäurediamid, ferner Mono-, Di- und Polyurethane, wie beispielsweise die Umsetzungsprodukte von aliphatischen, cycloaliphatischen, araliphatischen und aromatischen Mono- oder Bis-chlorameisensäureestern mit Ammoniak oder primären Aminen, außerdem Biurete, Melamine, wie das Melamin selbst, Amidine, wie Dicyandiamidin, Guanidine, wie Aminoguanidin, weiterhin Guanazole, Guanamine, Cyanamid, Dicyandiamid, primäre Monoamine, sekundäre Monoamine, Arylamine, Ammoniak, Diamine, Triamine, Hydrazine und Carbonsäurehydrazide, wie Hydrazodicarbonamid, Carbacinsäureester und Hydrazodicarbonsäureester und außerdem ähnliche zur Aminoplastbildung befähigte Stickstoffverbindungen, vorzugsweise die den vorgenannten Stickstoffverbindungen entsprechenden N-Alkylolgruppen, vorzugsweise N-Methylolgruppen aufweisenden Derivate und die entsprechenden $C_1$-$C_4$ alkyläther dieser N-Alkylol-Derivate.

Ferner kommen vorzugsweise auch höhermolekulare $\alpha,\omega$-Diharnstoffe in Betracht, deren N-Methylol-Derivate und N-Methylolalkyläther, ferner $\alpha$-$\omega$-Bis-alkoxymethylurethane, welche zwischen den $\alpha,\omega$-ständigen funktionellen Gruppen Polyäther-, Polythioäther-, Polyacetal-, Polyester-, Polyesteramid- oder Polycarbonatreste vom Durchschnittsmolekulargewicht 400 bis 10 000 und gegebenenfalls zusätzliche Urethan- oder substituierte Harnstoffgruppen aufweisen. Besonders bevorzugt sind hierbei als höhermolekulare zur Aminoplastbildung befähigte Stickstoffverbindungen wasserlösliche oder in Wasser dispergierbare Verbindungen, z.B. Verbindungen, welche zwischen den $\alpha,\omega$-ständigen funktionellen Urethan- oder Harnstoffgruppen Polyäthylenoxidreste oder Reste von Mischpolymerisaten des Äthylenoxids mit Propylenoxid bzw. Tetrahydrofuran oder von wasserlöslichen Polyacetalen, hergestellt aus Di-, Tri- oder Tetraethylenglykol und Formaldehyd, aufweisen.

Die als Ausgangsverbindungen benötigten Aminoplastbildner sind bekannt oder lassen sich nach im Prinzip bekannten Methoden herstellen (vgl. Houben-Weyl « Methoden der organischen Chemie », Band XIV, Teil 2 (1963), Seiten 319-402, Georg Thieme-Verlag, Stuttgart).

Bei dem Verfahren (1) werden als Ausgangsverbindungen weiterhin Carbonylverbindungen eingesetzt. Als solche kommen hierbei alle Verbindungen mit reaktiven Carbonylgruppen in Betracht. Hierzu gehören vorzugsweise Aldehyde, Ketone und Ketoester.

Als Aldehyde kommen gesättigte oder ungesättigte, gegebenenfalls substituierte aliphatische, cycloaliphatische, araliphatische und aromatische Aldehyde in Frage. Beispielhaft genannt seien Formaldehyd (in wäßriger Lösung oder auch in Gasform), Acetaldehyd, Butyraldehyd, Isobutyraldehyd, Chloral, Hydroxyethylaldehyd, Hydroxypivalinaldehyd, Acrolein, Crotonaldehyd, Glyoxal, Methylglyoxal, Cyclohexanaldehyd, Furfurol, Hydroxymethylfurfurol, Glucose, Glycerinaldehyd, Salicylaldehyd, Benzaldehyd, 4-Methylbenzaldehyd, Terephthaldialdehyd und andere Aldehyde, die unter den Bedingungen der Aldolkondensation, der Formose-Synthese oder der Acyloinkondensation gegebenenfalls in situ aus Formaldehyd und anderen niedermolekularen Aldehyden entstehen. Speziell erwähnt seien hierbei diejenigen Hydroxyaldehyde, deren Bildung durch die auf den Seiten 12 und 13 aufgeführten Reaktionsgleichungen schematisch wiedergegeben ist. Bevorzugt verwendbar sind hierbei insbesondere solche Aldehyde oder Aldehyd-Derivate, die unter den Bedingungen der Formose-Zuckergemisch-Synthese in situ aus Formaldehyd erzeugt werden. Dabei verfährt man so, daß man modifizierte Azulminsäuren, die mit Calciumhydroxid, Calciumhydroxid-Calciumcarbonat, Bleihydroxid oder mit anderen geeigneten Katalysatoren beladen sind oder die katalytisch wirkenden Substanzen in komplexer Bildung enthalten, auf Formaldehyd einwirken läßt. Hierbei wird Formaldehyd in rascher Reaktion in $C_2$-, $C_3$-, $C_4$-, $C_5$- und $C_6$-Aldehyde, wie Hydroxyacetaldehyd, Glyzerinaldehyd und höherfunktionelle Hydroxylgruppen-haltige Aldehyde bzw. Polyhydroxyketone umwandelt, welche in situ mit Aminoplastbildnern und geeigneten Gruppen der Azulminsäuren stabilisierende Kondensationsreaktionen eingehen.

Weiterhin können auch insbesondere solche Verbindungen verwendet werden, die unter den Reaktionsbedingungen Aldehyde, wie z.B. Formaldehyd, freisetzen. Hierzu gehören vorzugsweise Paraformaldehyd, Trioxan, Trithian, Chloralhydrat und Halbacetale des Formaldehyds, z.B. solche, die sich von Äthylenglykol, Diäthylenglykol, Glyzein, Methanol, Äthanol, Propanol und Butanol ableiten.

Als Ketone, die bei dem Verfahren (1) als Ausgangsstoffe eingezetzt werden können, seien Methyläthylketon, Methylisobutylketon, Hydroxyaceton, Dihydroxyaceton, Cyclohexanon, Acetophenon und Chinone, wie Benzochinon, beispielhaft genannt, wobei die Chinone insbesondere als Kondensationsprodukte mit Ammoniak oder Polyaminen vorliegen, ferner seien genannt Hexachloraceton und Hexafluoraceton.

Als Ketoester, der bei dem Verfahren (1) als Ausgangsstoff eingesetzt werden kann, sei Acetessigester beispielhaft genannt.

Bei dem Verfahren (1) können als Ausgangsverbindungen auch niedermolekulare Kondensationsprodukte aus Aminoplastbildnern und Carbonylverbindungen eingesetzt werden. In Frage kommen hierbei im Prinzip alle N-Oligo- und niedermolekularen N-Polykondensationsprodukte aus den obengenannten Aminoplastbildnern und Carbonylverbindungen, insbesondere Aldehyden. Bevorzugt sind Alkylol-Verbindungen, insbesondere Methylol-Verbindungen wie zie z.B. in Houben-Weyl, « Methoden der organischen Chemie », Band XIV, Teil 2 (1963), Seiten 319-402, Georg Thieme-Verlag, Stuttgart, beschrieben werden. Besonders bevorzugt sind die den obengenannten Stickstoff-Verbindungen entsprechenden N-Alkylolgruppen, vorzugsweise N-Methylolgruppen aufweisenden Derivate und die entsprechenden $C_1$-$C_4$-Alkyläther dieser N-Alkylol-Derivate. Beispielhaft erwähnt seien in diesem Zusammenhang N-Methylolharnstoff und Dimethylolharnstoff.

Bei dem Verfahren (1) können als Ausgangsstoffe ferner chemisch modifizierte niedermolekulare Kondensationsprodukte aus Aminoplastbildnern und Carbonylverbindungen eingesetzt werden. Hierunter sind Kondensationsprodukte aus den obengenannten Aminoplastbildnern und Carbonylverbindungen zu verstehen, die zusätzliche Stoffe enthalten, welche rasch und leicht durch Mischkondensation einbaufähig sind. Hierzu kommen vorzugsweise in Betracht Polyurethane und Polyharnstoffe mit $NH_2$-Endgruppen, Polyamide aus Poly-(β-alanin) mit Molgewichten bis 2 000, N-Methylolmethyläther von Polycaprolactam, Polythiolactame, Polypeptide aus N-Carboxy-α-aminocarbonsäuren, niedermolekulare Polyamide aus aliphatischen Dicarbonsäuren und Diaminen, Polyamide aus cycloaliphatischen Komponenten und aromatischen Komponenten, Polyamide mit O- bzw. S- oder N-als Heteroatome, Polyesteramide, Mischkondensate, die neben Amigruppen noch Ester-, Urethan- oder Harnstoffgruppen enthalten, äthoxylierte und propoxylierte Mono- und Polyamide, Polyhydrazide und Polyamino-triazole, Polysulfonamide, Formaldehyd-Mischkondensate mit Harnstoff, Melamin und Dicyandiamid, niedermolekulare Anilin-Formaldehyd-Kondensate, Sulfonsäureamide, Mono- und Dinitrile, Acrylnitril, Uretropin, Hexahydrotriazine aus primären Aminen und Formaldehyd, Schiff'sche Basen und Ketimine oder Polyketimine, wie z.B. solche aus einem Mol Hexamethylendiamin und 2 Mol Cyclohexanon, Polyadditionsprodukte und Polykondensationsprodukte des Melamins und anderer Aminoheterocyclen mit Aldehyden und Alkoholen, Polyadditions- und Polykondensationsprodukte von Nitrilen mit Aldehyden, Umsetzungsprodukte von phosphoriger Säure und Dialkylphosphiten mit Carbonylverbindungen und Aminen bzw. Polyaminen.

Ferner können als Ausgangsstoffe solche Aminoplast-Vorkondensate eingesetzt werden, wie sie in der DE-A 2 324 134 auf den Seiten 7 bis 12 aufgeführt sind.

Weiterhin kommen als Ausgangsstoffe solche N-Alkylol-Verbindungen und insbesondere N-Methylol-

Verbindungen in Betracht, die zum Teil veräthert sind mit Verbindungen wie

— polyfunktionellen Hydroxylverbindungen, z.B. Polyalkoholen, wobei Äthylenglykol, Glyzerin, Formose-Zuckergemische, Glucose, Oligo- und Polysaccharide sowie Stärke beispielhaft genannt seien ;

— Polyäthern mehr oder weniger hoher OH-Funktionalität, wie sie in der Polyurethanchemie verwendet werden, also z.B. Polyäther aus Propylenoxid, die anteilweise Äthylenoxidsegmente, sei es in Mischblöcken, in statistischer Verteilung oder bevorzugt als endständige Segmente enthalten und die primäre Hydroxylgruppen als Endgruppen besitzen, wobei diese Polyäther bis zu 70 Gew.-% und mehr an Polyäthylenoxid-Segmenten enthalten können und bevorzugt 13-30 Gew.-%, — bezogen auf eingebaute Propylenoxid-Segmente —, an Polyäthylenoxid-Segmenten enthalten können ;

— höherschmelzende, reine Polyäthylenoxide vom Durchschnittsmolekulargewicht 500-60 000, wobei insbesondere in Frage kommen Additionsprodukte des Propylenoxids an Trimethylolpropan bzw. Glyzerin, die in zweiter Stufe mit Äthylenoxid derartig umgesetzt werden, daß auf etwa 83-87 Gew.-Teile an gebundenem Propylenoxid etwa 17-13 Gew.-Teile an gebundenem Äthylenoxid entfallen ;

— Polyhydroxylverbindungen mit einem Durchschnittsmolekulargewicht von 250-14 000, vorzugsweise 400-6 000, welche gegebenenfalls im Gemisch mit niedermolekularen Polyhydroxylverbindungen des Molekulargewichtsbereiches 62-250 vorliegen ;

— höhermolekularen Polyhydroxylverbindungen, wie z.B. mindestens zwei endständige Hydroxylgruppen aufweisende Polyäther, in denen bevorzugt mindestens 10 % der Hydroxylgruppen primäre Hydroxylgruppen darstellen ;

— Polyhydroxylpolyestern, wie sie in großer Variationsbreite beim Diisocyanat-polyadditonsverfahren eingesetzt werden.

Der Anteil an Alkoholen bzw. Polyalkoholen in diesen Produkten kann je nach Komponente bis zu 60 Gew.-%, bezogen auf die Summe der Prozente an Stickstoff-Verbindungen und Alkoholen, betragen.

Es ist nicht erforderlich, die chemisch modifizierten Aminoplast-Vorkondensate gesondert herzustellen. Man geht vielmehr zweckmäßigerweise so vor, daß die Modifizierung im Verlauf der Umsetzung von Aminoplastbildnern und Carbonylverbindungen bzw. deren niedermolekularen Kondensationsprodukten mit Azulminsäuren durch Mitverwendung von Modifizierungskomponenten vorgenommen wird.

Als Katalysatoren können bei dem Verfahren (1) alle üblichen Kondensationskatalysatoren verwendet werden. Hierzu gehören Säuren, wie Salzsäure, Schwefelsäure, Salpetersäure, Phosphorsäure, Phosphorige Säure, andere vom Phosphor abgeleitete Säuren, Ameisensäure, Essigsäure, Thioessigsäure, Maleinsäure und Oxalsäure, ferner Basen wie Natriumhydroxid, Kaliumhydroxid, Calciumhydroxid, Bariumhydroxid, Bleihydroxid, Zinkoxid, Magnesiumoxid und andere Metalloxide und deren Hydrate, weiterhin Salze, wie Phosphate, z.B. primäres oder sekundäres Kaliumhydrogenphosphat, Ammoniumsulfat, Kupfer-, Zink-, Zinn-(II)-, Cadmium- und Magnesium-Salze verschiedenster organischer Säuren, außerdem zahlreiche organische Säureanhydride sowie säureabspaltenden Verbindungen wie Ammoniumchlorid, Trimethylammoniumformiat, Chloralhydrat, darüber hinaus Aminsalze der Ameisensäure und anderer organischer Carbonsäuren, Maleinsäurehalbester, tertiäre Aminsalze und tertiäre Amine, Dibenzoylperoxid, Kohlensäure, N-Carbaminsäuren, Glykolchlorhydrin, Glycerinchlorhydrin und Epichlorhydrin.

Bevorzugt verwendbare Katalysatoren sind Säuren wie Phosphorsäure, Phosphorige Säure, Salpetersäure, Salzsäure, Schwefelsäure, Ameisensäure, Oxalsäure und Maleinsäure, ferner Basen wie Natriumhydroxid, Kaliumhydroxid, Calciumhydroxid, Bariumhydroxid, Bleihydroxid, Benzyldimethylamin und Triäthylamin.

Als Kettenabbrecher können bei dem Verfahren (1) alle üblichen, für Kettenabbruch-Reaktionen geeigneten, monofunktionellen Verbindungen eingesetzt werden. Vorzugsweise in Betracht kommende monofunktionelle Kettenabbrecher sind Lactame, wie ε-Caprolactam, Valerolactam, Butyrolactam und die entsprechenden Thiolactame, ferner Formamid und Acetamid, weiterhin Alkohole, wie Methanol, Äthanol, Propanol, Butanol, Allylalkohol, Isopropanol, Oleylalkohol und Benzylalkohol, welche die wachsenden Aminoplast-Segmente durch Verätherungsreaktionen stoppen. Vorzugsweise verwendbare Kettenabbrecher sind auch solche Verbindungen, wie sie in der DE-A 2 324 134 auf den Seiten 13 und 14 beschrieben werden. In einer besonderen Ausführungsform des Verfahrens (1) können als Kettenabbrecher auch N-Methylolcaprolactam, N-Methylolvalerolactam, N-Methylolbutyrolactam und N-Methylolazalactame, wie z.B. basische Methylolverbindungen von Azalactamen der Konstitution

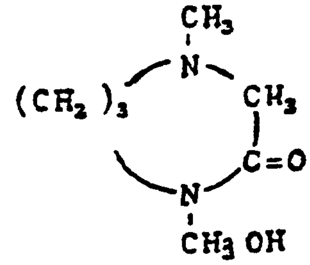

fungieren. Die letztgenannten Stoffe sind bisher noch nicht bekannt. Sie lassen sich jedoch durch Methylierung mit Formaldehyd nach üblichen Methoden aus den entsprechenden Azalactamen herstellen. Die benötigten Azalactame sind bekannt (vgl. DE-A 2 035 800).

Als Zusatzstoffe können bei der Durchführung des Verfahrens (1) organische Naturstoffe und daraus gewonnene Produkte, anorganische Naturstoffe und daraus gewonnene Produkte, synthetische organische Produkte, synthetische anorganische Produkte und/oder Mischprodukte aus organischen und anorganischen Produkten verwendet werden. Hierzu gehören vorzugsweise alle diejenigen Materialien, die bereits im Zusammenhang mit der Beschreibung der in den erfindungsgemäß verwendbaren Stoffen gegebenenfalls vorhandenen Zusatzstoffe vorzugsweise genannt wurden.

Bei der Durchführung des Verfahrens (1) arbeitet man in wäßrigem Medium oder in wäßrigalkoholischem Medium. Dabei können auch zusätzliche inerte organische Lösungsmittel mitverwendet werden ; letztere dienen zur azeotropen Entfernung des Wassers nach beendeter Umsetzung. Vorzugsweise kommt jedoch Wasser ohne zusätzliche organische Lösungsmittel als Rekationsmedium in Betracht.

Die Reaktionstemperaturen können im Falle des Verfahrens (1) innerhalb eines größeren Bereiches variiert werden. Im allgemeinen arbeitet man bei Temperaturen zwischen 0 °C und 200 °C, vorzugsweise zwischen 10 °C und 150 °C. Es ist jedoch auch möglich, die Mischkondensation im Verlaufe des Trocknungsprozesses bei Temperaturen bis zu 250 °C zu Ende führen.

Die Umsetzung nach dem Verfahren (1) wird im allgemeinen unter Normaldruck ausgeführt. Es ist jedoch auch möglich, unter erhöhtem oder vermindertem Druck zu arbeiten.

Bei der Durchführung des Verfahrens (1) setzt man auf 1 Mol (bezogen auf die Moleküleinheit NC—C—$NH_2$ mit dem Äquivalentgewicht 54) gegebenenfalls Zusatzstoffe enthaltende modifizierte Azulminsäure 0,1 bis 5 Mol an Aminoplastbildner und 0,1 bis 5 Mol an Carbonylverbindung bzw. 0,1 bis 5 Mol an gegebenenfalls chemisch modifiziertem Kondensationsprodukt aus Aminoplastbildner und Carbonylverbindung ein, ferner gegebenenfalls Kettenabbrecher und gegebenenfalls einen Katalysator und außerdem gegebenenfalls eine solche Menge an Zusatzstoffen, daß deren Anteil im Endprodukt zwischen 1 und 95 Gewichtsprozent liegt.

Katalysatoren werden im allgemeinen in Mengen von 0,05 bis 10 Gew.-%, vorzugsweise von 0,1 bis 5 Gew.-%, bezogen auf die Gesamtmenge aller an der Polykondensation beteiligten Reaktionskomponenten, eingesetzt. In manchen Fällen können jedoch auch wesentlich höhere Katalysator-Konzentrationen zur Anwendung gelangen. So können z.B. pro Mol an Azulminsäure 0,2 bis 0,6 Mol an saurem Katalysator, vorzugsweise an Phosphorsäure oder Salpetersäure, eingesetzt werden. Hierbei entstehen Produkte, in denen die Katalysator-Säuren an basischen Gruppen der Mischkondensate fixiert sind.

Kettenabbrecher können in Mengen von 0,5 bis 60 Gew.-%, bezogen auf die Gesamtmenge an Aminoplastbildnern und Carbonylverbindungen, eingesetzt werden. Dienen N-Methylol-lactame bzw. N-Methylolazalactame als Kettenabbrecher, so liegen deren Konzentrationen im allgemeinen zwischen 0,5 und 20 Gew.-%, vorzugsweise zwischen 2 und 14 Gew.-%, bezogen auf die Gesamtmenge an Aminoplastbildnern und Carbonylverbindungen.

Die praktische Durchführung des Verfahrens (1) erfolgt im allgemeinen in der Weise, daß man eine gegebenenfalls Zusatzstoffe enthaltende wäßrige Azulminsäure-Dispersion mit einer frisch zubereiteten wäßrigen Lösung von Aminoplastbildner und Carbonylverbindung (= Lösung teilalkylolierter bzw. teilmethylolierter Produkte) bzw. mit einer wäßrigen Lösung von noch löslichen Aminoplastkondensaten (z.B. Polyalkylol-bzw. Polymethylol-Verbindungen) versetzt, gegebenenfalls Zusatzstoffe, Modifizierungsreagenzien, Katalysatoren und Kettenabbrecher hinzufügt und die Kondensation vornimmt. Es ist jedoch auch möglich, wäßrige Lösungen bzw. Dispersionen von Aminoplastbildnern und Carbonylverbindungen vorzulegen und diese dann mit der jeweiligen Azulminsäure sowie gegebenenfalls mit Zusatzstoffen, Modifizierungsreagenzien, Katalysatoren und Kettenabbrechern zu versetzen und anschließend zu mischkondensieren.

Bevorzugt wird die Polykondensation nach dem Verfahren (1) so durchgeführt, daß man die wäßrige Lösung oder Dispersion aus Aminoplastbildner und Carbonylverbindung sauer einstellt, — etwa auf pH-Werte zwischen 1 und 4 bringt —, und diese Mischung auf die Azulminsäuren einwirken läßt. Hierbei laufen die Reaktionen sehr rasch ab. Es können dabei bezogen auf ein $NH_2$-bzw. NH-Äquivalent aller Reaktionspartner 0,1 bis 0,8 Äquivalente an Carbonylverbindung zur Einwirkung gelangen.

Bevorzugt ist auch die Verfahrensweise, bei der man Aminoplastbildner und Carbonylverbindung in Wasser oder niederen Alkoholen löst und diese reaktiven Lösungen, in denen sich Gleichgewichte zwischen Ausgangsverbindungen und N-Alkylolierungsprodukten bzw. N-Methylolierungsprodukten einstellen, bei Temperaturen zwischen 20 °C und 100 °C unter intensivem Rühren in die vorgelegten wäßrigen Azulminsäuredispersionen eintropft, Hierbei kann man auch so vorgehen, daß man Lösungen teilalkylolierter, insbesondere teilmethylolierter Verbindungen oder bereits teilweise vorkondensierte, noch lösliche Polyalkylol-, insbesondere Polymethylol-Verbindungen in einem Guß zu den dispergierten Azulminsäuren gibt und die Kondensation durch Wärme, im basischen oder sauren Bereich unter Entfernung des Wassers bei Normaldruck oder unter vermindertem Druck zu Ende führt.

Oft ist es auch vorteilhaft, zu einer wäßrigen Azulminsäure-Dispersion die Aminoplastbildner zu geben, letztere dann im pH-Bereich zwischen 7,5 und 10 durch Zugabe der entsprechenden Carbonylverbindungen zu alkylolieren bzw. zu methylolieren und die bereits vorgebildeten N-Alkylolverbindungen bzw. N-Methylolverbindungen, — gegebenenfalls auch ihre Äther —, auf die Azulminsäuren zur Einwirkung zu bringen.

Bei dem Verfahren (1) können selbstverständlich auch Mischungen von mehreren Aminoplastbildnern und/oder Mischungen von mehreren Carbonylverbindungen zur Kondensation verwendet werden. So können z.B. solche Aldehyd-Gemische eingesetzt werden, die aus Formaldehyd und zahlreichen anderen Aldehyden bzw. Ketonen unter den Bedingungen der Aldolkondensation, der Formose-Synthese oder der Acyloinkondensation gegebenenfalls in situ entstehen (vgl. Reaktionsgleichungen auf Seiten 12/13). Derartige Hydroxyaldehyde reagieren im Maße ihrer Bildung, insbesondere im schwach bis stark alkalischen Bereich mit Aminoplastbildnern, wie z.B. Harnstoff, leicht unter Addition zu N-Alkylolverbindungen, die dann mischkondensiert werden.

In einer besonderen Variante des Verfahrens (1) arbeitet man in der Weise, daß spezielle Aldehyde, bevorzugt Formaldehyd in alkalischem Milieu auf andere Aldehyde einwirken läßt, und zwar in Gegenwart der zur Aminoplastbildung eingesetzten Stoffe. Obwohl sich dabei Alkylolverbindungen bzw. Methylolverbindungen bilden, so sind diese doch nicht die thermostabilsten Derivate und es erfolgt Bildung der thermostabileren Hydroxyaldehyde. Letztere führen im Zuge der Umsetzung zu Hydroxylgruppen enthaltenden Aminoplastkondensaten, die den sprühgetrockneten Produkten eine gewünschte krümelige Struktur verleihen. Über diese Variante des Verfahrens (1) kann vor allem auch die Quellbarkeit der erfindungsgemäß verwendbaren Produkte beeinfluß werden. Außerdem kann diese Reaktion in Gegenwart von auf Azulminsäure niedergeschlagenem Calciumhydroxid oder Bleihydroxid dazu benutzt werden, um karamelisierte Zucker zu synthetisieren (Butlerow-Löw-Formose-Reaktion), die an den Aminoplastkondensationen teilnehmen und für eine Krümelstruktur der erfindungsgemäß verwendbaren Produkte sorgen.

Bei der Durchführung der Mischkondensation nach Verfahren (1) können Kalium-Ionen und Cyanid-Ionen, die unter den Umsetzungsbedingungen stets in geringer Menge aus den Azulminsäuren entstehen, ihre bekannte katalytische Aktivität ausüben und z.B. Acyloinkondensation bewirken (vgl. Reaktionsgleichung (e) auf Seite 13). Die dabei entstehenden Produkte können im Zuge der Aminoplastkondensationen, insbesondere bei basisch katalysierten Reaktionen, an der Kondensation teilnehmen und ferner bei Angebot von Formaldehyd durch Aldolkondensationen in methylolierte Ketone übergehen, welche ebenfalls Kondensationspartner darstellen.

Das Verfahren (1) kann insbesondere dann, wenn Harnstoff als Aminoplastbildner und Acetaldehyd, Isobutyraldehyd oder Crotonaldehyd als Carbonylkomponenten eingesetzt werden, unter weitgehendem Ausschluß von Eigenkondensationen durchgeführt werden. Unter Eigenkondensation ist hierbei die Bildung von solchen Kondensationsprodukten aus Aminoplastbildner und Carbonylkomponente zu verstehen, die nicht covalent an die Azulminsäure-Matrix gebunden sind. Um nun die Entstehung derartiger Eigenkondensationsprodukte möglichst zu vermeiden, arbeitet man in der Weise, daß man z.B. in Gegenwart von Phosphorsäure bei einem pH-Wert von 2 bis 4 zunächst in der Kälte (bei Raumtemperatur) kondensiert und nach etwa 3 bis 4 Stunden bei Temperaturen zwischen 40 °C und 60 °C filtriert. Unter diesen Reaktionsbedingungen liegt das Gleichgewicht, das sich zwischen Kondensationsprodukten und deren niedermolekularen Segmenten einstellt, bei allen nicht covalent an die Azulminsäure-Matrix gebundenen Kondensationsprodukte in dem wäßrigen System größtenteils auf der Seite der Monomeren bzw. kurzkettigen, in heißem Wasser löslichen Oligkondensate, da die Spaltung von nicht angepfropften Segmenten wie

a) 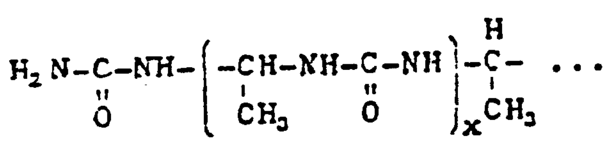

b) 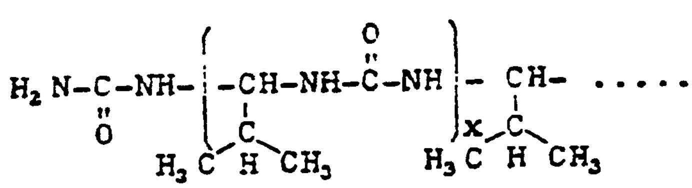

c) 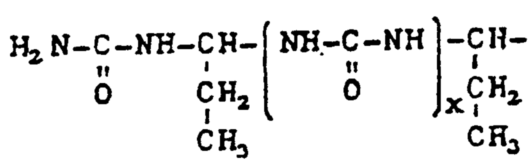

d) 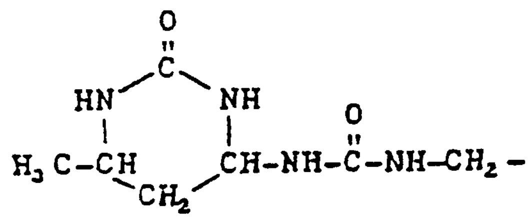

oder

e) Segmente, die durch Kondensation von Crotonaldehyd und Harnstoff im Molverhältnis 1 : 1 oder 2 : 1 entstehen,

sehr rasch erfolgt.

Im Gegensatz dazu werden die unter (a) bis (e) aufgeführten Segmente, die covalent an die Azulminsäure-Matrix gebunden sind, wesentlich langsamer abgebaut, da ihre Abspaltung einer stark gehinderten topochemischen Hydrolyse unterliegt. Daher können nach dieser Methode Produkte hergestellt werden, in welchen pro 100 Gewichtsteilen Azulminsäure etwa 35 bis 50 Gewichtsprozent an Kondensaten aus Aminoplastbildner und Carbonylkomponente covalent an die Matrix gebunden sind. Durch fortlaufenden erneuten Einsatz der heiß abfiltrierten Mutterlaugen und Nachdosierung von Harnstoff bzw. von Acetaldehyd, Isobutyraldehyd, Crotonaldehyd bzw. entsprechenden Aldehyden kann das Verfahren unter weiterer Verwendung der Mutterlaugen besonders rationell durchgeführt werden.

Bei den in saurem Medium deutlich stabileren linearen oder verzweigten Polymethylenharnstoff-Segmenten kann die vorgenannte Verfahrensweise nicht praktiziert werden, da Polykondensate der Konstitution

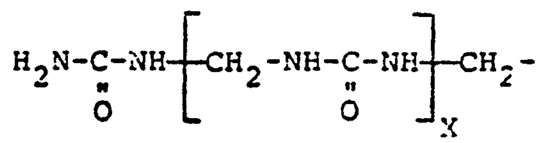

selbst bei Temperaturen bis zu 100 °C und pH-Werten zwischen 2 und 4 wesentlich beständiger sind als Segmente der unter (a) bis (e) aufgeführten Strukturen.

Der Anteil der durch Eigenkondensation aus Aminoplastbildner und Carbonylkomponente gebildeten Kondensationsprodukte, die nicht covalent an die Azulminsäure-Matrix-gebunden sind, läßt sich wie folgt bestimmen: Man behandelt das Mischkondensat bei Raumtemperatur mit 30 bis 60 gewichtsprozentigen Lösunger von Lithium-jodid in Methanol. Hierbei lösen sich die nicht covalent an die Azulminsäure-Matrix gebundenen Kondensate aus Harnstoff und Carbonylkomponenten, wie Formaldehyd, Acetaldehyd, Isobutyraldehyd oder Crotonaldehyd, auf, während covalent gebundene Anteile unlöslich sind. Der in der Lösung enthaltene Anteil an Kondensationsprodukten wird analytisch ermittelt, so daß sich der covalent gebundene Anteil errechnen läßt.

Nach dem Verfahren (2) werden gegebenenfalls Zusatzstoffe enthaltende Säureadditionssalze bzw. Komplex-Verbindungen von modifizierte Azulminsäuren mit einem Gehalt von 0,5 bis 55 Gewichtsprozent an ionischen Gruppen der Formel

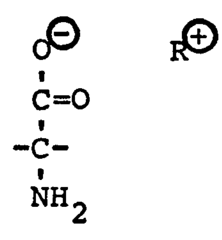

$(F_1)$

in welcher

R die oben angegebene Bedeutung hat,

und mit einem Gehalt von 0,5 bis 15 Gewichtsprozent an Gruppen der Formel

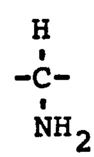

$(F_2)$

in wäßrigem Medium gegebenenfalls in Gegenwart von Zusatzstoffen und gegebenenfalls in Gegenwart von Katalysatoren sowie gegebenenfalls in Gegenwart von von Kettenabbrechern mit Aminoplastbildnern und Carbonylverbindungen bzw. deren frisch zubereiteten, gegebenenfalls chemisch modifizierten Kondensationsprodukten umsetzt.

In der Formel ($F_1$) steht R vorzugsweise für diejenigen Substituenten, die bereits im Zusammenhang mit der Beschreibung der erfindungsgemäß verwendbaren Stoffe vorzugsweise für R genannt wurden.

Die bei dem Verfahren (2) als Ausgangsstoffe zu verwendenden Säureadditionssalze bzw. Komplex-Verbindungen von modifizierten Azulminsäuren (= fehlerstellenhaltige Azulminsäuren) können 1 bis 95 Gewichtsprozent, vorzugsweise 5 bis 90 Gewichtsprozent an Zusatzstoffen enthalten. Als Zusatzstoffe kommen dabei organische Naturstoffe und daraus gewonnene Produkte, anorganische Naturstoffe und daraus gewonnene Produkte, synthetische organische Produkte, synthetische anorganische Produkte und/oder Mischprodukte aus organischen und anorganischen Produkten in Frage. Hierzu gehören vorzugsweise alle diejenigen Materialien, die bereits im Zusammenhang mit der Beschreibung der in den erfindungsgemäß verwendbaren Stoffen gegebenenfalls vorhandenen Zusatzstoffe vorzugsweise genannt wurden.

Als Säuren, die in den als Ausgangsstoffen benötigten Säureadditions-Salzen modifizierter Azulminsäuren enthalten sein können, kommen vorzugsweise alle diejenigen Säuren in Frage, die bereits im Zusammenhang mit der Beschreibung der erfindungsgemäß verwendbaren Stoffe erwähnt wurden. Speziell genannt seien Ameisensäure, Salpetersäure, Phosphorsäure, phosphorige Säure, Chloressigsäure, Dichloressigsäure, Trichloressigsäure und Flußsäure.

Als Salze, die in den als Ausgangsstoffen benötigten Komplex-Verbindungen modifizierter Azulminsäuren in komplexer Bindung enthalten sein können, kommen vorzugsweise alle diejenigen Ammoniumsalze und Metallverbindungen in Frage, die bereits im Zusammenhang mit der Beschreibung der erfindungsgemäß verwendbaren Stoffe vorzugsweise erwähnt wurden. Speziell genannt seien Eisen-II-acetat, Eisen-II-sulfat, Eisen-III-sulfat, Kupferacetat, Zinkacetat, Mangan-II-acetat, Cobaltchlorid, Zinkchlorid und Zinn-II-Chlorid.

Die als Ausgangsstoffe verwendbaren Säureadditionssalze modifizierter Azulminsäuren sind bisher noch nicht bekannt. Sie lassen sich jedoch herstellen, indem man die nach den Verfahren (A) bzw. (B) zugänglichen, gegebenenfalls Zusatzstoffe enthaltenden modifizierten Azulminsäuren in wäßrigem Medium bei Raumtemperatur oder auch bei erhöhter Temperatur mit der jeweiligen Säure verrührt. Die Herstellung einiger Säureadditionssalze modifizierter Azulminsäuren wurde bereits im Zusammenhang mit der Beschreibung der Herstellung modifizierter Azulminsäuren in allgemeiner Form offenbart.

Die weiterhin bei dem Verfahren (2) als Ausgangsstoffe verwendbaren Komplex-Verbindungen modifizierter Azulminsäuren sind bischer noch nicht bekannt. Sie lassen sich jedoch herstellen, indem man die nach dem Verfahren (A) und (B) zugänglichen, gegebenenfalls Zusatzstoffe enthaltenden modifizierten Azulminsäuren in wäßrigem Medium bei Temperaturen zwischen 20 °C und 120 °C, vorzugsweise 50 °C bis 110 °C, mit den zu komplexierenden Stoffen verrührt. Die Aufarbeitung erfolgt nach üblichen Methoden. Im allgemeinen isoliert man die Reaktionsprodukte durch Filtration. Die Herstellung einigen Komplex-Verbindungen modifizierter Azulminsäuren wurde bereits im Zusammenhang mit der Beschreibung der Herstellung modifizierter Azulminsäuren in allgemeiner Form offenbart.

Bei dem Verfahren (2) werden als Ausgangsverbindungen weiterhin Aminoplastbildner eingesetzt. Hierzu gehören alle diejenigen Stickstoff-Verbindungen, die in diesem Zusammenhang bereits bei der Beschreibung des Verfahrens (1) erwähnt wurden.

Als Carbonylverbindungen kommen bei der Durchführung des Verfahrens (2) alle diejenigen Carbonylkomponenten in Betracht, die bereits bei der Beschreibung des Verfahrens (1) erwähnt wurden.

Ferner können bei dem Verfahren (2) als Ausgangsverbindungen auch niedermolekulare Kondensationsprodukte aus Aminoplastbildnern und Carbonylverbindungen eingesetzt werden. In Frage kommen hierbei alle diejenigen Stoffe, die in diesem Zusammenhang bereits bei der Beschreibung des Verfahrens (1) erwähnt wurden, und zwar einschließlich der chemisch modifizierten Produkte.

Außerdem können bei der Durchführung des Verfahrens (2) alle diejenigen Katalysatoren, Kettenabbrecher und Zusatzstoffe eingesetzt werden, die schon bei der Beschreibung des Verfahrens (1) genannt wurden. Auch die übrigen Umsetzungsbedingungen, wie Reaktionsmedium, Reaktionstemperaturen und anzuwendender Druck, entsprechen denjenigen, die im Zusammenhang mit dem Verfahren (1) im einzelnen erwähnt wurden. Im übrigen läßt sich das Verfahren (2) in gleicher Weise durchführen wie das Verfahren (1), das heißt einzusetzende Menge an Reaktionskomponenten und Zusatzstoffen, Katalysatoren und Kettenabbrechern sowie die praktische Durchführung der Umsetzung und Aufarbeitung sind analog. Darüber hinaus kommen alle diejenigen speziellen Varianten in Betracht, die im Zusammenhang mit dem Verren (1) erwähnt wurden.

Nach dem Verfahren (3) werden nahezu fehlerstellenfreie Azulminsäuren in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umgesetzt.

Die als Ausgangsstoffe benötigten nahezu fehlerstellenfreien Azulminsäuren sind bekannt (vgl. Houben-Weyl, Band 8 (1952), Seite 261 ; DE-B 662 338 und DE-B 949 060).

Weiterhin kommen bei dem Verfahren (3) als Ausgangsverbindungen alle diejenigen Aminoplastbildner, Carbonylverbindungen bzw. niedermokekularen Kondensationsprodukte aus Carbonylverbindungen und Aminoplastbildnern sowie die chemisch modifizierten Produkte dieser niedermolekularen Kondensate in Betracht, die bereits bei der Beschreibung des Verfahrens (1) als Ausgangsstoffe erwähnt werden. Außerdem können bei dem Verfahren (3) alle diejenigen Katalysatoren, Kettenabbrecher und Zusatzstoffe eingesetzt werden, die schon im Zusammenhang mit dem Verfahren (1) genannt wurden. Auch die übrigen Umsetzungbedingungen, wie Reaktionsmedium, Reaktionstemperaturen und anzuwendender Druck, entsprechen denjenigen des Verfahrens (1). Im übrigen läßt sich auch das Verfahren (3) in gleicher Weise durchführen wie das Verfahren (1), also einzusetzende Mengen an Reaktionskomponenten und Zusatzstoffen, Katalysatoren und Kettenabbrechern sowie die praktische Durchführung der Umsetzung und Aufarbeitung sind analog. Darüber hinaus kommen wiederum alle diejenigen speziellen Varianten in Betracht, die im Zusammenhang mit dem Verfahren (1) erwähnt wurden.

Nach dem Verfahren (4) wird Blausäure mit Hilfe basischer Katalysatoren unter hydrolysierenden Bedingungen in wäßrigem Medium gegebenenfalls in Gegenwart von Zusatzstoffen polymerisiert und anschließend ohne vorherige Isolierung der Reaktionsprodukte gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukte in wäßrigem Medium umgesetzt.

Man geht hierbei von verdünnten wäßrigen Blausäure-Lösungen aus, denen man gegebenenfalls Zusatzstoffe beimischt. Im allgemeinen verwendet man Lösungen, deren Blausäure-Konzentration zwischen 10 und 30 %, vorzugsweise zwischen 15 und 25 % liegt.

Als basische Katalysatoren kommen bei dem Verfahren (4) organische und anorganische Basen sowie basische Salze der verschiedensten Art in Betracht. Vorzugsweise verwendbar sind hierbei alle diejenigen Basen bzw. Salze, die bereits im Zusammenhang mit der Beschreibung des Verfahrens (B) vorzugsweise genannt wurden. Vorteilhafterweise können auch Gemische verschiedenster Basen bzw. basischer Salze eingesetzt werden; speziell genannt sei ein Gemisch aus Natriumcyanat und wäßriger Ammoniak-Lösung.

Als Zusatzstoffe, die dem Reaktionsgemisch vor und/oder nach der Blausäure-Polymerisation zugefügt werden können, kommen wiederum organische Naturstoffe und daraus gewonnene Produkte, anoganische Naturstoffe und daraus gewonnene Produkte, synthetische organische Produkte, synthetische anorganische Produkte und/oder Mischprodukte aus organischen und anorganischen Produkten in Betracht. Hierzu gehören vorzugsweise alle diejenigen Materialien, die bereits im Zusammenhang mit der Beschreibung der in den erfindungsgemäß verwendbaren Stoffen gegebenenfalls vorhandenen Zusatzstoffe vorzugsweise genannt wurden.

Als Aminoplastbildner bzw. als Carbonylverbindungen, die bei dem Verfahren (4) nach erfolgter Polymerisation der Rohazulminsäure als Reaktionskomponenten zugesetzt werden, kommen alle diejenigen Stoffe in Frage, die bereits bei der Beschreibung des Verfahrens (1) als Aminoplastbildner bzw. als Carbonylverbindungen allgemein bzw. vorzugsweise genannt wurden. Ferner kommen als Reaktionskomponenten auch bei diesem Verfahren frisch zubereitete, gegebenenfalls chemisch modifizierte niedermolekulare Kondensationsprodukte von Aminoplastbildnern und Carbonylverbindungen in Betracht, wie sie bereits im Zusammenhang mit der Beschreibung des Verfahrens (1) erwähnt wurden. Auch hierbei ist es nicht erforderlich, die chemisch modifizierten Aminoplast-Vorkondensate gesondert herzustellen. Man geht vielmehr wiederum zweckmäßigerweise so vor, daß die Modifizierung im Verlauf der Umsetzung von Aminoplastbildnern und Carbonylverbindungen bzw. deren niedermolekularen Kondensationsprodukten mit Azulminsäuren durch Mitverwendung von Modifizierungskomponenten vorgenommen wird.

Als Katalysatoren kommen bei der Durchführung der zweiten Stufe des Verfahrens (4) wiederum alle üblichen Kondensationskatalysatoren in Frage. Hierzu gehören alle diejenigen Stoffe, die bereits bei der Beschreibung des Verfahrens (1) als Katalysatoren genannt wurden.

Als Kettenabbrecher können bei der Durchführung der zweiten Stufe des Verfahrens (4) wiederum alle üblichen für Kettenabbruch-Reaktionen geeigneten monofunktionellen Verbindungen verwendet werden. Hierzu gehören vorzugsweise alle diejenigen Stoffe, die in diesem Zusammenhang bereits bei der Beschreibung des Verfahrens (1) vorzugsweise als Kettenabbrecher erwähnt wurden.

Bei dem Verfahren (4) arbeitet man sowohl bei der Durchführung der ersten als auch der zweiten Stufe in wäßrigem Medium oder in wäßrig-alkoholischem Medium. Es können auch vor allem in der zweiten Stufe zusätzliche inerte organische Lösungsmittel mitverwendet werden; letztere dienen zur azeotropen Entfernung des Wassers nach beendeter Umsetzung. Vorzugsweise kommt jedoch Wasser ohne zusätzliche organische Lösungsmittel als Reaktionsmedium in Betracht.

Die Reaktionstemperaturen können im Falle des Verfahrens (4) innerhalb eines größeren Bereiches variiert werden, wobei die Temperaturführung jedoch der jeweiligen Reaktionsphase angepaßt sein muß. Im allgemeinen arbeitet man so, daß man zunächst 1 bis 4 Stunden bei Temperaturen zwischen 30 °C und 70 °C, vorzugsweise zwischen 40 °C und 60 °C polymerisiert, so daß ein etwa 60 %iger Umsatz der monomeren Blausäure erreicht wird. Danach wird weitere 4 bis 10 Stunden bei Temperaturen zwischen 70 °C und 95 °C, vorzugsweise zwischen 80 °C und 90 °C polymerisiert, wodurch ein Umsatz von etwa 90 bis 95 % erzielt wird. Anschließend kann man zur Vervollständigung der Umsetzung sowie zur Entfernung

von noch vorhandener Blausäure und gegebenenfalls vorhandenen flüchtigen Aminen oder Ammoniak mehrere Stunden auf Temperaturen um etwa 100 °C erhitzen. Danach wird die Mischkondensation mit Carbonylverbindungen und Aminoplastbildnern bzw. deren frisch zubereiteten, gegebenenfalls chemisch modifizierten Kondensationsprodukten bei den dazu üblichen Temperaturen vorgenommen. Im allgemeinen arbeitet man bei Temperaturen zwischen 0 °C und 200 °C, vorzugsweise zwischen 10 °C und 150 °C. Es ist jedoch auch möglich, die Mischkondensation im Verlaufe des Trocknungsprozesses bei Temperaturen bis zu 250 °C zu Ende zu führen.

Die Umsetzung nach dem Verfahren (4) wird im allgemeinen unter Normaldruck ausgeführt. Es ist jedoch auch möglich, unter erhöhtem Druck bei Temperaturen zwischen 120 °C und 150 °C zu arbeiten. Hierbei lassen sich in gezielter Weise relativ große Mengen an Fehlerstellen in den Verfahrensprodukten erzeugen.

Bei der Durchführung des Verfahrens (4) setzt man den zur Polymerisation der Blausäure benötigten basischen Katalysator in einer solchen Menge ein, daß sein Anteil 1 bis 15 %, vorzugsweise 2 bis 10 % der eingesetzten monomeren Blausäure beträgt. Die Menge an Aminoplastbildnern, Carbonylverbindungen bzw. deren frisch zubereiteten, gegebenenfalls chemisch modifizierten niedermolekularen Kondensationsprodukten wird so bemessen, daß jeweils 0,1 bis 5 Mol an Aminoplastbildner, Carbonylverbindung bzw. an deren gegebenenfalls chemisch modifizierten niedermolekularen Kondensationsprodukten pro Mol Azulminsäure vorhanden sind. Die Zusatzstoffe werden dem Reaktionsgemisch gegebenenfalls in einer solchen Menge zugesetzt, daß deren Anteil im Endprodukt zwischen 1 und 95 Gew.-%, vorzugsweise zwischen 5 und 90 Gew.-% liegt. Außerdem werden bei der Umsetzung der Azulminsäure mit Kondensationspartnern gegebenenfalls Kondensationskatalysatoren sowie Kettenabbrecher zugegeben. Katalysatoren werden dabei gegebenenfalls in Mengen von 0,05 bis 10 Gew.-%, vorzugsweise von 0,1 bis 5 Gew.-%, bezogen auf die Gesamtmenge aller an der Polykondensation beteiligten Reaktionskomponenten, eingesetzt. Kettenabbrecher können in Mengen 0,5 bis 60 Gew.-%, bezogen auf die Gesamtmenge an Aminoplastbildnern und Carbonylverbindungen, verwendet werden.

Die praktische Durchführung des Verfahrens (4) erfolgt im allgemeinen in der Weise, daß man zunächst die Polymerisation der Blausäure gegebenenfalls in Gegenwart von Zusatzstoffen in wäßrigem Medium vornimmt und anschließend nach destillativer Entfernung überschüssiger Blausäure sowie nach Entfernung eventuell vorhandener flüchtiger Amine oder Ammoniak die entstandene Azulminsäure ohne vorherige Isolierung in wäßriger Dispersion mit Aminoplastbildnern und Carbonylverbindung bzw. einer frisch zubereiteten wäßrigen Lösung von Aminoplastbildner und Carbonylverbindung (= Lösung teilalkylolierter bzw. teilmethylolierter Produkte) bzw. mit einer wäßrigen Lösung von noch löslichen Aminoplastkondensaten (z.B. Polyalkylol- bzw. Polymethylol-Verbindungen) versetzt, gegebenenfalls Zusatzstoffe, Modifizierungsreagenzien, Katalysatoren und Kettenabbrecher hinzufügt und die Kondensation vornimmt. Selbstverständlich können als Kondensationspartner auch Mischungen von verschiedenen Carbonylverbindungen und/oder Aminoplastbildnern fungieren. Die Aufarbeitung geschieht nach üblichen Methoden. Im allgemeinen verfährt man so, daß man das Reaktionsgemisch nach beendeter Umsetzung filtriert und das dabei erhaltene Festprodukt wäscht und trocknet.

Eine besonders bevorzugte Variante des Verfahrens (4), welche die Herstellung von Produkten mit besonders hoher Stabilität gegen Blausäurerückspaltung ermöglicht, besteht darin, daß man zunächst Blausäure in Gegenwart von Ammoniak in wäßrigem Medium polymerisiert, dann überschüssige Blausäure sowie den zur Polymerisation verwendeten Ammoniak abzieht, anschließend die verbleibende Azulminsäure ohne vorherige Isolierung in wäßriger Dispersion unter Rühren mit kleinen Mengen an Carbonylverbindung, insbesondere Formaldehyd, unter ständiger Kontrolle des Verbrauchs an Carbonylverbindung partiell kondensiert und erst danach den restlichen Anteil an Carbonylverbindung und Aminoplastbildner bzw. deren frisch zubereiteten, gegebenenfalls chemisch modifizierten niedermolekularen kondensationsprodukten sowie gegebenenfalls Zusatzstoffe und Kettenabbrecher zugibt und im sauren Bereich bei pH-Werten von 3 bis 4, — zweckmäßigerweise unter Verwendung von Phosphorsäure oder Salpetersäure —, im Verlauf von 0,5 bis 8 Stunden bei Raumtemperatur kondensiert. Im allgemeinen verfährt man so, daß man bei der partiellen Kondensation von den in 100 Gramm Rohazulminsäure vorhandenen 1,2 bis 1,5 $NH_2$-Äquivalenten zunächst nur 0,4 bis 0,5 $NH_2$-Äquivalente mit Carbonylverbindung, vor allem Formaldehyd, umsetzt, so daß in der vorstabilisierten Azulminsäure der verbleibende Anteil von 0,8 bis 1,1 $NH_2$-Äquivalenten für die nachfolgende Mischkondensation zur Verfügung steht.

Nach dem Verfahren (5) wird Blausäure mit Hilfe basischer Katalysatoren in Gegenwart von Aminoplastbildnern unter hydrolysierenden Bedingungen in wäßrigem Medium, gegebenenfalls in Gegenwart von Zusatzstoffen polymerisiert und anschließend ohne vorherige Isolierung der Reaktionsprodukte gegebenenfalls in Gegenwart von Zusatzstoffen und gegebenenfalls in Gegenwart von Katalysatoren sowie gegebenenfalls in Gegenwart von Kettenabbrechern mit Carbonylverbindungen in wäßrigem Medium umgesetzt.

Das Verfahren (5) entspricht weitgehend dem zuvor beschriebenen Verfahren (4). So geht man auch hier von verdünnten wäßrige-Blausäure-Lösungen aus, deren Blausäure-Konzentration zwischen 10 und 30 %, vorzugsweise zwischen 15 und 25 % liegt. Als Katalysatoren kommen bei der Blausäure-Polymerisation alle diejenigen Basen und basischen Salze in Frage, die bereits im Zusammenhang mit dem Verfahren (4) als Blausäure-Polymerisations-Katalysatoren genannt wurden.

Ferner lassen sich bei dem Verfahren (5) auch alle diejenigen Zusatzstoffe, Aminoplastbildner, Carbonylverbindungen, Kondensationskatalysatoren und Kettenabbrecher verwenden, die bei dem Verfahren (4) in Frage kommen. Besonders bevorzugt verwendbare Aminoplastbildner sind Harnstoff, Thioharnstoff, Oxamid, Melamin, Dicyandiamid, Mono- und Polyamine bzw. N-Alkylol-Verbindungen, insbesondere N-Methylol-Verbindungen dieser bevorzugten Aminoplastbildner. Als besonders bevorzugte Carbonylverbindung sei Formaldehyd genannt.

Im Falle des Verfahrens (5) sind auch die übrigen Umsetzungsbedingungen, wie Reaktionstemperaturen, Druck, Reaktionsmedium, sowie die zu verwendenden Mengen an den an der Umsetzung beteiligten Stoffen denen des Verfahrens (4) analog.

Die praktische Durchführung des Verfahrens (5) erfolgt im allgemeinen in der Weise, daß man zunächst die Polymerisation der Blausäure in Gegenwart von einem oder mehreren löslichen Aminoplastbildnern, wie z.B. Harnstoff, Thioharnstoff, Oxamid, Melamin, Dicyandiamid, Mono- oder Polyaminen, N-Alkylol-Verbindungen, bzw. N-Methylol-Verbindungen der genannten Aminoplastbildner, und gegebenenfalls in Gegenwart von Mono- und Polyalkoholen sowie gegebenenfalls in Gegenwart von anderen Zusatzstoffen in wäßrigem Medium vornimmt und anschließend nach destillativer Entfernung überschüssiger Blausäure sowie nach Entfernung eventuell vorhandener flüchtiger Amine oder Ammoniak die entstandene, Aminoplastbildner enthaltende Azulminsäure ohne vorherige Isolierung in wäßriger Dispersion mit einer oder auch mehreren Carbonylverbindungen versetzt, gegebenenfalls Zusatzstoffe, Modifizierungsreagenien, Katalysatoren und Kettenabbrecher hinzufügt und die Kondensation in saurem Milieu, im allgemeinen im pH-Bereich von 1 bis 6, vorzugsweise in pH-Bereich von 2 bis 4, durchführt.

Bei dem Verfahren (6) werden gegebenenfalls Zusatzstoffe enthaltende modifizierte Azulminsäuren mit einem Gehalt von 0,5 bis 55 Gew.-% an ionischen Gruppen der Formel

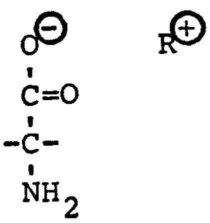

$(F_1)$

in welcher

R die oben angegebene Bedeutung hat,

und mit einem Gehalt von 0,5 bis 15 Gewichtsprozent an Gruppen der Formel

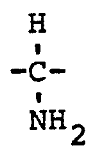

$(F_2)$

in wäßrigem Medium mit Basen umsetzt, gegebenenfalls das Kation durch Behandlung mit Metallsalzen austauscht und anschließend in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten niedermolekularen Kondensationsprodukten umgesetzt.

Als modifizierte Azulminsäuren kommen hierbei alle diejenigen fehlerstellenhaltigen Azulminsäuren in Frage, die auch bei der Durchführung des Verfahrens (1) als Ausgangstoffe eingesetzt werden können. Die Herstellung dieser bislang unbekannten Verbindungen wurde bereits im Zusammenhang mit dem Verfahren (1) ausführlich beschrieben.

Als Basen oder basische Salze kommen bei der Durchführung des erfindungsgemäßen Verfahrens (6) die verschiedensten anorganischen oder organischen Basen sowie basische Salze in Betracht. Vorzugsweise verwendbar sind Alkalimetallhydroxide, wie Lithiumhydroxid, Natriumhydroxid und Kaliumhydroxid, Alkalimetallcarbonate, wie Natriumcarbonat, Kaliumcarbonat und Kaliumhydrogencarbonat, Alkalimetallsulfide, wie Natriumsulfid, Kaliumsulfid und Kaliumhydrogensulfid, Alkalimetallthiosulfate, wie Natriumthiosulfat, Alkylamine, ferner Ammoniumhydroxid und Ammoniumsalze, wie Ammoniumpolysulfide.

Als Metallsalze kommen bei der Durchführung des Verfahrens (6) vorzugsweise alle diejenigen Metallsalze in Frage, die bereits im Zusammenhang mit der Beschreibung der Variante (e) des Verfahrens (A) vorzugsweise erwähnt wurden. Speziell genannt seien Eisen-II-acetat, Eisen-II-sulfat, Eisen-III-sulfat, Kupferacetat, Zinkacetat, Mangan-II-acetat, Cobaltchlorid, Zinkchlorid, Zinn-II-chlorid und Silbernitrat.

Ferner lassen sich bei dem Verfahren (6) auch alle diejenigen Zusatzstoffe, Aminoplastbildner, Carbonylverbindungen, frisch zubereitete niedermolekulare, gegebenenfalls chemisch modifizierte Kondensationsprodukte aus Aminoplastbildnern und Carbonylverbindungen, Kondensationskatalysatoren und Kettenabbrecher verwenden, die bei dem Verfahren (1) in Frage kommen.

Bei der Durchführung des Verfahrens (6) arbeitet man in wäßrigem Medium, vorzugsweise in Wasser. Es ist jedoch auch möglich, das Wasser partiell durch andere Verdünnungsmittel, wie Schwefelwasserstoff oder Alkohole zu ersetzen, wobei Methanol und Äthanol speziell genannt seien.

Die Reaktionstemperaturen können im Falle des Verfahrens (6) innerhalb eines größeren Bereiches variiert werden. Im allgemeinen arbeitet man in der ersten Stufe zunächst zwischen 50 °C und 120 °C, vorzugsweise zwischen 60 °C und 110 °C. Danach wird die Mischkondensation mit Aminoplastbildnern und Carbonylverbindungen bzw. deren frisch zubereiteten niedermolekularen, gegebenenfalls chemisch modifizierten Kondensationsprodukten bei den dazu üblichen Temperaturen vorgenommen. Im allgemeinen arbeitet man bei Temperaturen zwischen 0 °C und 200 °C, vorzugsweise zwischen 10 °C und 150 °C.

Die Umsetzung nach dem Verfahren (6) wird im allgemeinen unter Normaldruck ausgeführt. Es ist jedoch auch möglich, unter erhöhtem Druck zu arbeiten. Letzteres empfiehlt sich insbesondere dann, wenn Ammoniumhydroxid oder flüchtige Amine als Basen eingesetzt wurden.

Bei der Durchführung des Verfahrens (6) setzt man auf 1 Mol (bezogen auf die Moleküleinheit $NC-\overset{|}{\underset{|}{C}}-NH_2$ mit dem Äquivalentgewicht 54) an modifizierter Azulminsäure vorzugsweise 0,5 bis 4 Mol an Base oder basischem Salze, gegebenenfalls 1 bis 2 Mol an Metallsalz ein. Die Menge an Aminoplastbildnern, Carbonylverbindungen bzw. deren frisch zubereiteten gegebenenfalls chemisch modifizierten niedermolekularen Kondensationsprodukten wird so bemessen, daß jeweils 0,1 bis 5 Mol an Aminoplastbildner, Carbonylverbindung bzw. an deren gegebenenfalls chemisch modifizierten niedermolekularen Kondensationsprodukten pro Mol eingesetzter Azulminsäure vorhanden sind. Die Zusatzstoffe werden dem Reaktionsgemisch gegebenenfalls in einer solchen Menge zugesetzt, daß deren Anteil im Endprodukt zwischen 1 und 95 Gew.-%, vorzugsweise zwischen 5 und 90 Gew.-% liegt. Außerdem werden bei der Umsetzung der Azulminsäure mit Kondensationspartnern gegebenenfalls Kondensationskatalysatoren sowie Kettenabbrecher zugeben. Katalysatoren werden dabei gegebenenfalls in Mengen von 0,05 bis 10 Gew.-%, vorzugsweise von 0,1 bis 5 Gew.-%, bezogen auf die Gesamtmenge aller an der Polykondensation beteiligten Reaktionskomponenten, eingesetzt. Kettenabbrecher können in Mengen 0,5 bis 60 Gew.-%, bezogen auf die Gesamtmenge an Aminoplastbildnern und Carbonylverbindungen, verwendet werden.

Die praktische Durchführung des Verfahrens (6) erfolgt im allgemeinen in der Weise, daß man zunächst gegebenenfalls Zusatzstoffe enthaltende modifizierte Azulminsäuren in wäßrigem Medium mit Basen oder basischen Salzen verrührt, gegebenenfalls anschließend nach üblichen Methoden das Kation durch Behandlung mit Metallsalzen austauscht und gegebenenfalls ohne vorherige Isolierung der entstehenden Salze modifizierter Azulminsäuren mit Aminoplastbildner und Carbonylverbindung bzw. einer frisch zubereiteten wäßrigen Lösung von Aminoplastbildner und Carbonylverbindung (= Lösung teilalkylolierter bzw. teilmethylolierter Produkte) bzw. mit einer wäßrigen Lösung von noch löslichen Aminoplastkondensaten (z.B. Polyalkylol- bzw. Polymethylol-Verbindungen) versetzt, gegebenenfalls Zusatzstoffe, Modifizierungsreagenzien, Katalysatoren und Kettenabbrecher hinzufügt und die Kondensation vornimmt. Selbstverständlich können als Kondensationspartner auch Mischungen von verschiedenen Carbonylverbindungen und/oder Aminoplastbildnern fungieren. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet. Es ist jedoch auch möglich, die erhaltene Dispersion zunächst einzuengen, dann mit Alkohol, wie Methanol, zu versetzen, erneut unter vermindertem Druck einzuengen und nach mehrmaligem Wiederholen dieses Vorgangs das dabei anfallende Festprodukt abzufiltrieren, zu waschen und gegebenenfalls zu trocknen.

Bei dem Verfahren (7) werden gegebenenfalls Zusatzstoffe enthaltende modifizierte Azulminsäuren in wäßrigem Medium mit organischen oder anorganischen Säuren behandelt und anschließend in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten gegebenenfalls chemisch modifizierten Kondensationsprodukten umgesetzt.

Als modifizierte Azulminsäuren kommen hierbei alle diejenigen fehlerstellenhaltigen Azulminsäuren in Frage, die auch bei der Durchführung des Verfahrens (1) als Ausgangsstoffe eingesetzt werden können.

Als anorganische oder organische Säuren kommen vorzugsweise alle diejenigen Säuren in Frage, die bereits im Zusammenhang mit der Beschreibung der erfindungsgemäß verwendbaren Produkte vorzugsweise aufgezählt wurden.

Ferner lassen sich bei dem Verfahren (7) als Zusatzstoffe, Aminoplastbildner, Carbonylverbindungen, frisch zubereitete niedermolekulare gegebenenfalls chemisch modifizierte Kondensationsprodukte aus Aminoplastbildnern und Carbonylverbindungen, Kondensationskatalysatoren und Kettenabbrecher alle diejenigen Stoffe verwenden, die in diesem Zusammenhang für die jeweiligen Stoffe bereits bei dem Verfahren (1) genannt wurden.

Bei der Durchführung des Verfahrens (7) arbeitet man in wäßrigem Medium, vorzugsweise in Wasser.

Es ist jedoch auch möglich, das Wasser partiell durch andere Verdünnungsmittel, wie Alkohole zu ersetzen, wobei Methanol und Äthanol speziell genannt seien.

Die Reaktionstemperaturen können im Falle des Verfahrens (7) innerhalb eines größeren Bereiches variiert werden. Im allgemeinen führt man die Behandlung der modifizierten Azulminsäuren mit Säuren bei Temperaturen zwischen 0 °C und 200 °C, vorzugsweise zwischen 20 °C und 120 °C durch. Danach wird die Mischkondensation mit Aminoplastbildnern und Carbonylverbindungen bzw. deren frisch zubereiteten niedermolekularen, gegebenenfalls chemisch modifizierten Kondensationsprodukten bei den dazu üblichen Temperaturen vorgenommen. Im allgemeinen arbeitet man bei Temperaturen zwischen 0 °C und 200 °C, vorzugsweise zwischen 10 °C und 150 °C.

Die Umsetzung nach dem Verfahren (7) wird im allgemeinen unter Normaldruck ausgeführt. Es ist jedoch auch möglich, unter erhöhtem oder vermindertem Druck zu arbeiten.

Bei der Durchführung des Verfahrens (7) setzt man auf 1 Mol (bezogen auf die Moleküleinheit $NC{-}C{-}NH_2$ mit dem Äquivalentgewicht 54) an modifizierter Azulminsäure eine katalytische oder auch eine größere Menge, — vorzugsweise 1 bis 4 Mol —, an anorganischer oder organischer Säure ein. Die Menge an Aminoplastbildnern, Carbonylverbindungen bzw. deren frisch zubereiteten gegebenenfalls chemisch modifizierten niedermolekularen Kondensationsprodukten wird so bemessen, daß jeweils 0,1 bis 5 Mol an Aminoplastbildner, Carbonylverbindung bzw. an deren gegebenenfalls chemisch modifizierten niedermolekularen Kondensationsprodukten pro Mol eingesetzter Azulminsäure vorhanden sind. Die Zusatzstoffe werden dem Reaktionsgemisch gegebenenfalls in einer solchen Menge zugesetzt, daß deren Anteil im Endprodukt zwischen 1 und 95 Gew.-%, vorzugsweise zwischen 5 und 90 Gew.-% liegt. Außerdem werden bei der Umsetzung der Azulminsäure mit Kondensationspartnern gegebenenfalls Kondensationskatalysatoren sowie Kettenabbrecher zugegeben. Katalysatoren werden dabei gegebenenfalls in Mengen von 0,05 bis 10 Gew.-%, vorzugsweise von 0,1 bis 5 Gew.-%, bezogen auf die Gesamtmenge aller an der Polykondensation beteiligten Reaktionskomponenten, eingesetzt. Kettenabbrecher können in Mengen 0,5 bis 60 Gew.%, bezogen auf die Gesamtmenge an Aminoplastbildnern und Carbonylverbindungen, verwendet werden.

Die praktische Durchführung des Verfahrens (7) erfolgt im allgemeinen in der Weise, daß man zunächst gegebenenfalls Zusatzstoffe enthaltende modifizierte Azulminsäuren in wäßrigem Medium mit organischen oder anorganischen Säuren verrührt und anschließend gegebenenfalls ohne vorherige Isolierung der entstehenden Salze modifizierter Azulminsäuren mit Aminoplastbildner und Carbonylverbindung bzw. einer frisch zubereiteten wäßrigen Lösung von Aminoplastbildner und Carbonylverbindung (= Lösung teilalkylolierter bzw. teilmethylolierter Produkte) bzw. mit einer wäßrigen Lösung von noch löslichen Aminoplastkondensaten (z.B. Polyalkylol- bzw. Polymethylol-Verbindungen) versetzt, gegebenenfalls Zusatzstoffe, Modifizierungsreagenzien, Katalysatoren und Kettenabbrecher hinzufügt und die Kondensation vornimmt. Selbstverständlich können als Kondensationspartner auch Mischungen von verschiedenen Carbonylverbindungen und/oder Aminoplastbildnern fungieren. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet. In den so entstehenden Produkten gegebenenfalls noch vorhandene überschüssige Säure kann durch Begasung mit Ammoniak in das entsprechende Ammoniumsalz überführt werden, wobei die Umsetzung vorteilhafterweise in fester Phase im Wirbelbett ausgeführt wird.

Nach dem Verfahren (8) werden nahezu fehlerstellenfreie Azulminsäuren in Anwesenheit von hydrolytisch abbaubaren Naturstoffen in Gegenwart von Säure in wäßrigem Medium, gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten niedermolekularen Kondensationsprodukten umgesetzt.

Die bei dem Verfahren (8) als Ausgangsstoffe benötigten nahezu fehlerstellenfreien Azulminsäuren sind bekannt (vgl. Houben-Weyl, Band 8 (1952), Seite 261 ; DE-B 662 338 und DE-B 949 060.

Als hydrolytisch abbaubare Naturstoffe kommen bei dem Verfahren (8) alle diejenigen Naturstoffe pflanzlichen oder tierischen Ursprungs in Frage, die unter dem Einfluß von Säure ganz oder partiell abgebaut werden. Hierzu gehören vorzugsweise Cellulosen, Hemicellulosen, Zucker, Lignin, polymere Chinone, Holzpulver, pflanzliches Material, Proteine, Polypeptide wie Gelatine und Wolle, ferner Hefeproteine, Algenmassen und Torfmassen.

Als Säuren kommen alle ausreichend starken organischen oder anorganischen Säuren in Betracht. Vorzugsweise verwendbar sind Salpetersäure, Phosphorsäure und phosphorige Säure.

Ferner lassen sich bei dem Verfahren (8) als Aminoplastbildner, Carbonylverbindungen, frisch zubereitete niedermolekulare gegebenenfalls chemisch modifizierte Kondensationsprodukte aus Aminoplastbildnern und Carbonylverbindungen, Kondensationskatalysatoren und Kettenabbrecher alle diejenigen Stoffe verwenden, die in diesem Zusammenhang für die jeweiligen Stoffe bereits bei dem Verfahren (1) genannt wurden.

Bei der Durchführung des Verfahrens (8) arbeitet man in wäßrigem Medium, vorzugsweise in Wasser. Es ist jedoch auch möglich, das Wasser partiell durch andere Verdünnungsmittel, wie Alkohole zu ersetzen, wobei Methanol und Äthanol speziell genannt seien.

Die Reaktionstemperaturen können bei der Durchführung des Verfahrens (8) innerhalb eines größeren Bereiches variiert werden. Im allgemeinen arbeitet man bei Temperaturen zwischen 0 °C und

200 °C, vorzugsweise zwischen 10 °C und 150 °C.

Die Umsetzung nach dem Verfahren (8) wird im allgemeinen unter Normaldruck ausgeführt. Es ist jedoch auch möglich, unter erhöhtem oder vermindertem Druck zu arbeiten.

Bei der Durchführung des Verfahrens (8) setzt man auf 1 Mol (bezogen auf die Moleküleinheit NC—C—$NH_2$ mit dem Äquivalentgewicht 54) an Azulminsäure eine katalytische oder auch eine größere Menge, — vorzugsweise 1 bis 4 Mol —, an anorganischer oder organischer Säure ein. Die Menge an Aminoplastbildnern, Carbonylverbindungen bzw. deren frisch zubereiteten gegebenenfalls chemisch modifizierten niedermolekularen Kondensationsprodukten wird so bemessen, daß jeweils 0,1 bis 5 Mol an Aminoplastbildner, Carbonylverbindung bzw. an deren gegebenenfalls chemisch modifizierten niedermolekularen Kondensationsprodukten pro Mol eingesetzter Azulminsäure vorhanden sind. Die hydrolytisch abbaubaren Naturstoffe werden dem Reaktionsgemisch in einer solchen Menge zugesetzt, daß deren Anteil im Endprodukt zwischen 1 und 95 Gew.-%, vorzugsweise zwischen 5 und 90 Gew.-% liegt. Außerdem können dem Reaktionsgemisch auch zusätzliche Kondensationskatalysatoren sowie Kettenabbrecher zugegeben werden. Katalysatoren werden dabei gegebenenfalls in Mengen von 0,05 bis 10 Gew.-%, vorzugsweise von 0,1 bis 5 Gew.-%, bezogen auf die Gesamtmenge aller an der Polykondensation beteiligten Stoffe, eingesetzt. In der Regel fungiert die zum hydrolytischen Abbau von Naturstoffen verwendete Säure gleichzeitig als Kondensationskatalysator. Kettenabbrecher können in Mengen von 0,5 bis 60 Gew.-%, bezogen auf die Gesamtmenge an Aminoplastbildnern und Carbonylverbindungen, verwendet werden.

Bei der Durchführung des Verfahrens (8) erfolgt an der Azulminsäure eine Fehlerstellenerzeugung unter gleichzeitigem hydrolytischen Abbau der jeweiligen eingesetzten Naturstoffe und unter gleichzeitiger Stabilisierung der Azulminsäuren durch Kondensation mit Carbonylverbindungen und Aminoplastbildnern. Im Falle der Verwendung von 0,2 bis 80 %iger Phosphorsäure bzw. phosphoriger Säure und Polypeptiden werden letztere in Aminosäuregemische gespalten.

Die Azulminsäure bindet bei dem Verfahren (8) infolge ihrer zahlreichen Aminogruppen etwa 0,3 bis 0,4 Mol an Säure, z.B. Salpetersäure, Phosphorsäure bzw. phosphorige Säure, während die salpetersauren oder phosphorsauren Salze der Aminosäuren oder die der Oligopeptide, bzw. die anderen niedermolekularen Spaltprodukte der eingesetzten Naturstoffe, auch wenn sie wasserlöslich sind, oft in großer Menge von der Azulminsäure-Matrix fixiert werden.

Überschüssige Säure, z.B. Phosphorsäure, kann durch Zugabe von Calciumhydroxid als Calciumphosphat auf der Azulminsäure-Matrix gefällt werden. Sind hierbei hydrolysierte Zucker und Oligosaccharide vorhanden, so werden diese in Form ihrer meist schwer löslichen Calcium-Komplexe auf der Azulminsäure fixiert. Die nach diesem Verfahren erhaltenen Verfahrensprodukte können über längere Zeit gelagert werden, ohne daß eine unangenehme Geruchsbildung eintritt, wie es ansonsten der Fall ist, wenn Naturstoffe wie Oligopeptide, Peptid-Zuckergemische usw. durch mikrobiell eingeleitete biologische Prozeße abgebaut werden.

Die Isolierung der Verfahrensprodukte erfolgt nach üblichen Methoden, im allgemeinen durch Filtration.

Nach dem Verfahren (9) werden partiell oder vollständig mit Carbonylverbindungen stabilisierte, gegebenenfalls Zusatzstoffe enthaltende Azulminsäuren in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umsetzt.

Die bei dem Verfahren (9) als Ausgangsprodukte benötigten partiell oder vollständig mit Carbonylverbindungen stabilisierten, gegebenenfalls Zusatzstoffe enthaltenden Azulminsäuren sind bisher noch nicht bekannt. Sie lassen sich jedoch in einfacher Weise herstellen. So erhält man diese Produkte z.B. dadurch, daß man modifizierte Azulminsäuren, wie sie im Falle des Verfahrens (1) als Ausgangsstoffe beschrieben werden, mit Carbonylverbindungen gegebenenfalls in Gegenwart von Zusatzstoffen in wäßrigem Medium bei Temperaturen zwischen 20 °C und 150 °C, vorzugsweise zwischen 50 °C und 120 °C umsetzt. Als Carbonylverbindungen kommen hierbei vorzugsweise Aldehyde in Frage, wobei Formaldehyd, Acetaldehyd, Crotonaldehyd, Isobutyraldehyd, Glyoxal, Acrolein, Hydroxyacetaldehyd, Hydroxypivalinaldehyd, Glycerinaldehyd, Furfuryl, Chloral oder Chloralhydrat, Hydroxymethylfurfurol, Glucose, Methylglyoxal und Salicylaldehyd sowie als Formaldehyd abspaltendes Reagenz Hexamethylentetramin, Paraformaldehyd oder Trioxan speziell genannt seien. Als Zusatzstoffe können alle diejenigen Stoffe verwendet werden, die bereits bei der Beschreibung des Verfahrens (1) als Zusatzstoffe genannt wurden.

Unter partiell mit Carbonylverbindungen stabilisierten Azulminsäuren sind solche Azulminsäuren zu verstehen, in denen nur ein kleiner Teil der zur Verfügung stehenden reaktiven Gruppen der eingesetzten Azulminsäure mit Carbonylverbindungen reagiert hat. In Analogie dazu sind unter vollständig mit Carbonylverbindungen stabilisierten Azulminsäuren solche Azulminsäuren zu verstehen, in denen die zur Verfügung stehenden reaktiven Gruppen der Azulminsäure soweit wie möglich mit Carbonylverbindungen in Reaktion getreten sind.

Im allgemeinen verfährt man bei der Herstellung der partiell oder vollständig mit Carbonylverbindungen stabilisierten, gegebenenfalls Zusatzstoffe enthaltenden Azulminsäuren so, daß man auf 1 Mol (bezogen auf die Moleküleinheit NC—C—$NH_2$ mit dem Äquivalentgewicht 54) gegebenenfalls

Zusatzstoffe enthaltende modifizierte Azulminsäure 0,05 bis 6 Mol, vorzugsweise 0,2 bis 3 Mol an Carbonylverbindung, eine katalytische oder auch eine größere Menge an Säure oder Base (etwa 1 Mol Säure bzw. Base auf 100 Gewichtsteile Azulminsäure) einsetzt, sowie gegebenenfalls eine solche Menge an Zusatzstoffen einsetzt, daß deren Anteil im Endprodukt zwischen 1 und 95 Gewichtsprozent liegt. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet.

In diesem Zusammenhang sei darauf hingewiesen, daß häufig bereits sehr geringe Mengen an Carbonylverbindungen (0,05 bis 0,2 Mol) ausreichen, um Stoffe zu erhalten, die eine hohe thermische und hydrolytische Stabilität gegen Cyanwasserstoff-Abpsaltung besitzen.

Bei dem Verfahren (9) lassen sich als Zusatzstoffe, Aminoplastbildner, Carbonylverbindungen, frisch zubereitete niedermolekulare gegebenenfalls chemisch modifizierte Kondensationsprodukte aus Aminoplastbildnern und Carbonylverbindungen, als Kondensationskatalysatoren und Kettenabbrecher alle diejenigen Stoffe verwenden, die in diesem Zusammenhang für die jeweiligen Stoffe bereits bei dem Verfahren (1) genannt wurden.

Das Verfahren (9) wird in wäßrigem Medium durchgeführt, vorzugsweise dient Wasser als Reaktionsmedium. Es ist jedoch auch möglich, das Wasser partiell durch andere Verdünnungsmittel, wie Alkohole zu ersetzen, wobei Methanol und Äthanol genannt seien.

Die Reaktionstemperaturen können bei der Durchführung des Verfahrens (9) innerhalb eines größeren Bereiches variiert werden. Im allgemeinen arbeitet man bei Temperaturen zwischen 0 °C und 200 °C, vorzugsweise zwischen 10 °C und 150 °C.

Die Umsetzung nach dem Verfahren (9) wird im allgemeinen unter Normaldruck ausgeführt. Es ist jedoch auch möglich, unter erhöhtem oder vermindertem Druck zu arbeiten.

Bei der Durchführung des Verfahrens (9) setzt man auf 1 Mol (bezogen auf die Moleküleinheit $NC-\overset{|}{\underset{|}{C}}-NH_2$ mit dem Äquivalentgewicht 54) an partiell oder vollständig mit Carbonylverbindungen stabilisierter, gegebenenfalls Zusatzstoffe enthaltender Azulminsäure 0,1 bis 5 Mol an Aminoplastbildner, Carbonylverbindung bzw. an deren niedermolekularen gegebenenfalls chemisch modifizierten Kondensationsprodukten ein. Zusatzstoffe können dem Realtionsgemisch in einer solchen Menge zugefügt werden, daß deren Anteil im Endprodukt zwischen 1 und 95 Gew.-%, vorzugsweise zwischen 5 und 90 Gew.-% liegt. Außerdem werden bei der Umsetzung der Azulminsäure mit Kondensationspartnern gegebenenfalls Kondensationskatalysatoren sowie Kettenabbrecher zugegeben. Katalysatoren werden dabei gegebenenfalls in Mengen von 0,05 bis 10 Gew.-%, vorzugsweise von 0,1 bis 5 Gew.-%, bezogen auf die Gesamtmenge aller an der Polykondensation beteiligten Reaktionskomponenten, eingesetzt. Kettenabbrecher können in Mengen 0,5 bis 60 Gew.-%, bezogen auf die Gesamtmenge an Aminoplastbildnern und Carbonylverbindungen, verwendet werden.

Die praktische Durchführung des Verfahrens (9) erfolgt im allgemeinen in der Weise, daß man zunächst gegebenenfalls Zusatzstoffe enthaltende modifizierte Azulminsäure in wäßrigem Medium in Gegenwart einer katalytischen oder auch größeren Menge an Säure oder Base (etwa 1 Mol Säure oder Base auf 100 Gramm Azulminsäure) gegebenenfalls in Gegenwart von Zusatzstoffen partiell oder vollständig mit Carbonylverbindungen kondensiert und anschließend, gegebenenfalls ohne vorherige Isolierung der dabei entstehenden partiell oder vollständig mit Carbonylverbindungen stabilisierten Azulminsäuren mit Aminoplastbildnern und Carbonylverbindungen bzw. frisch zubereiteten wäßrigen Lösungen von noch löslichen Aminoplastkondensaten (z.B. Polyalkylol- bzw. Polymethylol-Verbindungen) versetzt, gegebenenfalls Zusatzstoffe, Modifizierungsreagenzien, Katalysatoren und Kettenabbrecher hinzufügt und die Kondensation vornimmt. Selbstverständlich können als Kondensationspartner auch Mischungen von verschiedenen Carbonylverbindungen und/oder Aminoplastbildnern fungieren. Die Aufarbeitung geschieht nach üblichen Methoden. Im allgemeinen verfährt man so, daß man das Reaktionsgemisch nach beendeter Umsetzung filtriert und das dabei erhaltene Festprodukt wäscht und trocknet.

In einer bevorzugten Variante führt man das Verfahren (9) so durch, daß man die eingesetzte Azulminsäure zunächst soweit mit einem Aldehyd, vorzugsweise mit Formaldehyd oder Glyoxal, umsetzt, daß pro 100 Gewichtsteile an Azulminsäure etwa 0,1 bis 0,4 $NH_2$-Gruppenäquivalente mit Aldehyd kondensiert sind, und danach die Mischkondensation vornimmt.

Nach dem Verfahren (10) werden thermisch vorbehandelte Blausäure-Polymerisate in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umgesetzt.

Unter den als Ausgangsprodukten für das Verfahren (10) benötigten thermisch vorbehandelten Blausäure-Polymerisaten sind solche Cyanwasserstoff-Polymerisate zu verstehen, die nach erfolgter Polymerisation auf 200 °C bis 550 °C erhitzt wurden. Hierbei spalten sich aus der Azulminsäure Cyanwasserstoff, Ammoniak, Kohlendioxid und Wasser ab und es verbleibt ein schwarzer Rückstand, der gegenüber der nicht thermisch vorbehandelten Azulminsäure einen geringeren Stickstoff-Gehalt aufweist. Derartige thermisch vorbehandelte Blausäure-Polymerisate sind bereits bekannt (vgl. Angew. Chem. *72,* 380 (1960)).

Ferner lassen sich bei dem Verfahren (10) aus Zusatzstoffe, Aminoplastbildner, Carbonylverbindungen, frisch zubereitete niedermolekulare gegebenenfalls chemisch modifizierte Kondensationsprodukte aus Aminoplastbildnern und Carbonylverbindungen, Kondensationskatalysatoren und Kettenabbrecher alle diejenigen Stoffe verwenden, die in diesem Zusammenhang für die jeweiligen Stoffe bereits bei dem Verfahren (1) genannt wurden.

Bei der Durchführung des Verfahrens (10) arbeitet man in wäßrigem Medium, vorzugsweise in Wasser. Es ist jedoch auch möglich, das Wasser partiell durch andere Verdünnungsmittel, wie Alkohole zu ersetzen, wobei Methanol und Äthanol speziell genannt seien.

Die Reaktionstemperaturen können im Falle des Verfahrens (10) innerhalb eines größeren Bereiches variiert werden. Im allgemeinen arbeitet man bei Temperaturen zwischen 0 °C und 200 °C, vorzugsweise zwischen 10 °C und 150 °C.

Die Umsetzung nach dem Verfahren (10) wird im allgemeinen unter Normaldruck ausgeführt. Es ist jedoch auch möglich, unter erhöhtem oder vermindertem Druck zu arbeiten.

Bei der Durchführung des Verfahrens (10) setzt man auf 1 Mol (bezogen auf die Moleküleinheit NC—C—$NH_2$ mit dem Äquivalentgewicht 54) an thermisch vorbehandeltem Blausäure-Polymerisat 0,1 bis 5 Mol an Aminoplastbildner, Carbonylverbindung bzw. an deren niedermolekularen gegebenenfalls chemisch modifizierten Kondensationsprodukten ein. Zusatzstoffe können dem Reaktionsgemisch in einer solchen Menge zugefügt werden, daß deren Anteil im Endprodukt zwischen 1 und 95 Gew.-%, vorzugsweise zwischen 5 und 90 Gew.-% liegt. Außerdem werden bei der Umsetzung der Azulminsäure mit Kondensationspartnern gegebenenfalls Kondensationskatalysatoren sowie Kettenabbrecher zugegeben. Katalysatoren werden dabei gegebenenfalls in Mengen von 0,05 bis 10 Gew.-%, vorzugsweise von 0,1 bis 5 Gew.-%, bezogen auf die Gesamtmenge aller an der Polykondensation beteiligten Reaktionskomponenten, eingesetzt. Kettenabbrecher können in Mengen 0,5 bis 60 Gew.-%, bezogen auf die Gesamtmenge an Aminoplastbildnern und Carbonylverbindungen, verwendet werden.

Die praktische Durchführung des Verfahrens (10) erfolgt im allgemeinen in der Weise, daß man thermisch gegebenenfalls im Wirbelbett vorbehandelte Blausäure-Polymerisate in wäßrigem Medium mit Aminoplastbildnern und Carbonylverbindungen bzw. frisch zubereiteten wäßrigen Lösungen von Aminoplastbildnern und Carbonylverbindungen (= Lösung teilalkylolierter bzw. teilmethylolierter Produkte) bzw. mit einer wäßrigen Lösung von noch löslichen Aminoplastkondensaten (z.B. Polyalkylol- bzw. Polymethylol-Verbindungen) versetzt, gegebenenfalls Zusatzstoffe, Modifizierungsreagenzien, Katalysatoren und Kettenabbrecher hinzufügt und die Kondensation vornimmt. Selbstverständlich können als Kondensationspartner auch Mischungen von verschiedenen Carbonylverbindungen und/oder Aminoplastbildnern fungieren. Die Aufarbeitung geschieht nach üblichen Methoden. Im allgemeinen verfährt man so, daß man das Reaktionsgemisch nach beendeter Umsetzung filtriert und das dabei erhaltene Festprodukt wäscht und trocknet.

Nach dem Verfahren (11) werden an der Oberfläche chemisch modifizierte, gegebenenfalls Zusatzstoffe enthaltende Azulminsäuren in wäßrigem Medium gegebenenfalls in Gegenwart von Zusatzstoffen und gegebenenfalls in Gegenwart von Katalysatoren sowie gegebenenfalls in Gegenwart von Kettenabbrechern mit Aminoplastbildnern und Carbonylverbindungen bzw. deren frisch zubereiteten, gegebenenfalls chemisch modifizierten Kondensationsprodukten umgesetzt.

Unter den als Ausgangsstoffe für das Verfahren (11) benötigten Stoffen sind solche Azulminsäuren zu verstehen, die durch topochemische Nachbehandlungen an ihrer Oberfläche geringfügig chemisch modifiziert sind. Derartige Stoffe sind bislang nicht bekannt. Sie lassen sich jedoch in einfacher Weise herstellen, indem man gegebenenfalls Zusatzstoffe enthaltende fehlerstellenhaltige, thermisch vorbehandelte oder nahezu fehlerstellenfreie Azulminsäuren gegebenenfalls in Gegenwart von Verdünnungsmitteln, wie z.B. wasserfreien organischen Lösungsmitteln, bei Temperaturen zwischen 0 °C und 150 °C, vorzugsweise zwischen 10 °C und 120 °C mit den verschiedensten Reagenzien behandelt bzw. den verschiedensten Reaktionen unterwirft. Als Nachbehandlungsreagenzien bzw. Nachbehandlungsreaktionen kommen vorzugsweise alle diejenigen Reagenzien bzw. Reaktionen in Betracht, die bereits im Zusammenhang mit der Beschreibung der erfindungsgemäß verwendbaren Produkte als derartige Nachbehandlungsreagenzien bzw. Nachbehandlungsreaktionen vorzugsweise genannt wurden.

Bei dem Verfahren (11) lassen sich als Zusatzstoffe, Aminoplastbildner, Carbonylverbindungen, frisch zubereitete niedermolekulare gegebenenfalls chemisch modifizierte Kondensationsprodukte aus Aminoplastbildnern und Carbonylverbindungen, Kondensationskatalysatoren und Kettenabbrecher alle diejenigen Stoffe verwenden, die in diesem Zusammenhang für die jeweiligen Stoffe bereits bei dem Verfahren (1) genannt wurden.

Bei der Durchführung des Verfahrens (11) arbeitet man in wäßrigem Medium, vorzugsweise in Wasser. Es ist jedoch auch möglich, das Wasser partiell durch andere Verdünnungsmittel, wie Alkohole zu ersetzen, wobei Methanol und Äthanol speziell genannt seien.

Die Reaktionstemperaturen können im Falle des Verfahrens (11) innerhalb eines größeren Bereiches variiert werden. Im allgemeinen arbeitet man bei Temperaturen zwischen 0 °C und 200 °C, vorzugsweise zwischen 10 °C und 150 °C.

Die Umsetzung nach dem Verfahren (11) wird im allgemeinen unter Normaldruck ausgeführt. Es ist jedoch auch möglich, unter erhöhtem oder vermindertem Druck zu arbeiten.

Bei der Durchführung des Verfahrens (11) setzt man auf 1 Mol (bezogen auf die Moleküleinheit

NC—C—NH₂ mit dem Äquivalentgewicht 54) an der Oberfläche chemisch modifizierter, gegebenenfalls Zusatzstoffe enthaltender Azulminsäure 0,1 bis 5 Mol an Aminoplastbildner, Carbonylverbindung bzw. an deren niedermolekularen gegebenenfalls chemisch modifizierten Kondensationsprodukten ein. Zusatzstoffe können dem Reaktionsgemisch in einer solchen Menge zugefügt werden, daß deren Anteil im Endprodukt zwischen 1 und 95 Gewichtsprozent, vorzugsweise zwischen 5 und 90 Gewichtsprozent liegt. Außerdem werden bei der Umsetzung der Azulminsäure mit Kondensationspartner gegebenenfalls Kondensationskatalysatoren sowie Kettenabbrecher zugegeben. Katalysatoren werden dabei gegebenenfalls in Mengen von 0,05 bis 10 Gew.-%, vorzugsweise von 0,1 bis 5 Gew.-%, bezogen auf die Gesamtmenge aller an der Polykondensation beteiligten Reaktionskomponenten, eingesetzt. Kettenabbrecher können in Mengen 0,5 bis 60 Gew.-%, bezogen auf die Gesamtmenge an Aminoplastbildnern und Carbonylverbindungen, verwendet werden.

Die praktische Durchführung des Verfahrens (11) erfolgt im allgemeinen in der Weise, daß man zunächst gegebenenfalls Zusatzstoffe enthaltende an der Oberfläche chemisch modifizierte Azulminsäuren in wäßrigem Medium mit Aminoplastbildnern und Carbonylverbindungen bzw. einer frisch zubereiteten wäßrigen Lösung von Aminoplastbildnern und Carbonylverbindung (= Lösung teilalkylolierter bzw. teilmethylolierter Produkte) bzw. mit einer wäßrigen Lösung von noch löslichen Aminoplastkondensaten (z.B. Polyalkylol- bzw. Polymethylol-Verbindungen) versetzt, gegebenenfalls Zusatzstoffe, Modifizierungsreagenzien, Katalysatoren und Kettenabbrecher hinzufügt und die Kondensation vornimmt. Selbstverständlich können als Kondensationspartner auch Mischungen von verschiedenen Carbonylverbindungen und/oder Aminoplastbildnern fungieren. Die Aufarbeitung erfolgt nach üblichen Methoden. Im allgemeinen verfährt man in der Weise, daß man das Reaktionsgemisch nach beendeter Umsetzung filtriert und das erhaltene Festprodukt gegebenenfalls wäscht und trocknet.

Sind in den nach den Verfahren (1) bis (11) hergestellten Produkten noch freie Aminogruppen vorhanden, so lassen sich diese Produkte durch Behandlung mit anorganischen oder organischen Säuren in die entsprechenden Säure-Additions-Salze überführen. Hierbei verfährt man in der Weise, daß man die Produkte in wäßrigem Medium gegebenenfalls bei erhöhter Temperatur mit der jeweiligen Säure verrührt. Die Reaktionsprodukte werden durch Filtration isoliert.

Sind in den nach den Verfahren (1) bis (11) hergestellten Produkten noch freie Carboxylgruppen vorhanden, so lassen sich diese Produkte durch Behandlung mit Basen in die entsprechenden Salze überführen. Hierbei verfährt man in der Weise, daß man die Produkte in wäßrigem Medium gegebenenfalls bei erhöhter Temperatur mit der jeweiligen Base verrührt. Die Reaktionsprodukte werden durch Filtration isoliert.

Die nach den Verfahren (1) bis (11) herstellbaren Produkte können an der Oberfläche chemisch modifiziert werden, indem man sie gegebenenfalls in Gegenwart von Verdünnungsmitteln, wie z.B. wasserfreien organischen Lösungsmitteln bei Temperaturen zwischen 0 °C und 150 °C, vorzugsweise zwischen 10 °C und 120 °C mit den verschiedensten Reagenzien behandelt bzw. den verschiedensten Reaktionen unterwirft.

Zur chemischen Modifizierung der Oberfläche der nach den Verfahren (1) bis (11) herstellbaren Mischkondensate kommen vorzugsweise in Betracht

— die Behandlung mit Harnstoffschmelzen (= Isocyansäurelieferant), Mono- oder Polyisocyanaten, wobei die Behandlung mit den letztgenannten Stoffen zu vernetzten, unlöslichen, Harnstoffgruppen enthaltenden Makropolyisocyanaten mit Isocyanat-Werten zwischen 0,5 und 3 Gew.-% an NCO führt;

— die Behandlung mit mit Acylierungsmitteln, wie Ameisensäure, Essigsäureanhydrid, Keten, Diketen, Buttersäureanhydrid, gemischten Säureanhydriden aus Essigsäure und Ölsäure, vorzugsweise in Gegenwart von Natrium- oder Kaliumacetat;

— die Behandlung mit cyclischen Säure-Anhydriden, wie Maleinsäureanhydrid, Phthalsäureanhydrid oder Hexahydrophthalsäureanhydrid;

— die Behandlung mit Schmelzen von Dicarbonsäuren, wie Adipinsäure, Phthalsäure, Hexahydrophthalsäure oder Trimellithsäure;

— die Behandlung mit anorganischen Säurechloriden, wie Chlorcyan, Phosgen, Thionylchlorid, Schwefelchloriden, Phosphoroxychlorid, Phosphorpentachlorid, Siliziumtetrachlorid, Antimontrichlorid oder Titantetrachlorid;

— die Behandlung mit organischen Säurechloriden, wie Acetylchlorid, Benzoylchlorid, Chlorameisensäureestern der Formel

$$R'-O-\underset{\underset{O}{\parallel}}{C}-Cl$$

in welcher

R' für Alkyl mit 1 bis 8 Kohlenstoffatomen steht, bifunktionellen Chlorameisensäureestern der Formel

$$Cl-\underset{\underset{O}{\parallel}}{C}-O-R''-O-\underset{\underset{O}{\parallel}}{C}-Cl$$

in welcher

R″ für Alkylen mit 2 bis 8 Kohlenstoffatomen steht, Benzolsulfonsäurechloriden, Phosphorsäureesterchloriden, Chlormethansulfochlorid oder Cyanursäurechlorid;

— die Behandlung mit Alkylierungsmitteln, wie Dimethylsulfat, Methyljodid oder Methylbromid,

— durch Behandlung mit Dichloräthan, Glykolchlorhydrin, Chloressigsäureäthylester, Dichloressigsäureäthylester, Chloracetaldehyd-di-äthylacetal, Allylchlorid, Benzyl-chlorid, Trichlormethylisocyaniddichlorid oder anderen Isocyaniddichloriden bzw. Alkylierungsreagentien;

— die Behandlung mit ε-Caprolactam, ε-Caprolacton, Hydroxypivalinsäurelacton, cyclischen 6-gliedrigen oder 8-gliedrigen Siloxanen, Azalactamen wie sie aus der DE-A 2 035 800 bekannt sind, Glykolcarbonat, Äthylenoxid, Propylenoxid, Butylenoxid, Styroloxid, Epichlorhydrin, Butyrolacton, Valerolacton, Oxazolidinen, Oxazolinen, Imidazolidinen, Isatosäureanhydrid oder Leuchsschen Anhydriden aus Aminosäuren und Phosgen;

— die Behandlung mit Acrylnitril oder anderen Vinylmonomeren, wie Acrylsäure, Methacrylsäure bzw. deren Methyl-, Äthyl-, β-Hydroxyäthyl- oder Propylestern;

— die Behandlung mit Alkoholen oder bifunktionellen Alkoholen, wie Äthylenglykol, Hexandiol oder Octandiol, unter den Bedingungen der Pinner-Reaktion (vorzugsweise in wasserfreier HCl und Alkoholen);

— die Behandlung mit Carbodiimiden, Isocyanatocarbodiimiden bzw. Polyisocyanatocarbodiimiden wie sie aus DE-A 2 504 334 und DE-A 2 504 400 bekannt sind, bzw. mit verkappten Carbodiimiden, den sogenannten Uretonimin-polyisocyanaten, ferner mit Mono- oder Biscyanaten bzw. Mono- oder Biscyanamiden;

— die Behandlung mit Hydroxy-alkanphosphonsäureestern bzw. den zugrunde liegenden Säuren, insbesondere mit Hydroxymethyl-phosphonsäureestern bzw. der freien Hydroxymethyl-phosphonsäure;

— die Behandlung mit Chlormethylalkoxysilanen, z.B. solchen der Formeln

$$Cl-CH_2-Si(-OC_2H_5)_3, \quad Cl-CH_2-\underset{CH_3}{Si}(-OC_2H_5)_2,$$

$$Cl-CH_2-\overset{CH_3}{\underset{CH_3}{Si}}(-OC_2H_5) \quad \text{bzw.}$$

$$Cl-CH_3-\overset{CH_3}{\underset{CH_3}{Si}}-O-\overset{CH_3}{\underset{CH_3}{Si}}-CH_2-Cl \quad \text{und} \quad Cl-CH_2-CH_2-CH_2-Si-(OC_2H_5)_3.$$

— Die Behandlung mit den verschiedensten Mono- oder Polynitrilen, bevorzugt Hydroxymethylnitril, unter den Bedingungen der durch Hydroxylanionen katalysierten Thorpe-Reaktion.

Die an der Oberfläche chemisch modifizierten erfindungsgemäßen Produkte können pro Mol Azulminsäure bis zu 0,06 Mol, vorzugsweise 0,01 bis 0,05 Mol, an der durch Oberflächenbehandlung eingeführten Gruppe enthalten.

Bei diesen Nachbehandlungsreaktionen können auch die verschiedensten Mischpolymerisationen oder Polymerisationen von Vinylmonomeren durchgeführt werden, wobei die Azulminsäure-Produkte durch die entstehenden Polymeren umhüllt bzw. mikroverkapselt werden. Hierbei können selbstverständlich die « Hüllmaterialien» auch in einem großen Überschuß eingesetzt werden.

In den Azulminsäuren, die bei den Verfahren als Ausgangsstoffe eingesetzt werden, kann gewünschtenfalls vor oder während der Umsetzung die Zahl der Fehlerstellen erhöht werden. Ferner kann auch nach beendeter Mischkondensation in den nach den Verfahren (1) bis (11) hergestellten Produkten gewünschtenfalls die Zahl der Fehlerstellen erhöht werden. Hierzu eignen sich alle diejenigen Verfahren, die bereits im Zusammenhang mit der Beschreibung der Herstellung der modifizierten, also fehlerstellenhaltigen Azulminsäuren aufgeführt wurden. Soll die Fehlerstellenerzeugung nach erfolgter Mischkondensation vorgenommen werden, so verfährt man in der Weise, daß man die Reaktionsprodukte

in wäßrigem Medium, gegebenenfalls bei erhöhten Temperaturen mit den zur Fehlerstellenerzeugung eingesetzten Reagenzien verrührt. Die Produkte werden durch Filtration isoliert.

Besonders erwähnt sei die Erzeugung von Fehlerstellen durch Metallsalze. Setzt man die Metallsalze bereits während der Kondensation zu, so können die erfindungsgemäß verwendbaren Produkte in einem Arbeitsgang komplexiert und je nach der Dauer der Mischkondensation mit einer mehr oder weniger großen Zahl von Fehlerstellen versehen werden.

Bevorzugt zur Fehlerstellenerzeugung geeignet sind ferner die verschiedensten, auch schwerlöslichen Calcium-Komplexe aus 3 Mol Calciumhydroxid und Rohrzucker, Glukose, wie auch lösliche Komplexe von isomeren Triosen, Tetrosen, Pentosen und Hexosen, sowie Calciumhydroxid-Komplexe von Formose-Zuckergemischen auf die Grundlage von Formaldehyd.

Eine weitere bevorzugte Variante der Fehlerstellenerzeugung in den erfindungsgemäß verwendbaren Produkten besteht darin, daß man bei der Durchführung des Verfahrens (3) zunächst pro 100 Gewichtsteilen an Rohazulminsäuren etwa 60 bis 180 Gewichtsteile an Harnstoff, Melamin oder Dicyandiamid in wäßriger Lösung vorlegt, bei 100 °C Azulminsäure dispergiert und durch Zugabe von Phosphorsäure bzw. Oxalsäure schwerlösliche Melaminphosphate oder Harnstoffoxalate erzeugt, die Fehlerstellenerzeugung nach ca. 4 Stunden unterbricht und anschließend die Mischkondensation bevorzugt mit Formaldehyd, Glyoxal, Acrolein, Isobutyraldehyd, Crotonaldehyd, Hydroxymethylfurfurol usw. durchführt.

Eine weitere bevorzugte Methode der Fehlerstellenerzeugung besteht darin, daß man oxidative Bedingungen einhält. Dies kann durch Zugabe kleiner Mengen oxidativ wirkender Substanzen, wie Wasserstoff peroxid, Perpropionsäure, Chlorlauge, Chlorkalk oder Kaliumpermanganat geschehen.

Eine weitere bevorzugte Methode zur Fehlerstellenerzeugung besteht darin, daß man die eingesetzten Azulminsäuren zunächst mit verschiedensten Flugaschen, Aschensorten verschiedener Provenienz bzw. kohlenstoffreichen Verbrennungsrückständen behandelt und anschließend die Mischkondensation vornimmt. Ferner können auch andere schwerlösliche oder unlösliche Trägerstoffe und Naturstoffe zur Fehlerstellenerzeugung verwendet werden. Die entstehenden Produkte eignen sich sehr gut als Langzeit-Düngemittel zur Versorgung von Pflanzen mit Makro- und/oder Mikronährstoffen.

Eine weitere bevorzugte Methode der Fehlerstellenerzeugung während oder nach erfolgter Mischkondensation besteht darin, daß man auf 100 Gramm Azulminsäure 100 bis 500 Gramm an etwa 30 %igen wäßrigen Natrium- oder Kaliumsilikat-Lösungen zugibt, wobei es in der Regel zweckmäßig ist, bei etwa 40 °C bis 100 °C mit Carbonylverbindung und Aminoplastbildner bzw. mit deren niedermolekularen frisch zubereiteten Kondensationsprodukten zu kondensieren, oder die Mischkondensate nachträglich mit den obengenannten Mengen an Alkalisilikaten umzusetzen. Hierbei entstehen in topochemischer Reaktion mit Kalium- bzw. Natriumionen beladene modifizierte Azulminsäuren, deren verseifbare Nitrilgruppen als latente Säuren (Katalysatoren) wirken und Kieselsäuren ausfällen. Die so ausgefällten Kieselsäuren ziehen in feiner Verteilung auf den Reaktionsprodukten auf. Eventuell vorhandenes überschüssiges Natrium-bzw. Kaliumsilikat kann durch einfaches Begasen der jeweiligen Dispersionen mit Kohlendioxid gefällt werden, oder in besonders vorteilhafter Weise durch Zugabe von Phosphorsäure oder Calciumchlorid in Mischung mit Kalium-bzw. Natriumphosphaten oder Calciumsilikaten ausgefällt werden.

Eine weitere bevorzugte Variante der Fehlerstellenerzeugung vor, während oder nach der Mischkondensation besteht darin, daß man einen großen Überschuß an Aminen mit funktionellen Gruppen anwendet. Besonders geeignete Amine sind hierbei Äthanolamin, Diäthanolamin, N-Methyläthanolamin, Triäthanolamin, entsprechende Propanolamine, außerdem Polyamine wie Diäthylentriamin, Triäthylentetramin, Tetramethylendiamin, Isophorondiamin, Oleylamin und Fettamine, ferner auch Aminosäuren wie z.B. Glyzin, Alanin, Asparagin und ε-Aminocapronsäure. Die hierbei entstehenden Produkte weisen eine besonders hohe Quellbarkeit auf. Werden zur Fehlerstellenerzeugung Fettamine eingesetzt, so entstehen erfindungsgemäße Produkte mit stark hydrophoben Eigenschaften.

Schließlich besteht eine weitere bevorzugte Methode der Fehlerstellenerzeugung in den erfindungsgemäß verwendbaren Produkten darin, daß man die Umsetzungen in Gegenwart von Natriumhydroxid, Kaliumhydroxid, Calciumhydroxid, Natriumsulfit, Natriumthiosulfat, Rongalit, Natriumsulfid, Ammoniumpolysulfiden, Diäthylphosphit, Dimethylphosphit oder Hydroxymethylphosphonsäure durchführt.

Bei der Herstellung der erfindungsgemäß verwendbaren Stoffe nach den Verfahren (1) bis (11) kann man auch so vorgehen, daß man im Anschluß an die Mischkondensation auf den erfindungsgemäßen Verfahrensprodukten in Form ihrer in Wasser unlöslichen Dispersionen nahezu beliebige Mengen an Polymethylenharnstoffen, Polyalkylidenharnstoffen und schwer- oder unlöslichen Verbindungen, d.h. hochvernetzte Aminoplastkondensate erzeugt, die mit den Verfahrensprodukten infolge ihrer Unlöslichkeit nicht in covalente Verknüpfung zur Azulminsäure treten. Derartige Mischungen, in denen der nicht covalent gebundenen Anteil an Aminoplastkondensaten praktisch beliebig sein kann, stellen insbesondere für den Fall der Beladung mit Polymethylenharnstoffen, Polymethylenthioharnstoffen, vernetzten Polymethylenmelaminpulvern, Harnstoff-Hydrazodicarbonamid-Formaldehydkondensaten und Dicyandiamid-, Oxamid-Kondensaten, Düngemittel mit Depotwirkung dar.

Weiterhin kommen bei den erfindungsgemäß verwendbaren Mischkondensaten als bevorzugte Zusatzstoffe auch Zucker, wie Rohrzucker und andere keine freien Aldehydgruppen aufweisenden Zucker, oder auch aus Formaldehyd hergestellte Formose-Zuckergemische in Frage. Diese verschiedensten Zuckerarten können in Kanälen und Poren der starren Azuliminsäurekörper fixiert werden. Darüber hinaus können die verschiedenen Zucker auch in Form ihrer meist schwer löslichen Calcium-Komplexe auf den Azulminsäuren aufziehen.

Ferner ist es möglich, die erfindungsgemäß vervendbaren Produkte nach ihrer Herstellung gleichzeitig mit Ammoniak und Kohlendioxid zu begasen. Dabei dringen Ammoniak und Kohlendioxid als kleine Moleküle in beträchtlichem Maße in das Azulminsäuregerüst ein. Man erhält z.B. bei der Begasung mit Ammoniak im Wirbelbett die instabilen Ammoniumcarbaminate, Ammoniumbicarbonate und, — sofern Ammoniak und Kohlendioxid in Abwesenheit von Wasser eingeleitet werden —, carbaminsaures Ammonium der Formel

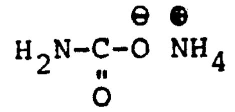

in den Kanälen der Azulminsäure-Mischkondensate fixiert. Das carbaminsäure Ammonium weist in dieser Form bei Raumtemperatur eine verminderte Zersetzlichkeit auf. Es steht den Pflanzen als Stickstoffdünger zur Verfügung.

Beim Einsatz der erfindungsgemäß verwendbaren Mischkondensate zur Pflanzendüngung ist es häufig von Vorteil, die Mischkondensate nach ihrer Herstellung mit Ammoniak, primären oder sekundären Aminen zu behandeln bzw. zu begasen, oder mit wäßrigen Ammoniak-Hydrazin-Lösungen, Hydrazinhydrat, Methylhydrazin oder wäßrigen Cyanidlösungen nachzuwaschen, um Spuren an Formaldehyd oder anderen Aldehyden oder Ketonen quantitativ zu entfernen. Bei der Einwirkung von Ammoniak werden zum Beispiel in den mit Formaldehyd kondensierten Produkten noch enthaltene kleine Menge an Formaldehyd in Hexamethylentetramin bzw. Hexahydrotriazine überführt. Oft empfiehlt es sich, eine Nachbehandlung mit 25 %iger wäßriger Ammoniak-Lösung vorzunehmen. Alle diese Reinigungsoperationen können technisch z.B. durch Begasung im Wirbelbett oder gekoppelt mit der Sprühtrocknung der Produkte durchgeführt werden.

Sind in den erfindungsgemäß verwendbaren Produkten nach ihrer Herstellung noch Katalysator-Reste vorhanden, so ist es häufig zweckmäßig, letztere auszuwaschen oder durch Umsetzung mit geeigneten Reagenzien chemisch zu desaktivieren. Wurden Säuren oder Basen als Katalysatoren verwendet, so empfiehlt es sich, diese durch Zugabe von Basen bzw. Säuren zu neutralisieren.

Die erfindungsgemäß verwendbaren Produkte sind nicht nur sehr beständig gegen Cyanwasserstoffabspaltung, sondern weisen auch eine wesentlich höhere Quellbarkeit auf als die vorbekannten nahezu fehlerstellenfreien Azulminsäuren. Sie eignen sich als agrochemische Mittel (= Agrochemikalien). Hierunter sind Mittel zu verstehen, die für die verschiedenartigsten Verwendungen in der Landwirtschaft und im Gartenbau in Frage kommen.

So eignen sich die erfindungsgemäß verwendbaren Stoffe z.B. als Düngemittel sowohl zur Versorgung von Pflanzen mit Mikronährstoffen als auch zur Versorgung von Pflanzen mit Makronährstoffen; insbesondere eignen sie sich als Düngemittel mit Langzeitwirkung. Von besonderem Interesse sind hierbei solche erfindungsgemäß verwendbaren Stoffe, die von Pflanzen benötigte Ionen, wie Ammonium-Ionen, Lithium-, Natrium-, Kalium-, Beryllium-, Magnesium-, Calcium-, Strontium-, Barium-, Aluminium-, Zink-, Mangan-, Nickel-, Kobalt- oder Eisen-Ionen enthalten.

Weiterhin von besonderem Interesse als Düngemittel sind solche erfindungsgemäß verwendbaren Stoffe, die Anionen, wie Chlorid, Nitrat, Sulfat und/oder Phosphat enthalten.

Besonders bevorzugt als Düngemittel sind solche erfindungsgemäß verwendbaren Stoffe, die mehrere der vorgenannten Ionensorten nebeneinander enthalten. Beispielhaft genannt seien Stoffe, die sowohl Kalium- und/oder Ammonium-Ionen als auch Nitrat- und/oder Phosphat-Ionen enthalten.

Von besonderem Interesse als Düngemittel sind außerdem solche erfindungsgemäß verwendbaren Stoffe, die gegebenenfalls neben Nährstoffionen auch organische Stoffe enthalten. Speziell genannt seien in diesem Zusammenhang Holzpulver, Ligninpulver, Ligninsulfonsäuren, ammonifizierte Ligninsulfonsäuren, Humus, Huminsäuren, ammonifizierte Huminsäuren, Torf, Proteine und der Abbauprodukte, z.B. Hydrolyseprodukte von Hefen, Algenmaterial (Alginate), Polypeptiden, wie Wolle und Gelatine, Fischmehl und Knochenmehl, ferner Aminosäuren, Oligopolypeptide, Pektine, Monosaccharide, wie Glucose und Fructose, Disaccharide, wie Saccharose, Oligosaccharide, Polysaccharide, wie Stärke und Cellulose, weiterhin Hemicellulosen, homogenisierte Materialien pflanzlichen und tierischen Ursprungs, Aktivkohlen sowie Aschen, die durch Partialoxidation, vollständige Oxidation oder Verbrennung organischer, durch Photosynthese gebildeter Stoffe oder üblicher Brennstoffe erhältlich sind, wobei Tannenasche, Ginsterasche, Asche von serbischen Fichten, Eichenasche, Birkenasche, Buchenasche, Weidenasche und Tabakblätter-Asche speziell genannt seien.

Bevorzugt verwendbar als Düngemittel sind außerdem solche erfindungsgemäß verwendbaren Stoffe, die gegebenenfalls neben Nährstoffionen auch handelsübliche Düngemittel enthalten. Speziell genannt seien in diesem Zusammenhang als derartige handelsübliche Düngemittel Superphosphat, Thomasschlacke, Rhenaniaphosphat, Phosphorit, Kalkstickstoff, Kalkammonsalpeter, Leunasalpeter, Kaliumphosphate, Kaliumnitrat und Ammoniumnitrat, ferner Harnstoff-Formaldehyd-Kondensate, Harnstoff-Crotonaldehyd-Kondensate, Harnstoff-Isobutyraldehyd-Kondensate sowie Kondensate aus Dicyandiamid, Melamin oder Oxamid mit Aldehyden, wie Formaldehyd, Acetaldehyd, Crotonaldehyd oder Isobutyraldehyd.

Bevorzugt verwendbar als Düngemittel sind auch solche erfindungsgemäß verwendbaren Stoffe, die gegebenenfalls neben Nährstoffen auch biologisch aktive Gartenerde enthalten.

Weiterhin eignen sich die erfindungsgemäß verwendbaren Stoffe als Bodenverbesserungmittel. Bevorzugt verwendbar sind zu diesem Zweck solche erfindungsgemäß verwendbaren Stoffe, die Holzpulver beziehungsweise pulverisiertes pflanzliches Material enthalten. Bevorzugt verwendbar als Bodenverbesserungsmittel sind auch solche Azulminsäuren, die zunächst partiell (nur etwa jede vierte Aminogruppe in statistischer Verteilung) mit Carbonylverbindungen, speziell Formaldehyd und Aminoplastbildnern, kondensiert wurden und dann in Gegenwart von Calciumhydroxid mit Formaldehyd umgesetzt werden. Unter diesen Bedingungen entstehen aus monomerem Formaldehyd sehr rasch in situ Glykolaldehyd ($C_2$-Aldehyd), Glyzerinaldehyd ($C_3$-Aldehyd) und weitere $C_4$-$C_7$-Hydroxyaldehyde, die mit verbleibenden Aminogruppen der Azulminsäuren unter Kondensationsreaktionen reagieren können und ebenfalls zu einer partiellen Stabilisierung der erfindungsgemäß verwendbaren Stoffe führen können. Aufgrund der Klebrigkeit der anfallenden beigemengten höhermolekularen karamelisierten Zucker können diese Produkte völlig formaldehydfrei sprühgetrocknet werden. Sie stellen braunschwarze, humusartige Stoffe mit krümliger Struktur dar, die einerseits als Bodenverbesserungsmittel, andererseits als Pflanzennährstoffe von Interesse sind. Die hierbei auf der Matrix aufziehenden Zuckergemische können mit relativ großen Mengen an Calciumhydroxid oder Magnesiumhydroxid komplexiert werden, wobei Zuckerkomplexe entstehen, wie sie z.B. von der Saccharose bekannt sind, wobei pro Mol Saccharose 3 Mol Calciumoxid gebunden werden. Die geringe Löslichkeit derartiger Komplexe erschwert in günstiger Weise die rasche Auswaschung der Zucker im Falle der Verwendung der erfindungsgemäß verwendbaren Azulminsäure-Formose-Calciumhydroxid-enthaltenden Stoffe bei ihrer Anwendung auf dem Agrarsektor.

Diejenigen erfindungsgemäß verwendbaren Stoffe, die einen hohen Gehalt an Fehlerstellen aufweisen, besitzen Polyelektrolytcharakter und können im Boden als Düngemittel mit Ionenaustauscher-Eigenschaften fungieren. Hierbei werden die von den Pflanzen benötigten Ionen, z.B. Kalium- und/oder Ammoniumionen an das Erdreich, beziehungsweise an das Substrat abgegeben, während andere Ionen gebunden werden.

Infolge der hohen Sorptionsfähigkeit und des guten Komplexbildungsvermögens können die erfindungsgemäß verwendbaren Stoffe auch zur Fixierung von Schadstoffen im Boden verwendet werden. So ist es zum Beispiel möglich, im Boden vorhandene unerwünschte Schwermetallionen, wie zum Beispiel Ionen des Bleis und des Quecksilbers mit Hilfe der erfindungsgemäßen Stoffe so fest zu binden, daß Pflanzenschädigungen nicht mehr zu befürchten sind. Ferner können auch Ölverunreinigungen Überdosierungen an Pflanzenschutzmitteln oder zu hohe Salzkonzentrationen in Substraten durch Zugabe erfindungsgemäß verwendbarer Stoffe beseitigt werden.

Erfindungsgemäß verwendbare Stoffe, die neben anderen Pflanzennährstoffen auch Torf enthalten, lassen sich durch Zusatz von Bindemitteln, wie Stärke, abgebauten Cellulosen, Alginaten und Pektinstoffen, in technisch einfacher Weise zur Herstellung von Torfpresstöpfen für den gärtnerischen Betrieb verwenden. Hierbei ist es zweckmäßig, daß der Volumenanteil an Weiß- und Schwarztorf im Substrat etwa 1 : 1 beträgt.

Erfindungsgemäß verwendbare Stoffe, die neben anderen Pflanzennährstoffen etwa 20 bis 40 % Gewichtsprozent an Torf enthalten, eignen sich auch gut zur Abdeckung für Böden und Substrate sowie Saatreihen, da durch die schwarze Farbe der erfindungsgemäßen Stoffe ein gutes erdiges Aussehen gewährleistet ist, Bodenverkrustungen verhindert werden und raschere Keimung in Saatreihen bewirkt wird.

Erfindungsgemäß verwendbare Stoffe, die Torf enthalten, eignen sich auch zur Verhinderung oder Abschwächung von Geruchsbildungen bei Verwesungsprozessen.

Erfindungsgemäß verwendbare Stoffe, die neben anderen Pflanzennährstoffen auch Torf enthalten, lassen sich durch Zusatz von Stärkeklebern, Hemicellulosen oder Alginaten in geformte, luftdurchlässige und Feuchtigkeit haltende Materialien überführen, die als Packmaterialien für den Pflanzentransport geeignet sind.

Erfindungsgemäß verwendbare Stoffe eignen sich auch zum Schutz von Pflanzen oder Pflanzenteilen gegen Schädlinge, wie zum Beispiel Raupen. Verwendet man beispielsweise eine Spritzbrühe auf Basis eines erfindungsgemäß verwendbaren Stoffes, der 4-12 Gewichtsprozent an Fehlerstellen der Formel

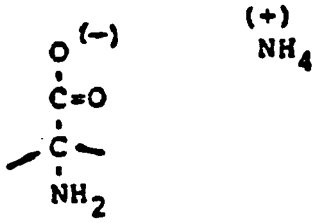

enthält, im Gemisch mit 10 Gewichtsprozent an karamelisierter Formose pro 100 Gewichtsprozent an erfindungsgemäßen Produkt zum Besprühen des Blattwerkes von Obstbäumen, so entsteht auf den Blättern eine haftende, klebrige Schicht, durch welche einerseits eine Schädigung der Blätter durch Schädlinge, wie zum Beispiel Raupen, vermindert wird und andererseits eine Blattdüngung erzielt wird.

Die erfindungsgemäßen verwendbaren Stoffe können als solche oder in ihren Formulierungen zur Versorgung von Pflanzen mit Nährstoffen bzw. als Bodenverbesserungsmittel eingesetzt werden.

Hierbei können die erfindungsgemäß verwendbare Stoffe in die üblichen Formulierungen übergeführt werden, wie Emulsionen, Spritzpulver, Suspensionen, Pulver, Stäubemittel, Schäume, Pasten, Granulate, Suspensions-Emulsions-konzentrate, Saatgutpuder, Wirkstoff-imprägnierte Natur- und synthetische Stoffe oder Feinstverkapselungen in polymeren Stoffen und in Hüllmassen für Saatgut.

Diese Formulierungen werden in bekannter Weise hergestellt, z.B. durch Vermischen der Wirkstoffe mit Streckmitteln, also flüssigen Lösungsmitteln, und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen infrage : Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser ;

als feste Trägerstoffe : natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate ; als feste Trägerstoffe für Granulate : gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel ; als Emulgier- und/oder schaumerzeugende Mittel : nichtionogene und anionische Emulgatoren, wie Polyoxyäthylen-Fettsäure-Ester, Polyoxyäthylen-Fettalkohol-Äther, z.B. Alkylaryl-polyglykol-äther, Alkylsulfonate, Alkylsulfate, Arylsulfonate sowie Eiweißhydrolysate ; als Dispergiermittel : z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäß verwendbaren Stoffe können in den Formulierungen in Mischung mit anderen Düngemitteln oder pestiziden Wirkstoffen vorliegen.

Die Wirkstoffe können beim Einsatz als Düngemittel bzw. als Bodenverbesserungsmittel sowohl in Form der Stoffe selbst als auch in Form ihrer Formulierungen oder der daraus bereiteten Anwendungsformen, wie gebrauchsfertige Emulsionen, Schäume, Suspensionen, Pulver, Pasten und Granulate angewendet werden. Die Anwendung geschieht nach den in der Landwirtschaft und im Gartenbau üblichen Methoden, also z.B. durch direktes Einbringen in den Boden, durch Gießen, Verspritzen, Versprühen, Verstreuen, Verstäuben usw. Als spezielle Applikationsarten seien genannt : Wurzelapplikation, Blattapplikation, Stamminjektion und Rindenapplikation. Bei der Wurzelapplikation kann der Dünger entweder mit dem Kultursubstrat vermischt oder auch in Bodenfurchen eingebracht werden. Ferner ist es möglich, den Dünger mit Hilfe einer Düngerlanze sowie durch Schlag- oder Bohrlöcher in den tieferen Wurzelbereich einzuführen. Die Blattapplikation erfolgt in der Regel dadurch, daß man die Pflanzen mit einer Düngemittelzubereitung besprüht oder Pflanzen bzw. Pflanzenteile in eine Düngemittelzubereitung eintaucht. Bei der Stamminjektion wird der Dünger durch Bohrlöcher an Baumstämmen oder Ästen direkt in die Pflanzen eingeführt. Rindenapplikationen können vorgenommen werden, indem man das kahle Holz mit der Düngemittelzubereitung bespritzt, oder auch indem man mit Nährstoffen imprägnierte Bänder z.B. aus Textil, Papier oder Schaumstoff auf Baumstämme oder Äste, gegebenenfalls nach teilweiser oder vollständiger Entfernung der Borken- bzw. Korkschicht in der Behandlungszone, auflegt. Auch ist eine Rindenapplikation mit Hilfe nährstoffhaltiger Pasten möglich.

Die eingesetzte Menge an erfindungsgemäß verwendbaren Stoffen kann in größeren Bereichen variiert werden. Bei einer Anwendung als Dünger, bzw. Bodenverbesserungsmittel hängt sie im wesentlichen ab von der Bodenart sowie vom Nährstoffbedarf der jeweiligen Pflanzen. Im allgemeinen liegen die Aufwandmengen an Wirkstoff zwischen 0,1 un 200 kg/ha, vorzugsweise zwischen 1 und 100 kg/ha. Werden die erfindungsgemäß verwendbaren Stoffe für andere Zwecke verwendet, wie zur Abdeckung von Substraten, zur Herstellung von Packmaterialien für Pflanzen, zum Schutz von Pflanzen oder Pflanzenteilen, zur Herstellung von Torfpresstöpfen oder zur Bindung von unerwünschten Geruchsstoffen, so ist die eingesetzte Menge an Wirkstoff dem jeweiligen Bedarf angepasst.

Die gute Wirksamkeit der erfindungsgemäß verwendbaren Stoffe als Düngemittel geht aus den nachfolgenden Beispielen hervor.

Präparate-Liste

Präparat (A) = durch primäre Formaldehyd- und anschließende Aminoplastmischkondensation mit Harnstoff und Isobutyraldehyd unter Polyalkylidenharnstoffbildung

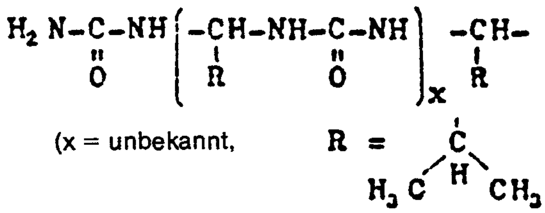

stabilisierte Azulminsäure

(x = unbekannt, )

Polyalkylidenpolyharnstoffanteil : 33,4 Gew.-%
Stickstoffgehalt : 35,6 %
Phosphorgehalt : 3,7 % (= ca. 11,6 Gew.-% an fixierter Phosphorsäure)

Präparat (B) = durch primäre Formaldehyd- und anschließende Aminoplastmischkondensation mit Harnstoff und Isobutyraldehyd stabilisierte Azulminsäure.
Polyalkylidenpolyharnstoffanteil : 43 Gew.-%
Stickstoffgehalt : 33,4 %
Phosphorgehalt : 2,5 % (= ca. 7,9 Gew.-% gebundene Phosphorsäure)

Präparat (C) = durch primäre Formaldehyd- und anschließende Aminoplastmischkondensation mit Harnstoff und Isobutyraldehyd stabilisierte Azulminsäure.
Polyalkylidenpolyharnstoffanteil : 55 Gew.-%
Stickstoffgehalt : 31,8 %
Phosphorgehalt : 2,6 % (= 8,2 Gew.-% gebundene Phosphorsäure)

Präparat (D) = durch Kondensation mit Hexamethylentetramin stabilisierte Azulminsäure.
Stickstoffgehalt : 39,9 %

Fehlerstellen-$F_1$-Gehalt = 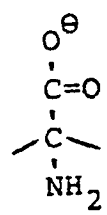 ca. 14,6 %

Beispiel A

Düngungsversuch/Gewächshaus
Versuchspflanze : Chrysanthemum indicum ;
Sorte : Yellow Delaware
Bodenart : Sandiger Lehmboden
Gefäß : Blumentöpfe mit 900 g Boden
Bodenfeuchte bei Kultur : etwa 70 % der maximalen Wasserkapazität bei 20 °C

Das Versuchspräparat wird in der jeweils gewünschten Menge auf die Bodenoberfläche gegeben. In verschiedenen Zeitabständen wird ausgewertet. Dabei wird jeweils das durchschnittliche Frischsubstanzgewicht und die Wuchshöhe der Pflanzen ermittelt.

Wirkstoff-Präparate, Aufwandmengen und Versuchsergebnisse gehen aus der folgenden Tabelle hervor.

Tabelle A
Düngungsversuch/Gewächshaus

| Präparat | mg N pro Gefäß | Durchschnittliche Wuchshöhe pro Pflanze in cm nach 1 Monate | nach 2 Monat | nach 3 Monate | nach 5 Monate | Durchschnittliches Frischsubstanzgewicht pro Pflanze in g |
|---|---|---|---|---|---|---|
| ohne Präparat (= Kontrolle) | 0 | 10,0 | 11,0 | 13,3 | 17,5 | 8,5 |
| C | 150 | 13,0 | 27,5 | 33,3 | 48,0 | 19,5 |
| | 375 | 11,0 | 31,3 | 43,5 | 67,0 | 24,5 |
| | 750 | 10,5 | 26,0 | 33,5 | 57,0 | 24,5 |
| B | 150 | 10,8 | 21,3 | 15,3 | 31,5 | 11,8 |
| | 375 | 15,0 | 25,8 | 29,3 | 39,8 | 16,3 |
| | 750 | 11,8 | 33,5 | 42,0 | 61,3 | 26,3 |
| A | 150 | 10,5 | 15,8 | 19,0 | 27,3 | 12,0 |
| | 375 | 12,3 | 29,5 | 35,3 | 48,0 | 19,5 |
| | 750 | 12,3 | 27,5 | 37,3 | 58,8 | 23,0 |

Beispiel B

Düngungsversuch/Gewächshaus
Versuchspflanze : Deutsches Weidelgras (Lolium perenne) 1,8 g pro Gefäß
Bodenart : neutraler sandiger Lehmboden mit Zumischung von 30 Vol.-% Düngetorf.
Gefäß : Plastikeimer, 5 kg Boden pro Gefäß.
Bodenfeuchte bei Kultur : etwa 70 % der maximalen Wasserkapazität bei 20 °C.

Jedes Gefäß wird zunächst mit einer Basisdüngung versetzt, und zwar werden pro Gefäß hinzugegeben :
0,9 g Phosphorpentoxid in Form von Thomasphosphat
1,5 g Kaliumoxid in Form von Kalimagnesia.

Danach wird das Versuchspräparat in der jeweils gewünschten Menge auf die Bodenoberfläche gegeben. In verschiedenen Zeitabständen wird ausgewertet. Dabei wird jeweils das durchschnittliche Frischgewicht eines jeden Grasschnittes ermittelt.

Wirkstoff-Präparate, Aufwandmengen und Versuchsergebnisse gehen aus der folgenden Tabelle hervor.

Tabelle B
Düngungsversuch/Gewächshaus

| Präparat | g N pro Gefäß | Durchschnittliches Frischgewicht pro Gefäß in g nach 1. Schnitt 3 Wochen | 2. Schnitt 2 Monate | 3. Schnitt 4 Monate | 4. Schnitt 6 Monate | 5. Schnitt 7 Monate | 6. Schnitt 8 Monate | Summe aller Schnitte |
|---|---|---|---|---|---|---|---|---|
| ohne Präparate (= Kontrolle) | 0 | 2,5 | 7,0 | 5,3 | 2,0 | 1,4 | 1,1 | 41,8 |
| C | 1 | 45,4 | 31,9 | 9,6 | 9,1 | 8,3 | 3,1 | 107,4 |
| | 1,5 | 44,6 | 32,0 | 10,7 | 11,1 | 25,6 | 17,4 | 141,4 |

Beispiel C

Düngungsversuch/Gewächshaus
Versuchspflanze : Deutsches Weidelgas (Lolium perenne) 1,8 g pro Gefäß
Bodenart : neutraler sandiger Lehmboden mit Zumischung von 30 Vol.-% Düngetorf
Gefäß : Plastikeimer, 5 kg Boden pro Gefäß
Bodenfeuchte bei Kultur : etwa 70 % der maximalen Wassertemperatur bei 20 °C.

Jedes Gefäß wird zunächst mit einer Basisdüngung versetzt, und zwar werden pro Gefäß hinzugegeben :
0,9 g Phosphorpentoxid in Form von Thomasphosphat
1,5 g Kaliumoxid in Form von Kalimagnesia.

Danach wird das Versuchspräparat in der jeweils gewünschten Menge auf die Bodenoberfläche gegeben. Zu verschiedenen Zeitabständen wird ausgewertet. Dabei wird jeweils das durchschnittliche Frischgewicht eines jeden Grasschnittes ermittelt.

Wirksstoff-Präparate, Aufwandmengen und Versuchsergebnisse gehen aus der folgenden Tabelle hervor :

Tabelle C
Düngungsversuch/Gewächshaus

| Präparat | g N pro Gefäß | Durchschnittliches Frischgewicht pro Gefäß in g ( ) = Tage nach Aussaat H = Herbst W = Winter F = Frühjahr | | | | | | | Aussehen der Pflanzen |
|---|---|---|---|---|---|---|---|---|---|
| | | 1. Schnitt (25) H | 2. Schnitt (50) H | 3. Schnitt (125) W | 4. Schnitt (175) F | 5. Schnitt (200) F | 6. Schnitt (225) F | Summe aller Schnitte | |
| D | 1,0 | 32,4 | 11,6 | 6,8 | 2,5 | 1,8 | 1,1 | 56,2 | Dunkelgrüne Blattfarbe gehemmtes Wachstum, ohne Schädigungen |

Beispiel 1

Vergleichsversuch : Polymerisation monomerer Blausäure in Gegenwart von Kaliumcyanat (vgl. Angew. Chem. *72*, (1960) Seite 380, Beispiel 4).

200 Gewichtsteile einer 30 %igen wäßrigen Blausäure-Lösung werden in Gegenwart von 1,08 Gewichtsteilen Kaliumcyanat 5 Stunden auf 40 bis 50 °C erwärmt. Das gebildete Produkte wird abfiltriert, nacheinander mit destilliertem Wasser und Äthanol gewaschen und anschließend bei 80 °C getrocknet. Man erhält Azulminsäure in Form eines schwarzen Pulvers in einer Ausbeute von 95 % der Theorie.

Elementaranalyse :
41,4 % C ; 4,0 % H ; 43,2 % N ; 11,4 % O

Aufgrund der angeführten Sauerstoffwerte kommt dieser Azulminsäure, deren Konstitution in etwa durch die auf Seite 2 dieser Anmeldung angegebenen Formel (I) (m = 4) charakterisiert wird, die Summenformel $C_{24}H_{28}O_5N_{22}$ zu (vgl. Angew. Chem. *72* (1960) Seite 383).

Dieses Polymerisat spaltet, auch nach sorgfältiger Langzeit-Trocknung bei Raumtemperatur oder bei 80 °C, fortlaufend kleine Mengen an monomerer Blausäure ab. Nachträgliches intensives Waschen und erneutes Trocknen selbst im Hochvakuum bringt die Blausäurerückspaltung nicht zum Stillstand.

Die Cyanwasserstoff-Bestimmung erfolgt nach üblichen Methoden.

Lagert man 2 000 g der Azulminsäure, die nach der oben angegebenen Methode hergestellt wurde, bei 50 °C in einem Behälter mit einem Luftvolumen von 12 Litern, so wird nach 2 Stunden eine Cyanwasserstoff-Konzentration von 0,066 g Cyanwasserstoff pro 12 Liter Luft gemessen. Danach errechnet sich ein Cyanwasserstoff-MAK-Wert (MAK = maximale Arbeitsplatz-Konzentration) von 4 583 ppm, also ein MAK-Wert, der 416-mal größer ist als der gesetzlich fastgelegte MAK-Wert von 11 ppm. Demnach ist eine derartige Azulminsäure für eine praktische Anwendung völlig unbrauchbar.

Behandelt man 10 Gewichtsteile der nach dem obigen Verfahren hergestellten Azulminsäure 3 Stunden lang bei 100 °C mit 100 Gewichtsteilen destilliertem Wasser und bestimmt dann im Filtrat die Cyanidionenkonzentration, so findet man eine Cyanidionenkonzentration, die einem Blausäure-Gehalt von 26 bis über 28 mg pro Liter Wasser entspricht. Derartige Cyanidionenkonzentrationen bewirken bereits Abtötungen und Desaktivierungen wichtiger im Boden vorkommender Bakterien und ihrer Enzymsysteme.

Beispiel 2

Vergleichsversuch : Polymerisation monomerer Blausäure nach dem « Zulaufverfahren » in Gegenwart von Ammoniak (vgl. DE-B 949 060).

Ein Gemisch aus 5 600 g Wasser, 1 400 g Blausäure und 88 g Ammoniak wird genau nach den im Beispiel 1 der DE-B 949 060 enthaltenen Angaben polymerisiert. Nach etwa fünfstündiger Polymerisationszeit bei 50 °C steigt die Innentemperatur nach dem Abstellen der Kühlung auf 90 °C, hält sich für etwa eine Stunde auf dieser Höhe und fällt dann ab. Die entstandene Azulminsäure wird isoliert, mit Wasser gewaschen und bei 80 °C getrocknet. Ausbeute 98 % der Theorie.

Thermische Stabilität :

Zweistündige Lagerung von 2 000 g der Azulminsäure bei 50 °C (vgl. Beispiel 1) : MAK-Wert über 5 000 ppm.

Hydrolytische Stabilität :

Dreistündige Behandlung von 10 Gewichtsteilen der Azulminsäure mit 100 Gewichtsteilen destilliertem Wasser bei 100 °C (vgl. Beispiel 1) : Blausäurekonzentration von 30 bis 36 mg pro Liter Wasser.

Beispiel 3

Vergleichsversuch : Behandlung von Azulminsäure gemäß Beispiel 1 mit Ketonen in Abwesenheit von Wasser.

Jeweils 108 g der gemäß Beispiel 1 hergestellten Azulminsäure (von den Endgruppen abgesehen entspricht diese Menge im Mittel 2 Grundmol an polymerisierten Aminocyancarben-Einheiten der Struktur

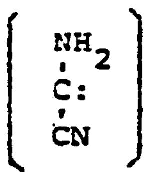

(Äquivalentgewicht = 54)

werden je 30 Stunden lang bei 120 °C mit 4 Mol eines der nachfolgend genannten wasserfreien Ketone sowie mit 4 Mol Xylol, das als Schleppmittel für Wasser fungiert, behandelt :

a) Cyclohexanon
b) Methyläthylketon
c) Diäthylketon
d) Methylisobutylketon

Neben geringfügiger Blausäureabspaltung unter Bildung von Cyanhydrinen (etwa 0,5 Gew.-%) findet in allen Fällen keine mit einer Wasserabspaltung verbundene Polyketimin-Bildung zwischen den Ketonen und den Aminogruppen der Azulminsäure statt. Kleine Mengen an Blausäure werden als Cyanhydrine abgefangen. Nach beendeter Behandlung isoliert man jeweils etwa 107 g an Azulminsäure, die gemäß Elementaranalyse eine praktisch unveränderte Zusammensetzung aufweist. Diese mit Ketonen behandelten Azulminsäure-Produkte sind nicht stabilisiert, sondern spalten bei Raumtemperatur wie auch bei 50 °C nach wie vor kleine Mengen an Blausäure ab. Auch stundenlanges Kochen der Azulminsäure mit Aceton unter fortlaufender Entfernung des Acetons führt nicht zu Polyketiminen oder zu substituierten, Aminalgruppen enthaltenden vernetzten Kondensationsprodukten.

Beispiel 4

Vergleichsversuch : Behandlung von Azulminsäure gemäß Beispiel 1 mit verschiedenen sehr reaktionsfähigen Reagentien in Abwesenheit von Wasser.

Jeweils 100 g der nach der im Beispiel 1 beschriebenen Methode hergestellten Azulminsäure werden je 6 Stunden lang bei Temperaturen zwischen 135 °C und 150 °C behandelt mit :

a) 2 Mol Hexamethylendiisocyanat
b) 2 Mol Toluylendiisocyanat, bestehend aus 80 Gew.-% 2,4-Toluylendiisocyanat und 20 Gew.-% 2,6-Toluylendiisocyanat
c) 6 Mol Harnstoff (als Harnstoffschmelze und Isocyansäurelieferant eingesetzt)
d) 6 Mol Essigsäureanhydrid in Gegenwart von 3 g Natriumacetat als Acylierungskatalysator
e) 3 Mol Dimethylsulfat
f) 4 Mol ε-Caprolactam
g) 4 Mol ε-Caprolacton
h) 4 Mol Phosgen in 500 ml o-Dichlorbenzol als Dispergiermittel für Azulminsäure
i) 5 Mol Glykolcarbonat
j) 0,4 Mol Styrol und 0,1 Mol Acrylnitril in 700 g Xylol als Dispergiermittel für Azulminsäure in

Gegenwart von Azoisobuttersäurenitril als Katalysator, wobei die Vinylmonomerenmischung aus einem auf 12 °C gekühlten Tropftrichter bei 120 °C in die in Xylol dispergierte Azulminsäure eingetropft wird.

k) 4 Mol Cl—$CH_2$—Si(—$OC_2H_5$)$_3$ in 600 g Xylol als Dispergiermittel für Azulminsäure.

Nach beendeter Umsetzung wird jeweils das Festprodukt abfiltriert, sogfältig mit Wasser gewaschen und getrocknet. Die Elementaranalysen der isolierten Produkte zeigen, daß sich die Werte für C, H, N, O, Cl oder S bzw. Si nur geringfügig von denjenigen der eingesetzten Azulminsäuren unterscheiden. Aus diesen Werten errechnet sich, daß in nahezu allen Fällen nicht mehr als 0,01 bis 0,03 Mol der Reaktionspartner mit den Aminogruppen der Azulminsäuren in Reaktionen getreten sein können.

Lediglich bei der Umsetzung (j) werden 138 g einer Azulminsäure-Mischpolymerisat-Mischung erhalten, in welcher im wesentlichen neben 100 g an Azulminsäure 38 g an Styrol-Acrylnitril-Mischpolymerisaten vorliegen, wobei ein eventuell vorhandener Pfropfungsanteil an Azulminsäure analytisch zur Zeit nicht ermittelt werden kann.

Die nach den Umsetzungen (a) bis (k) « oberflächenbehandelten » Azulminsäuren sind nicht stabilisiert, sondern spalten bei Lagerung bei Raumtemperatur bereits Blausäure ab.

## Beispiel 5

Ein Gemisch aus 100 g gemäß Beispiel 1 hergestellter Azulminsäure, 600 g Wasser und 0,5 g Kaliumcarbonat wird in einem Guß mit einer frisch hergestellten Lösung aus 1 Mol Dimethylolharnstoff in 300 g Wasser versetzt und 2 Stunden unter Rühren bei 100 °C mischkondensiert. Anschließend wird unter intensivem Rühren abgekühlt und mit 10 ml 80 %iger Phosphorsäure versetzt. Man führt die Kondensation bei Raumtemperatur zu Ende und arbeitet dann auf, indem man das Festprodukt abfiltriert und dieses nacheinander mit Wasser und 5 %iger wäßriger Ammoniak-Lösung wäscht. Nach dem Trocknen bei 60 °C im Vakuum erhält man 180 g eines Formaldehyd-freien Mischkondensates, das einen Stickstoffgehalt von 39,9 % und einen Phosphorgehalt von 1,5 % aufweist.

Das Verfahrensprodukt besitzt eine extrem hohe thermische Beständigkeit. Es spaltet weder bei Raumtemperatur nach bei 50 °C auch nur Spuren von Cyanwasserstoff ab. Selbst beim Erhitzen des Produktes auf 160 °C ist keine Blausäure nachweisbar. Auch in der Mutterlauge der Reaktionslösung ist monomere Blausäure nicht nachweisbar.

## Beispiel 6

Man verfährt so, wie es im Beispiel 5 angegeben ist, verwendet jedoch als zur Aminoplastbildung befähigte Verbindung 1 Mol Monomethylolharnstoff. Nach Aufarbeitung und Trocknung isoliert man 168 g eines Festproduktes mit einem Stickstoffgehalt von 37,8 % und einem Phosphorgehalt von 2,1 %.

Cyanwasserstoff-Abspaltungsrate bei 100 °C : praktisch = 0 ppm

## Beispiel 7

Jeweils 100 g der gemäß Beispiel 5 und 6 hergestellten Produkte werden bei Raumtemperatur 2 Stunden lang mit einem Überschuß von

a) Phosphorsäure
b) Salpetersäure

gerührt. Anschließend arbeitet man auf, indem man das jeweils anfallende Festprodukt abfiltriert und trocknet. Man erhält auf diese Weise Phosphorsäure- bzw. Salpetersäure-Additions-Salze der eingesetzten, mit Aminoplastbildnern stabilisierten Azulminsäure, also Verbindungen, in denen die jeweilige Säure über die noch freien Aminogruppe (= Ankergruppen) der stabilisierten Azulminsäuren an die polymere Matrix gebunden ist.

Im einzelnen erhält man die folgenden Verbindungen :

a) Addukt aus 100 g des Produktes gemäß Beispiel 5 und 0,12 Mol Phosphorsäure
b) Addukt aus 100 g des Produktes gemäß Beispiel 5 und 0,39 Mol Salpetersäure
c) Addukt aus 100 g des Produktes gemäß Beispiel 6 und 0,12 Mol Phosphorsäure
d) Addukt aus 100 g des Produktes gemäß Beispiel 6 und 0,39 Mol Salpetersäure

## Beispiel 8

Jeweils 100 g der gemäß Beispiel 1 hergestellten Azulminsäure werden nach der im Beispiel 5 beschriebenen Methode mit folgenden zur Aminoplastbildung befähigten Verbindungen eingesetzt :

a) 1 Mol Monomethylol-thioharnstoff
b) 0,5 Mol Dimethylol-äthylenharnstoff
c) 0,5 Mol Trimethylolmelamin

Nach dem Aufarbeiten und Trocknen erhält man :

a) 179 g Festprodukt
b) 163 g Festprodukt
c) 184 g Festprodukt

Die erhaltenen Mischkondensate (a) bis (c) sind gegenüber Cyanwasserstoffabspaltung sehr beständig. Sie spalten selbst beim Erhitzen auf 140 °C keine Blausäure ab.

Beispiel 9

a) 108 g (2 Grundmol) einer gemäß Beispiel 2 hergestellten Azulminsäure werden nach vorherigem Trocknen bei 80 °C in einer verschlossenen Rührapparatur mit 1 000 g destilliertem Wasser und 98 g (1 Mol) Phosphorsäure versetzt und auf 100 °C erhitzt. Man hält das Reaktionsgemisch 16 Stunden bei dieser Temperatur und leitet während dieser Zeit, in der an der Azulminsäure eine heterogene Hydrolyse bzw. eine partielle Entcyclisierung stattfindet, einen als Treibgas dienenden Stickstoffstrom mit einer Geschwindigkeit von etwa 50 ml pro Minute durch das Reaktionsgemisch. Der austretende Stickstoffstrom wird durch eine nachgeschaltete Waschflasche geleitet, die zur Bindung des im Stickstoffstrom enthaltenen Kohlendioxids mit 200 ml 1 n wäßriger Natronlauge beschickt ist. Im Abstand von 1 bis 3 Stunden wird die aus der Azulminsäure entbundene Menge an Kohlendioxid titrimetrisch bestimmt. In Parallelbestimmungen wird in den filtrierten Mutterlaugen des Ansatzes der durch Phosphorsäure gebundene Ammoniak-Anteil durch Zugabe von wäßriger Natronlauge in Freiheit gesetzt und titrimetrisch ermittelt. Nach 16-stündiger Reaktionsdauer beträgt die Gesamtmenge an Ammoniak, die durch hydrolytische Erzeugung von $F_1$-Fehlerstellen der Formel

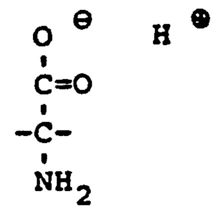

(Äquivalentgewicht 73)

entstanden ist, 6,4 g (~ 0,38 Mol). Die Gesamtmenge an Kohlendioxid, die durch Decarboxylierung von $F_1$-Fehlerstellen zu $F_2$-Fehlerstellen der Formel

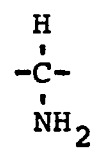

(Äquivalentgewicht 29)

entstanden ist, beträgt 4,3 g (0,1 Mol) (nach der Bariumcarbonat-Methode titrimetrisch ermittelt). Aus diesen Zahlen errechnet sich ein molarer $NH_3/CO_2$-Quotient von aufgerundet etwa 3,8. Dieser Zahlenwert besagt, daß von etwa 4 durch Entcyclisierung und Verseifung von Nitrilgruppen der Azulminsäure erzeugten Carboxylgruppen ($F_1$-Fehlerstellen) etwa eine decarboxyliert wird und damit zu einer $F_2$-Fehlerstelle führt.

Die Aufarbeitung geschieht in der Weise, daß man das feste Reaktionsprodukt abfiltriert, wäscht und trocknet. Man erhält 109 g einer $F_1$- und $F_2$-Fehlerstellen enthaltenden (modifizierten) Azulminsäure.

Aufgrund der Tatsache, daß die $F_2$-Fehlerstellen aus den $F_1$-Fehlerstellen entstanden sind, errechnet sich der $F_1$-Fehlerstellengehalt wie folgt:

0,38 Mol − 0,1 Mol = 0,28 Mol.

Bezieht man auf 100 g Einwaage, so läßt sich errechnen, daß 100 Gewichtsteile aus Verfahrensproduktes etwa 18,6 Gewichtsprozent an $F_1$-Fehlerstellen enthalten.

Die gefundene Molzahl an Kohlendioxid gibt an, daß pro Einwaage 0,1 Mol an $F_2$-Fehlerstellen enthalten sind. Bezieht man auf 100 g Einwaage, so läßt sich errechnen, daß 100 Gewichtsteile des Verfahrensproduktes etwa 2,67 Gewichtsprozent an $F_2$-Fehlerstellen enthalten.

Die Summe an $F_1$- und $F_2$-Fehlerstellen beträgt 21,3 Gew.-%

Wie sich aus der Elementaranalyse ergibt, enthält die modifizierte Azulminsäure etwa 9,8 Gewichtsprozent an Phosphorsäure. Diese Phosphorsäure ist über die freien Amino-Gruppen (Ankergruppen) der modifizierten Azulminsäure an die polymere Matrix gebunden.

b) Ein Gemisch aus 100 g der nach der unter (a) beschriebenen Methode hergestellten modifizierten Azulminsäure, 400 g Wasser und 0,5 g Kaliumcarbonat wird in einem Guß mit einer frisch hergestellten Lösung aus 1 Mol Monomethylol-harnstoff in 300 g Wasser versetzt und 2 Stunden unter Rühren bei 100 °C mischkondensiert. Anschließend wird unter intensivem Rühren abgekühlt und mit 10 ml 80 %iger Phosphorsäure versetzt. Man führt die Kondensation bei Raumtemperatur zu Ende und arbeitet dann auf, indem man das Festprodukt abfiltriert und dieses nacheinander mit Wasser und 5 %iger wäßriger Ammoniak-Lösung wäscht. Nach dem Trocknen bei 60 °C im Vakuum gewinnt man 169 g eines Mischkondensates, das einen Stickstoffgehalt von 38,4 % und einen Phosphorgehalt von 2,5 % aufweist.

Das Verfahrensprodukt ist gegenüber thermischer und hydrolytischer Cyanwasserstoff-Abspaltung

extrem stabil. Der Cyanwasserstoff-Abspaltungswert beträgt auch dann, wenn er unter sehr ungünstigen Bedingungen (kleines Luftvolumen) gemessen wird, praktisch 0 ppm.

Beispiel 10

a) 4 Liter 20 %ige wäßrige Blausäure, 200 ml etwa 25 %ige wäßrige Ammoniak-Lösung und 40 g Natriumcyanat werden zusammengerührt. Dieses Reaktionsgemisch wird im Verlauf von 2 Stunden auf 90 °C aufgeheizt. Danach rührt man unter Ansnutzung des Blausäure-Rückflusses bei Verwendung eines gut wirksamen Rückflußkühlers weitere 30 Minuten bei 90 °C, destilliert dann 500 ml Wasser und eine geringe Menge an Blausäure ab und fügt erneut 500 ml Wasser hinzu. Anschließend wird 5 Stunden bei 100 °C gerührt. Das dabei anfallende, ausgezeichnet filtrierbare schwarze Verfahrensprodukt wird abgesaugt, nacheinander mit etwa 4 Litern Wasser und mit Methanol gewaschen und unter vermindertem Druck getrocknet.

Ausbeute : 845 g an $F_1$- und $F_2$-Fehlerstellen enthaltender Azulminsäure.

Fehlerstellengehalt : etwa 11 Gew.-%.

Elementaranalyse :

38,2 % C ; 4,9 % H ; 38,8 % N ; 18,9 % O.

Wie aus diesen Werten zu entnehmen ist, bezitzt das Produkt einen höheren Sauerstoffgehalt und einen niedrigeren Stickstoffgehalt als die gemäß Beispiel 1 hergestellte Azulminsäure. Dies zeigt an, daß in dem erfindungsgemäßen Produkt ein großer Teil an Fehlerstellen ($F_1$ und $F_2$) enthalten ist.

b) 100 g der nach der unter (a) beschriebenen Methode hergestellten modifizierten Azulminsäure werden nach der im Beispiel 5 angegebenen Methode mit 1 mol Monomethylol-harnstoff kondensiert. Nach Aufarbeitung und Trocknung werden 167 g eines Festproduktes isoliert, das gegenüber Blausäurerückspaltung sehr stabil ist.

Bei der Durchführung der unter (b) beschriebenen Umsetzung sowie bei der Durchführung analoger Umsetzungen (z.B. Umsetzung von je 100 g fehlerstellhaltiger Azulminsäure mit 0,4 Mol Trimethylolmelamin bzw. 0,4 Mol Hexamethylolmelamin) wurde festgestellt, daß der Gehalt an $F_1$ und $F_2$-Fehlerstellen in der Azulminsäure im Verlauf der Mischkondensation gesteigert wird. Somit lassen sich Fehlerstellenerzeugung und stabilisierende Aminoplast-Mischkondensationen nebeneinander durchführen. Es ist jedoch auch möglich, die Fehlerstellenerzeugung vor der Stabilisierung oder nach der Mischkondensation durchzuführen.

Beispiel 11

a) Ein Gemisch aus 200 g einer relativ fehlerstellenarmen Azulminsäure (Zusammensetzung 40,6 % C ; 4,1 % H ; 42,4 % N ; 12,8 % O) und 800 g einer 25 %igen wäßrigen Ammoniak-Lösung wird 8 Stunden bei 25 bis 31 °C gerührt. Anschließend wird das schwarze Pulver abgesaugt, mit 5 Litern Wasser gewaschen und bei Raumtemperatur im Vakuum-Trockenschrank getrocknet.

Ausbeute : 215 g einer modifizierten Azulminsäure, die etwa 6 bis 7 Gew.-% an $F_1$-Fehlerstellen gebundenes Ammoniak enthält. Derartige abgewandelte $F_1$-Fehlerstellen lassen sich formelmäßig wie folgt veranschaulichen :

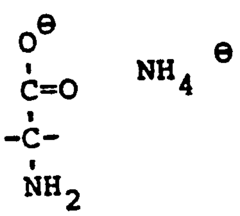

Elementaranalyse :

37,6 % C ; 4,8 % H ; 38,5 % N ; 19,4 % O.

Trocknet man das Verfahrensprodukt nicht bei Raumtemperatur, sondern bei höheren Temperaturen, so wird leicht Ammoniak abgespalten.

b) 100 g der gemäß 11 (a) hergestellten, ammoniakhaltigen modifizierten Azulminsäure werden nach der im Beispiel 5 angegebenen Methode mit 1 Mol Monomethylolharnstoff mischkondensiert. In dem anfallenden Produkt eventuell noch vorhandene Spuren an Formaldehyd lassen sich durch Behandlung des Produktes mit 25 %iger wäßriger Ammoniaklösung als lösliches Hexamethylentetramin binden. Gleichzeitig werden durch diese Maßnahme weitere 1-3 Gew.-% an $F_1$-Fehlerstellen der Formel

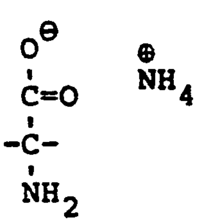

eingeführt.

Nach Aufarbeitung und schonender Trocknung erhält man ein Fesprodukt, das bei Temperaturen bis zu 60 °C nicht zur Cyanwasserstoffabspaltung neigt.

Über einen Teil dieses Verfahrensproduktes wird bei 50 °C vier Stunden lang ein Stickstoffstrom mit einer Strömungsgeschwindigkeit von 100 ml Stickstoff pro Minute gleitet. In dem aufgefangenen Gas läßt sich analytisch kein Cyanwasserstoff nachweisen (Cyanwasserstoff-Konzentration = 0 ppm).

Das Verfahrensprodukt spaltet sowohl hydrolytisch als auch thermisch leicht Ammoniak ab. So wird bei 50 °C in einer Stunde bereits ein Anteil von 1,43 Gewichtsprozent an Ammoniak in Freiheit gesetzt.

Begast man das Verfahrensprodukt, das schwach nach Ammoniak riecht, in feuchtem Zustand mit Kohlendioxid, so erhält man ein praktisch geruchloses Pulver. Restspuren von Ammoniak werden hierbei in Ammoniumcarbonat übergeführt.

Beispiel 12

a) Ein Gemisch aus 108 g einer gemäß DT-PS 949 060 frisch hergestellten modifizierten Azulminsäure und 1 000 ml einer 1 n wäßrigen Kalilauge wird 44 Stunden auf 100 °C erwärmt. Dabei tritt schon wenige Minuten nach Beginn der Umsetzung eine vollständige Lösung der eingesetzten Azulminsäure ein.

Das Fortschreiten der Verseifungsreaktion wird durch Messung der entbundenen Mengen an Ammoniak und Kohlendioxid kontrolliert. Die freigesetzte Menge an Ammoniak beträgt
nach 8 Stunden 12,2 g
nach 22 Stunden 15 g
nach 44 Stunden 17 g (= 1 Mol).

In einem unter genau gleichen Bedingungen durchgeführten Parallelversuch wird durch Ansäuern des Reaktionsgemisches mit 2 Mol wäßriger Salzsäure ermittelt, daß etwa 21,9 g (= 0,5 Mol) Kohlendioxid als Kaliumcarbonat in der Lösung gebunden waren.

Die Aufarbeitung erfolgt dadurch, daß man die braunschwarze wäßrige Reaktionslösung bei 14 Torr einengt, die dabei entstehende braunschwarze Dispersion dreimal mit je 1 Liter Methanol versetzt, jeweils durch Abdestillieren des Methanols sowie des noch vorhandenen Wassers einengt, dann das verbleibende Kristallisat noch einmal mit 800 ml Methanol kurz aufkocht und filtriert. Man erhält 113 g eines wasserlöslichen Produktes von humusartiger Farbe.

Elementaranalyse :

31,5 % C ; 3,9 % H ; 26,8 % N ; 21,0 % O ; 16,1 % K.

Aus den gemessenen Mengen an freigesetztem Ammoniak und Kohlendioxid ergibt sich ein molarer $NH_3/CO_2$-Quotient von 2.

Die Differenz aus den ermittelten Ammoniak- und Kohlendioxid-Molzahlen beträgt etwa 0,5. Dieser Faktor besagt, daß etwa die Hälfte aller $F_1$-Fehlerstellen in $F_2$-Fehlerstellen übergegangen sind.

Auf Basis dieser Zahlen errechnet sich, daß 100 Gew.-Teile des Verfahrensproduktes etwa 55 Gew.-% an Kaliumsalz-$F_1$-Fehlerstellen der Konstitution

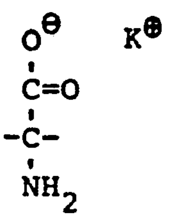

und etwa 14,5 Gew.-% an $F_2$-Fehlerstellen enthalten. Bei dieser Methode der Fehlerstellenerzeugung ist demnach auf 2 cyclische Einheiten der Azulminsäure jeweils eine Kaliumsalz-$F_1$-Fehlerstelle obiger Konstitution entstanden. Ein derartiges Produkt läßt sich in idealisierter Darstellung durch die folgende Formel veranschaulichen :

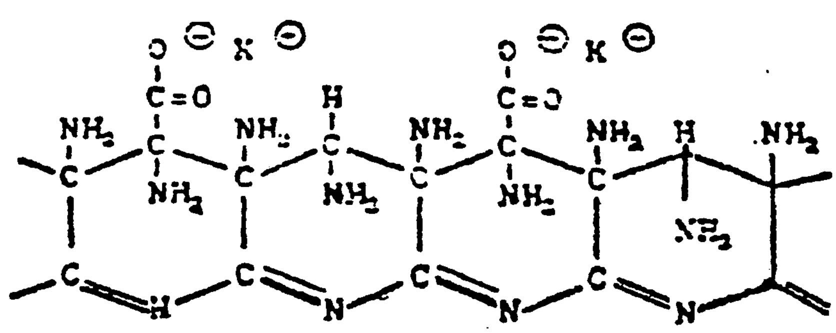

b) 100 g des gemäß 12 (a) hergestellten Azulminsäure-Kaliumsalzes werden nach der im Beispiel 5 angegebenen Methode mit 1,4 Mol Monomethylolharnstoff mischkondensiert. Anschließend wird das Produkt nicht durch Filtration isoliert, sondern in eine Blechschale gegeben und bei 60 °C im Vakuumtrockenschrank vom enthaltenen Wasser befreit. Man erhält auf diese Weise 200 g eines krümeligen Mischkondensates, das zur Entfernung von Spuren an Formaldehyd mit Ammoniak-Gas behandelt wird.

Gemäß Elementaranalyse enthält das Produkt 29,4 % Stickstoff und 7,9 % Kalium.

c) In analoger Weise werden aus jeweils 100 g gemäß 12(a) hergestellter Azulminsäure-Salze durch Umsetzung mit Monomethylolharnstoff Mischkondensate hergestellt.

Azulminsäure-Lithiumsalz-Mischkondensat:
Ausbeute: 195 g.
Azulminsäure-Natriumsalz-Mischkondensat:
Ausbeute: 198 g.

Die so hergestellten Produkte besitzen Polyelektrolytcharakter. Insbesondere das Azulminsäure-Kaliumsalz-Mischkondensat eignet sich als Dünger, und zwar zur Versorgung von Pflanzen mit Stickstoff und Kalium.

## Beispiel 13

Zunächst werden Lösungen frisch zubereitet, indem man jeweils 1 Mol Harnstoff in 200 ml Wasser bei einem pH-Wert von 6,2 bis 6,5 und bei einer Temperatur von 40 °C mit jeweils 1 Mol eines der nachstehend angegebenen Aldehyde vermischt:

a) Glyoxal
b) Acetaldehyd
c) Propionaldehyd
d) Isobutyraldehyd
e) Hydroxypivalinaldehyd
f) Acrolein
g) Salicylaldehyd
h) Furfurol
i) ω-Hydroxymethylfurfurol

Die dabei entstehenden Lösungen, in denen N-alkylolgruppenreiche und N-alkylolgruppenfreie niedermolekulare Oligokondensate vorliegen, werden anschließend nach der im Beispiel 5 angegebenen Methode mit jeweils 100 g gemäß Beispiel 1 hergestellter Azulminsäure umgesetzt, wobei jedoch nicht bei 100 °C, sondern bei 45 °C kondensiert wird. Nach Aufarbeitung und Trocknung werden gegenüber Blausäurerückspaltung stabile Produkte erhalten. Im einzelnen werden folgende Mengen an Verfahrensprodukten isoliert:

a) 173 g
b) 143 g
c) 148 g
d) 151 g
e) 177 g
f) 174 g
g) 183 g
h) 192 g
i) 205 g

Bei der Lagerung der Verfahrensprodukte über längere Zeit bei Temperaturen zwischen 20 °C und 40 °C wird ermittelt, daß die unter (a) bis (i) aufgeführten Verfahrensprodukte gegen Blausäureabspaltung völlig stabil sind. Blausäure-Abspaltungsrate: 0 ppm.

## Beispiel 14

Zunächst werden aus einem in neutralem Wasser sehr wenig löslichen Mischkondensat aus 2 Mol Harnstoff und 1 Mol Crotonaldehyd (= weißes Pulver), das in Wasser mit katalytischen Mengen an Phosphorsäure hergestellt wurde und dem überwiegend die Konstitution

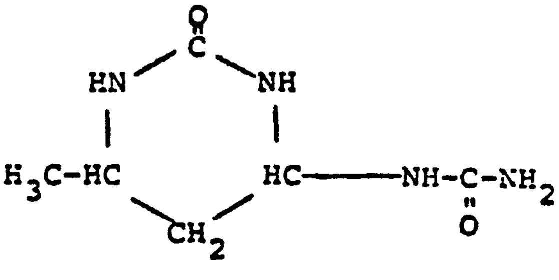

zukommt, mit Formaldehyd N-Polymethylolverbindungen hergestellt, indem man 0,5 Mol obiger Verbindung in 250 g 30 %iger Formalinlösung in Gegenwart von 0,5 g Kaliumcarbonat 30 Minuten auf 50-60 °C erhitzt. Dabei geht die Substanz unter Bildung von Tri- und Tetramethylolverbindungen, die mit freiem Formaldehyd im Gleichgewicht stehen, in Lösung. Anschließend kondensiert man nach der im Beispiel 5 angegebenen Methode mit 100 g gemäß Beispiel 1 hergestellter Azulminsäure. Nach Aufarbeitung und Trocknung erhält man 190 g eines Mischkondensates, das bei Temperaturen bis zu 100 °C gegenüber Blausäurerückspaltung völlig stabil ist.

Gemäß Elementaranalyse enthält das Produkt 34,8 % Stickstoff und 1,4 % Phosphor.

## Beispiel 15

a) Zunächst werden 2,7 Liter einer 19,2 Gew.-%igen wäßrigen Blausäure-Lösung mit 500 g einer aus 2 Mol Harnstoff und 1 Mol Crotonaldehyd durch Kondensation hergestellten Substanz der Formel

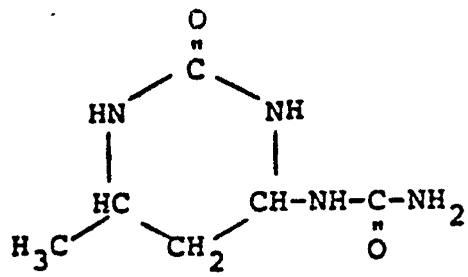

zu einer Dispersion verrührt. Anschließend werden unter intensivem Rühren 135 g einer 24 %igen wäßrigen Ammoniak-Lösung zugegeben, die 27 g Natriumcyanat in gelöster Form enthält. Die entstehende Dispersion wird im Verlauf von 3 Stunden langsam auf 90 °C erwärmt, wobei die Polymerisation bei 40-40 °C unter Warmeentwicklung zügig einsetzt. Nach weiterem dreistündigen Rühren bei 90 °C wird die thixotrop erscheinende, sehr feinteilige Dispersion kalt abgesaugt, mit einem Liter kaltem Wasser gewaschen und 30 Stunden lang bei 40 °C im Vakuumtrockenschrank getrocknet.

Man isoliert 1 093 g eines Festproduktes mit einem Stickstoffgehalt von 36,7 % und einem Wassergehalt von 10,2 Gew.-%.

Das Verfahrensprodukt enthält etwa 484 g Azulminsäure und etwa 500 g des obengenannten Kondensationsproduktes aus 2 Mol Harnstoff und 1 Mol Crotonaldehyd. Die in dem Verfahrensprodukt vorhandene Azulminsäure enthält etwa 3,5 Gew.-% an $F_1$-Fehlerstellen der Konstitution

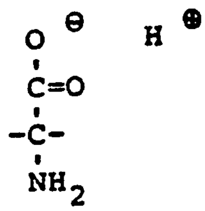

und etwa 0,55 Gew.-% an $F_2$-Fehlerstellen der Konstitution

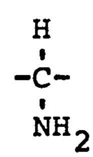

Bezogen auf die Trockensubstanz liegen in der Mischung etwa 49 Gew.-% an Azulminsäuren vor. Die monomere Blausäure ist bei dieser Umsetzung völlig störungsfrei in Gegenwart der Trägersubstanz in einer Ausbeute von 93 % polymerisiert worden.

b) Jeweils 100 g des gemäß 15 (a) hergestellten, etwa 10 Gew.-% Wasser enthaltenden Verfahrensproduktes, das pro 100 g Trockensubstanz etwa 0,295 Mol an Harnstoff-Crotonaldehyd-Kondensationsprodukt der Formel

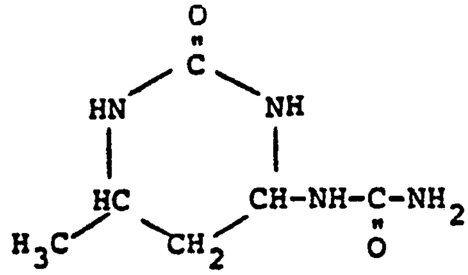

enthält, werden bei pH = 8,5 in Gegenwart von 0,3 g Kaliumcarbonat und 600 g Wasser 4 Stunden lang bei 25-30 °C kondensiert mit:

a) 0,295 Mol Formaldehyd (= 29,5 g 30 %ige Formalin-Lösung)
b) 0,590 Mol Formaldehyd (= 59,0 g 30 %ige Formalin-Lösung)
c) 0,885 Mol Formaldehyd (= 88,5 g 30 %ige Formalin-Lösung)
d) 1,18 Mol Formaldehyd (= 118 g 30 %ige Formalin-Lösung)

Nach beendeter Umsetzung wird jeweils das Festprodukt abfiltriert, nacheinander mit Wasser und verdünntem Ammoniak-Wasser gewaschen und getrocknet. Man erhält jeweils ein Formaldehyd-freies, gegenüber Blausäurerückspaltung stabiles Mischkondensat.

Das Produkt, das bei der Umsetzung (a) anfällt, spaltet bei Temperaturen bis zu 80 °C keine monomere Blausäure ab. Das Produkt, das bei der Umsetzung (d) anfällt, spaltet sogar bei einer Temperatur von 180 °C weniger Blausäure ab als Polyacrylnitril-Pulver.

c) Nach der unter 15(a) angegebenen Methode wird Blausäure jeweils in Gegenwart eines der folgenden Stoffe bzw. Stoff-Gemische polymerisiert:

— Polymethylenharnstoff,
— Harnstoff-Isobutyraldehyd 1: 1-Kondensat,
— Harnstoff-Isobutyraldehyd 1: 1-Kondensat im 1: 1-Gemisch mit Thomasmehl,
— Harnstoff-Isobutyraldehyd 1: 1-Kondensat im 1: 1-Gemisch mit Huminstoffen,
— Harnstoff-Isobutyraldehyd 1: 1-Kondensat im 1: 1-Gemisch mit ammonifiziertem Lignin,
— Superphosphat,
— Phosphorit,
— Doppelsuperphosphat,
— Thomasschlacke,
— Rhenaniaphosphat,
— Ammoniummagnesiumphosphat.

Die entstehenden Produkte werden anschließend gemäß 15(b) bei einem pH-Wert von 6 und einer Temperatur von 100 °C mit jeweils 1 Mol Methylolharnstoff kondensiert.

Man erhält Produkte, die sich als Düngemittel mit Langzeitwirkung eignen.

## Beispiel 16

Jeweils 100 g einer Azulminsäure mit einem Gehalt von etwa 3 Gew.-% an $F_1$-Fehlerstellen ($H_2$—N—C—COOH) und einem Gehalt von etwa 0,5 Gew.-% an $F_2$-Fehlerstellen (H—C—$NH_2$) werden unter intensivem Rühren in 500 g Wasser dispergiert, auf 100 °C erhitzt und mit jeweils einer der folgenden frisch hergestellten Lösungen in einem Guß versetzt:

a) 1 Mol Harnstoff, 100 g Wasser und 100 g 30 %ige Formalin-Lösung (1 Mol Formaldehyd)
b) 1 Mol Dicyandiamid und 300 g 30 %ige Formalin-Lösung (3 Mol Formaldehyd)
c) 1 Mol Harnstoff, 1 Mol Isobutyraldehyd und 200 g Wasser
d) 1 Mol Harnstoff, 1 Mol Crotonaldehyd und 200 g Wasser
e) 1 Mol Melamin, 300 g 30 %ige Formalin-Lösung (3 Mol Formaldehyd), 200 g Wasser und 0,4 g Kaliumcarbonat (es entsteht eine 95 °C heiße Lösung von Trimethylolmelamin).
f) 1 Mol Dicyandiamid und 400 g 30 %ige Formalin-Lösung (4 Mol Formaldehyd)
g) 1 Mol ε-Caprolactam und 400 g 30 %ige Formalin-Lösung (4 Mol Formaldehyd)

Man kondensiert bei 100 °C unter dauernder Kontrolle der pH-Wertes und hält den pH-Wert durch Zugabe von wäßriger Kaliumhydroxid-Lösung zwischen 8 und 9. Anschließend wird die Mischkondensation unter destillativer Entfernung von Wasser bei 50-70 °C bis zur breiigen Konsistenz der Mischkondensate geführt. Die dabei anfallenden einkonzentrierten Dispersionen werden auf Blechschalen gegeben, im Vakuum bei 60 °C zu leicht krümelfähigen Verfahrensprodukten getrocknet und durch Begasung mit Ammoniak von restlichem Formaldehyd befreit.

Man erhält jeweils Verfahrensprodukte, die bei Temperaturen bis zu 150 °C kleine Tendenz zur Cyanwasserstoff-Abspaltung zeigen.

Bei den obigen Umsetzungen der Azulminsäure im alkalischen Milieu findet nicht nur eine Mischkondensation statt, sondern gleichzeitig erhöht sich auch der Fehlerstellengehalt in der Azulminsäure.

Nach der oben angegebenen Methode lassen sich im alkalischen Milieu gleichzeitig Fehlerstellen in der Azulminsäure erzeugen und Kondensationen der fehlerstellenhaltigen Azulminsäure mit Harnstoff und Acetaldehyd bzw. Hydroxyacetaldehyd, Hydropivalinaldehyd, Glyoxal, Hydroxymethylfurfurol, Furfurol oder Acrolein, gegebenenfalls in Anwesenheit von Formaldehyd durchführen, wobei mit den vorgenannten Aldehyden und Formaldehyd Aldolkondensationen ablaufen, so daß Hydroxyaldehyde in die Mischkondensation mit einbezogen werden.

Werden bei derartigen Mischkondensationen zusätzlich 100 g Gelatine als Proteine eingesetzt, so erhält man parallel mit der Mischkondensation und Fehlerstellenerzeugung durch Proteinabbau Oligopeptide und Aminosäuren, die über ihre Amino- und Peptidbindungen an der Mischkondensation teilnehmen können.

Wird bei einer derartigen Mischkondensation hingegen in Gegenwart von Naturstoffen, wie

Cellulosepulver, oder Proteinen, wie Gelatine, im sauren Bereich mischkondensiert, wobei es ausreichend ist, z.B. pro 100 g Methylolharnstoff 100 g Azulminsäure, 100 g Cellulosepulver und 100 g Gelatine in 1 000 g Wasser und 100 g 85 %ige Phosphorsäure zur Hydrolyse zuzusetzen, so werden Azulminsäure-Mischkondensate erhalten, die Oligosaccharide bzw. Oligopeptide und Aminosäuren enthalten, welche zusammen mit den Azulminsäure-Mischkondensaten 0,2 bis 0,4 Mol Phosphorsäure binden.

Beispiel 17

100 g von mit Monomethylolharnstoff stabilisierter Azulminsäure gemäß Beispiel 6 werden mit 0,5 Mol Cadmium-II-Chlorid und 600 ml destilliertem Wasser 6 Stunden bei Raumtemperatur gerührt. Danach wird das Festprodukt abfiltriert, gut mit Wasser gewaschen und bei 100 °C getrocknet. Man isoliert ein schwarzes feinpulvriges Produkt mit einem Cadmiumgehalt von 8,1 Gewichtsprozent. Es handelt sich bei dem Verfahrensprodukt um mit Monomethylolharnstoff stabilisierte Azulminsäure, die Cadmium-II-chlorid komplex gebunden enthält. Das Azulminsäure-Komplexsalz ist gegenüber Cyanwasserstoffabspaltung völlig stabil.

Nach der im Beispiel 17 beschriebenen Methode werden auch die in der nachstehenden Tabelle 1 aufgeführten Komplex-Salze erhalten, indem man jeweils 100 g mit Monomethylolharnstoff stabilisierte Azulminsäure gemäß Beispiel 6 mit jeweils 0,5 Mol Chlorid oder Nitrat des entsprechenden Metalls umsetzt.

Tabelle 1

| Beispiel-Nr. | Metallsalz | Metallgehalt des Azulminsäure-Kompl. |
|---|---|---|
| 18 | $CoCl_2$ | 3,4 Gew.-% |
| 19 | $MnCl_2$ | 2,1 Gew.-% |
| 20 | $SnCl_2$ | 14,3 Gew.-% |
| 21 | $Pb(NO_3)_2$ | 14,5 Gew.-% |
| 22 | $Cu(NO_3)_2$ | 6,4 Gew.-% |
| 23 | $Hg(NO_3)_2$ | 14,3 Gew.-% |
| 24 | $ZnCl_2$ | 6,3 Gew.-% |
| 25 | $FeCl_2$ | 3,4 Gew.-% |
| 26 | $Bi(NO_3)_3$ | 14,5 Gew.-% |
| 27 | $AgNO_3$ | 12,3 Gew.-% |

Beispiel 28

100 g eines Azulminsäure-Kupfernitrat-Komplexes mit einem Kupfergehalt von 35,6 Gew.-% werden nach der im Beispiel 5 angegebenen Methode mit 1,38 Mol Monomethylolharnstoff kondensiert. Nach der Aufarbeitung und Trocknung isoliert man 198 g eines Festproduktes, das gegenüber Cyanwasserstoffabspaltung stabil ist und einen Kupfergehalt von 17 Gew.-% aufweist.

Die Mutterlauge enthält praktisch kein Metallsalz.

Beispiel 29

Nach der im Beispiel 28 angegebenen Methode werden umgesetzt :

a) 100 g eines Azulminsäure-Zinn-II-Chlorid-Komplexes mit einem Zinngehalt von 40,8 Gew.-% und 1,38 Mol Monomethylolharnstoff.

b) 100 g eines Azulminsäure-Zink-II-Chlorid-Komplexes mit einem Zinkgehalt von 20,6 Gew.-% und 1,38 Mol Monomethylolharnstoff.

Nach der Aufarbeitung und Trocknung isoliert man :

a) 200 g Festprodukt mit einem Zinngehalt von 19,9 Gew.-%.

b) 197 g Festprodukt mit einem Zinkgehalt von 9,8 Gew.-%.

Die Mutterlaugen enthalten praktisch keine Metallsalze.

Die als Ausgangsprodukte benötigten Azulminsäure-Metallsalz-Komplexe werden hergestellt, indem man Azulminsäure bei Raumtemperatur in wäßrigem Medium mit dem jeweiligen Metallsalz verrührt.

Beispiel 30

α) Zu 7 Litern 20 %iger wäßriger Blausäure (= 1 400 g (52 Mol) Cyanwasserstoff) werden unter intensivem Rühren 350 g etwa 25 Gew.-%iger wäßriger Ammoniak-Lösung (= 87,5 g (etwa 5,15 Mol)

Ammoniak) zugegeben, die 70 g (1,1 Mol) Natriumcyanat enthält. Diese Mischung wird auf 40 °C erwärmt. Danach steigt die Temperatur durch die freiwerdende Polymerisationswärme auf 70 °C an. Man erhitzt noch 4 Stunden auf 90 °C und arbeitet dann auf, indem man das braunschwarz anfallende Polymerisat, das in Wasser keine kolloiden Lösungen bildet, abfiltriert, nacheinander mit Wasser und Äthanol wäscht und anschließend bei 50 bis 80 °C unter vermindertem Druck trocknet.

Ausbeute : 94 % der Theorie.

Elementaranalyse :

40,6 % C ; 4,1 % H ; 42,4 % N ; 12,8 % O.

β) Jeweils 100 g der gemäß 30 (α) hergestellten Azulminsäure werden in 600 ml Wasser mit jeweils 1 Mol der nachstehend genannten Metallsalze und einer Lösung von 1,3 Mol Monomethylolharnstoff in 200 ml Wasser versetzt und in Gegenwart von 200 ml 85 %iger Phosphorsäure 10 Stunden lang bei 90 °C der Mischkondensation unterworfen.

a) $FeSO_4$
b) $CuSO_4$
c) $ZnCl_2$
d) $NiCl_2$
e) $CoCl_2$
f) $MnSO_4$
g) $Pb(OCOCH_3)_2$

Danach wird aufgearbeitet, indem man das jeweils entstandene Festprodukt abfiltriert, mit Wasser wäscht und bei 80 °C unter einem Druck von 14 Torr trocknet.

Die isolierten Produkte weisen folgenden Gehalt an Metall und Stickstoff auf :

a) 5,5 Gew.-% Fe ; 35,7 Gew.-% N
b) 11,3 Gew.-% Cu ; 30,1 Gew.-% N
c) 16,8 Gew.-% Zn ; 28,5 Gew.-% N
d) 14,3 Gew.-% Ni ; 29,1 Gew.-% N
e) 8,9 Gew.-% Co ; 32,6 Gew.-% N
f) 7,9 Gew.-% Mn ; 30,8 Gew.-% N
g) 26,4 Gew.-% Pb ; 28,5 Gew.-% N

Alle Verfahrensprodukte erweisen sich bei Langzeitlagerung in viel Luft enthaltenden Gebinden als stabil gegenüber Cyanwasserstoffabspaltung (Cyanwasserstoff-Abspaltungsrate 0 ppm).

Analytisch wird ermittelt, daß das im Falle der Umsetzung (a) entstandene Produkt einen Gehalt von 18,22 Gew.-% an $F_1$-Fehlerstellen und einen Gehalt von 2-2,5 Gew.-% an $F_2$-Fehlerstellen aufweist. Das nach Umsetzung (b) erhältliche Produkt weist 19,6 Gew.-% an $F_1$-Fehlerstellen und 2-2,5 Gew.-% an $F_2$-Fehlerstellen auf.

Das nach Umsetzung (c) erhältliche Produkt weist 21 Gew.-% an $F_1$-Fehlerstellen und 2-2,5 Gew.-% an $F_2$-Fehlerstellen auf.

Somit sind bei den obigen Umsetzungen Fehlerstellenerzeugung, Komplexierung und Mischkondensation nebeneinander abgelaufen.

Bei der unter (β) beschriebenen Umsetzung muß die zuvor hergestellte Azulminsäure nicht unbedingt in trockenem Zustand eingesetzt werden. Es ist vielmehr auch möglich, diese Azulminsäure in feuchter Form zu verwenden. Ferner kann diese Azulminsäure auch nach vorheriger destillativer Entfernung von nicht umgesetzter Blausäure und Ammoniak ohne vorherige Isolierung im gleichen Reaktionsgefäß weiter umgesetzt werden.

## Beispiel 31

Jeweils 100 g gemäß Beispiel 30 (α) hergestellte Azulminsäure werden in 200 ml Dimethylformamid dispergiert und mit

a) 1 Mol Bismethoxymethyl-harnstoff der Formel

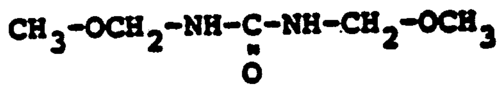

(50 %ige Lösung in Dimethylformamid)

b) 1 Mol Bismethyloxymethyl-äthylenharnstoff der Formel

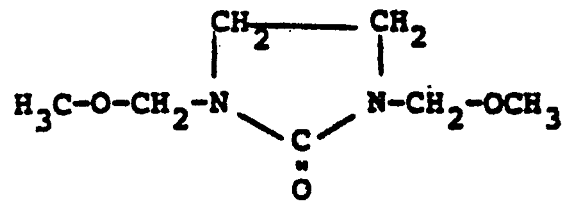

(50 %ige Lösung in Dimethylformamid)

c) 0,5 Mol Hexamethylol-melaminäther (50 %ige Lösung in Dimethylformamid) mischkondensiert. Hierzu heizt man die jeweilige Dispersion auf 100 °C auf, fügt 100 ml Wasser als Carrier und Quellungsmittel zu dem intensiv gerührten Ansatz hinzu und tropft 15 ml 85 %ige Phosphorsäure im Verlauf von einer halben Stunde ein. Anschließend werden Dimethylformamid und durch Kondensation entstandenes Methanol unter Normaldruck bei etwa 156 °C abdestilliert. Sobald die Reaktionsmischungen eine breiige Konsistenz angenommen haben, wird im Vakuum zur Trockne eingeengt. Die dabei verbleibenden Produkte werden durch Waschen mit Wasser von noch vorhandenen Spuren an Dimethylformamid befreit. Man erhält Mischkondensate in folgenden Ausbeuten :

a) 189 g

b) 205 g

c) 210 g

Die Verfahrensprodukte erweisen sich bei Langzeitlagerung in verschlossenen Gebinden als stabil gegenüber Blausäureabspaltung (Cyanwasserstoff-Abspaltungsrate : 0 ppm).

## Beispiel 32

In einer Dispersion aus 100 g gemäß Beispiel 30 (α) hergestellter Azulminsäure und 0,5 Mol Saccharose in 500 g Wasser wird 1 Mol Harnstoff gelöst. Anschließend wird nach Zusatz von 15 g einer Mischung aus 7 g 85 %iger wäßriger Phosphorsäure und 8 g konzentrierter Schwefelsäure 20 Minuten lang bei 100 °C gerührt, wobei sich Zukkerabbauprodukte bilden, die mit dem Harnstoff und der Azulminsäure Mischkondensationen eingehen, so daß Produkte humusartigen Charakters entstehen. Zur Aufarbeitung engt man das Reaktionsgemisch bis zur breiigen Konsistenz ein, gießt das Produkt auf ein Blech und erhält 185 g eines krümeligen, braun-schwarzen Mischkondensates mit karamelartigem Geruch. Das Produkt zeigt bei 40 °C keine Tendenz zur Cyanwasserstoffabspaltung.

## Beispiel 33

a) Herstellung eines Katalysators zur Formose-Zuckergemisch-Synthese :

In eine Dispersion von 200 g des gemäß Beispiel 6 hergestellten Mischkondensates aus Azulminsäure und Monomethylolharnstoff in 900 g Wasser wird unter intensivem Rühren eine Lösung von 222 g (2 Mol) Calciumchlorid in 300 ml Wasser gegeben. Anschließend erzeugt man unter intensivem Rühren im Verlauf von einer Stunde durch Zugabe von 160 g Natriumhydroxid in 200 g Wasser 2 Mol Calciumhydroxid, das auf dem Azulminsäure-Aminoplast-Mischkondensat in besonders fein verteilter Form aufzieht. Die entstandene Dispersion wird abgesaugt und durch Waschen mit Wasser von noch enthaltenem Kochsalz befreit.

Ausbeute : 430 g (Gemäß Trockengewichtsbestimmung an einer Parallelprobe)

b) Formose-Zuckergemisch-Synthese :

Man schlämmt das gesamte gemäß Beispiel 33 (a) hergestellte Produkt unter Stickstoff in kohlendioxidfreier Atmosphäre mit 700 ml Wasser zu einem noch rührbaren Brei auf, erhitzt das Gemisch auf 78 °C und tropft kontinuierlich im Verlaufe von 4 Stunden zügig 1 200 g einer 30 %igen Formalin-Lösung ein. Schon nach Zugabe von 100 g der Formalin-Lösung setzt eine deutlich exotherme Reaktion ein. Man sorgt gegebenenfalls durch Kühlung dafür, daß die Temperatur des Reaktionsgemisches 80 °C nicht übersteigt, heizt anschließend noch 2 Stunden auf 85 °C auf und entfernt nicht umgesetzten Formaldehyd durch Destillation bei Normaldruck.

Durch Titration filtrierter Ansätze stellt man fest, daß bei der Reaktion ca. 93 % des angebotenen Formaldehyd in Formose-Zuckergemisch umgewandelt worden sind. Zur Aufarbeitung engt man das Reaktionsgemisch bis zur breiigen Konsistenz ein, gießt dann das Produkt auf ein Blech und trocknet im Vakuumtrockenschrank. Man erhält eine leicht krümelfähige Masse mit karamelartigem Geruch. In dem isolierten Gemisch ist das Calciumhydroxid mit dem entstandenen Zuckergemisch weitgehend komplexiert.

Ausbeute : 902 g, Restfeuchtigkeitsgehalt : ca. 10 Gew.-%.

## Beispiel 34

Jeweils 100 g gemäß Beispiel 6 hergestellten Mischkondensates aus Azulminsäure und Monomethylolharnstoff werden in 400 g Wasser dispergiert und

a) mit 1 Mol Phosphorsäure in 500 g Wasser

b) mit 1 Mol Salpetersäure in 500 g Wasser

unter intensivem Rühren im Verlaufe einer halben Stunde durch Eintropfen der Säuren versetzt. Man rührt 4 Stunden bei Raumtemperatur nach, filtriert das Festprodukt ab, wäscht mit wasser nach und trocknet schonend bei 40 °C im Vakuum. Durch Titration der Mutterlaugen und durch Elementaranalyse wird der Gehalt an gebundener Säure in den Verfahrensprodukten ermittelt.

a) Es wurden 0,11 Mol Phosphorsäure an die basischen Gruppen des Mischkondensates gebunden.

b) Es wurden 0,48 Mol Salpetersäure an die basischen Gruppen des Mischkondensates gebunden.

Da bei der Herstellung derartiger Nitrat-Ionen enthaltender Mischkondensate beim Auswaschen der Produkte mit viel Wasser zur Entfernung von Spuren an Salpetersäure die fixierten Nitrat-Ionen anteilweise abdissoziieren, ist es zweckmäßig, kleine Anteile an nicht ionisch gebundener Salpetersäure lediglich mit wenig Wasser auszuwaschen und die feuchten Pulver mit gasförmigem Ammoniak zu begasen, um Spuren nicht ausgewaschener Salpetersäure in Ammoniumnitrat zu überführen.

Beispiel 35

216 g einer Azulminsäure, die ca. 19 g Aminogruppen pro 100 g Azulminsäure enthält, werden unter intensivem Rühren bei Raumtemperatur mit 900 g Wasser und 155 g 30 %iger Formalinlösung versetzt, wobei eine schwarze dispersion entsteht. Wie sich aus einer filtrierten Probe ermitteln läßt, beträgt die Formaldehydkonzentration der Gesamtmischung zu Beginn 4,4 Gew.-%. Der durch Filtration fortlaufend verfolgte Formaldehydabfall zeigt die zügig laufende partielle Umsetzung der Aminogruppen in der unlöslichen Azulminsäure an. Bereits nach 0,5 Stunden ist der Formaldhydwert einer filtrierten Probe von 4,4 Gew.-% auf 2,69 Gew.-% abgefallen. Man heizt die gut gerührte Dispersion auf 98-100 °C und findet bereits nach 45 Minuten einen weiteren Abfall des Formaldehyd-Wertes in der dispergierten Mischung auf 1,9 Gew.-%. Im Verlaufe von weiteren 3 Stunden sinkt die Formaldehyd-Konzentration auf einen Wert von 0,68 Gew.-% ab. Die rechnerische Bilanzierung ergibt, daß bei der partiellen Kondensation der verwendeten Azulminsäure etwa 1,26 Mol an Formaldehyd in Kondensationsreaktionen mit Aminogruppen der Azulminsäure eingetreten sind. Der gesamte Formaldehyd-Verbrauch beträgt 37,8 g, was bedeutet, daß von etwa 41 g an Aminogruppen in 216 g der eingesetzten Azulminsäure (= 2,5 Aminogruppen-Äquivalente) etwa 1,26 Äquivalente (~ 20,1 g) mit Formaldehyd reagiert haben. Somit stehen weitere 1,24 Aminogruppen-Äquivalente (~19,8 g) in der partiell stabilisierten Azulminsäure für die erfindungsgemäße Mischkondensation mit Aminoplastmonomeren zur Verfügung.

Jeweils 210 g dieser mit Formaldehyd vorstabilisierten, noch etwa 1,24 Aminogruppen-Äquivalente enthaltenden Azulminsäure werden bei Raumtemperatur in Gegenwart von 8-10 g 85 %iger wäßriger Phosphorsäure unter intensivem Rühren 4 Stunden lang mit den nachstehend genannten Stoffen bzw. Mischungen umgesetzt :

a) 1,24 Mol Monomethylolharnstoff
b) 0,31 Mol Tetramethylol-hydrazo-dicarbonamid
c) 0,31 Mol Tetramethylol-acetylen-diurein der Formel

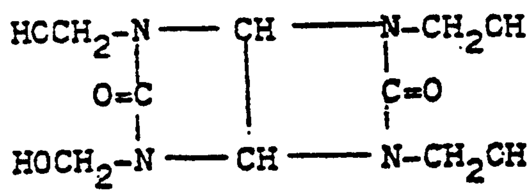

d) 1,24 Mol Harnstoff und 1,24 Mol Isobutyraldehyd
e) 1,24 Mol Harnstoff und 1,24 Mol Crotonaldehyd
f) 1,24 Mol Diaminomaleinsäuredinitril der Konstitution

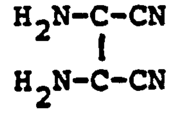

und 2,4 Mol Formaldehyd.

Man erhält ausgezeichnet filtrierbare Mischkondensate, die bei Temperaturen bis zu 160 °C gegenüber Blausäure-Rückspaltung weitgehend stabil sind. Im Falle der Produkte (a) bis (d) wird bei Temperaturen bis zu 160 °C ein Blausäure-Abspaltungswert von 0 ppm gemessen.

Das Produkt, das bei der Umsetzung (d) erhalten wird, neigt lediglich zur Abspaltung von Isobutyraldehyd, während das Produkt, das bei der Umsetzung (e) anfällt, Crotonaldehyd abspaltet.

Ausbeuten nach dem Waschen der Mischkondensate und nach dem Trocknen der Produkte bei 60 °C im Vakuum :

| | |
|---|---|
| a) 301 g | d) 275 g |
| b) 282 g | e) 280 g |
| c) 270 g | f) 305 g |

Beispiel 36

Nach der im Beispiel 35 beschriebenen Methode werden 216 g einer Azulminsäure, die ca. 19 g Aminogruppen pro 100 g Azulminsäure enthält, 2 Stunden lang bei 100 °C unter intensivem Rühren mit 77 g einer 30 %igen Formalin-Lösung (0,77 Mol Formaldehyd) behandelt. die titrimetrische Verfolgung

der Umsetzung zeigt, daß zu diesem Zeitpunkt etwa 0,54 Mol Formaldhyd mit der Azulminsäure reagiert haben. Wie ferner analytisch ermittelt wird, sind gleichzeitig mit der primären Vorstabilisierung der Azulminsäure etwa 6,3 Gew.-% an $F^1$-Fehlerstellen und 0,58 Gew.-% an $F_2$-Fehlerstellen eingeführt worden.

Anschließend kühlt man das Reaktionsgemisch auf 40 °C ab, stellt durch Zugabe von 18 g 85 %iger wäßriger Phosphorsäure einen pH-Wert von etwa 3 ein, löst in der intensiv gerührten Dispersion 60 g Harnstoff auf, fügt in einem Guß 72 g (1 Mol) isobutyraldehyd hinzu und kondensiert 6 Stunden bei 35 bis 40 °C. Zur Aufarbeitung wird das Festprodukt abfiltriert, gewaschen und getrocknet. Man erhält 298 g eines Produktes, das gemäß analytischer Bestimmung etwa 27,5 Gew.-% an Einheiten der Formel

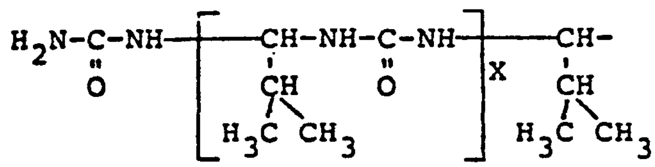

wobei X nicht bekannt ist, an der der Azulminsäure ankondensiert sind.

Das Produkt enthält 37,5 % Stickstoff und 2,9 % Phosphor.

Die in den Mutterlaugen verbliebenen Anteile an Alkylolierten, löslichen Isobutyraldehyd-Oligokondensaten des Harnstoffes können erneut für die stabilisierence Mischkondensation weiterer Azulminsäuren verwendet werden.

## Beispiel 37

Nach der im Beispiel 35 beschriebenen Methode werden 216 g Azulminsäure, die ca. 19 g Aminogruppen pro 100 g Azulminsäure enthält, 3 Stunden lang bei 100 °C unter intensivem Rühren mit 200 g 30 %iger Formalin-Lösung (= 2 Mol Formaldehyd) behandelt. Dabei werden gemäß titrimetrischer Verfolgung der Formaldehydkonzentration etwa 1,5 Mol an Formaldehyd durch Kondensationsreaktionen verbraucht. Die gut gerührte Dispersion wird auf Raumtemperatur abgekühlt und in zwei Hälfen geteilt, die zu den folgenden Umsetzungen benutzt werden :

a) Man löst in der einen Hälfte der Dispersion 240 g (4 Mol) Harnstoff und 140 g (2 Mol) Crotonaldehyd auf, rührt 1,5 Stunden bei 50 °C, versetzt in einem Guß mit 32 ml 85 %iger wäßriger Phosphorsäure, kondensiert 4 Stunden lang bei Temperaturen zwischen 45 und 50 °C und filtriert heiß ab. Nach dem Waschen und Trocknen erhält man 380 g eines Azulminsäure-Mischkondensates, in dem etwa 43 Gew.-% an Crotonaldehyd-Harnstoff-Kondensaten gebunden sind.

Elementaranalyse :

44,1 % C ; 5,3 % H ; 28,5 % N ; 18,8 % O ; 3,6 % P

b) Man löst in der anderen Hälfte der Dispersion 120 g (2 Mol) Harnstoff und 2 Mol Isobutyraldehyd auf, rührt 1,5 Stunden bei 50 °C, versetzt in einem Guß mit 32 ml 85 %iger wäßriger Phosphorsäure, kondensiert 4 Stunden lang bei Temperaturen zwischen 45 und 50 °C und filtriert heiß ab. Nach dem Waschen und Trocknen bei 40 °C im Vakuum erhält man 381 g eines Azulminsäure-Mischkondensates, in dem etwa 46,5 Gew.-% an Isobutyraldehyd-Harnstoff-Kondensaten gebunden sind.

Elementaranalyse :

38,5 % C ; 5,5 % H ; 31,7 % N ; 19,7 % O ; 2,6 % P

## Beispiel 38

108 g einer relativ fehlerstellenarmen Azulminsäure, 800 g Wasser und 280 g Hexamethylentetramin werden 18 Stunden bei 100 °C gerührt. Dabei werden etwa 11,5 g Ammoniak und etwa 2 g Kohlendioxid abgespalten. Man läßt abkühlen, filtriert die braun-schwarze Dispersion, wäscht mehrfach mit Wasser nach und trocknet bei 40 °C im Vakuum. Man erhält 160 g eines Mischkondensates mit einem Stickstoffgehalt von 39,9 %.

## Beispiel 39

Jeweils 100 g gemäß Beispiel 6 hergestellten Azulminsäure-Monomethylolharnstoff-Kondensates werden in hoch getrocknetem Zustand (12 Torr, 100 °C)

a) in 4 Mol Hexamethylendiisocyanat

b) in 6 Mol Essigsäureanhydrid unter Verwendung von 0,4 g Natriumacetat als Katalysator

c) in 4 Mol Dimethylsulfat

d) in 6 Mol einer Harnstoffschmelze (Isocyansäurelieferant, 138 °C)

e) in 5 Mol einer ε-Caprolactam-Schmelze

f) in 5 Mol ε-Caprolacton

g) in 5 Mol einer Glykolcarbonat-Schmelze

h) in 3 Mol $Cl\text{-}CH_2\text{-}Si(OC_2H_5)_3$, gelöst in 400 g o-Dichlorbenzol

i) mit 4 Mol Phosgen in 400 g o-Dichlorbenzol

j) mit 100 g Styrol, gelöst in 400 g o-Dichlorbenzol und 2 g des Radikalbildners Azoisobuttersäurenitril

k) mit 100 g Methacrylsäuremethylester, gelöst in 400 g o-Dichlorbenzol und 2 g Azoisobuttersäuredinitril

l) mit 100 g Vinylacetat gelöst in 400 g Dichlorbenzol und 2 g Azoisobuttersäure-nitril

m) 50 g Styrol und 50 g Methacrylsäure-β-hydroxypropylester, gelöst in 400 g Dichlorbenzol und 2 g Azoisobuttersäuredinitril ;

auf 150 °C aufgeheizt und 6 Stunden bei dieser Temperatur gehalten.

Zur Aufarbeitung wird jeweils das Festprodukt abfiltriert, zweimal mit siedendem Äthanol extrahiert und getrocknet.

Im Falle der Produkte, die bei den Umsetzungen (a) bis (i) anfallen, werden nur minimale Gewichtszunahmen registriert. Hieraus ist zu schließen, daß nicht mehr als ca. 0,1 bis 0,03 Äquivalente an Aminogruppen bzw. NH-Gruppen der eingesetzten Mischkondensate mit den acylierenden oder alkylierenden Reagentien in Form einer Oberflächenmodifizierung der Mischkondensate in Reaktion getreten sind.

Lediglich die im Falle der Umsetzungen (j) bis (m) erhaltenen Produkte zeigen ein deutlich größeres Gewicht als die eingesetzten Mischkondensate. Auch hierbei sind die Mischkondensate nicht wesentlich in Reaktion getreten. Es werden jedoch Produkte erhalten, in denen die eingesetzten Mischkondensate mit entsprechenden Vinylpolymerisaten umhüllt sind.

Im Falle der Umsetzungen (j) bis (m) betragen die Ausbeuten :

j ) 145 g
k) 132 g
l ) 138 g
m) 144 g

**Ansprüche**

1. Agrochemische Mittel, gekennzeichnet durch

a) einen Gehalt an mindestens einer durch Umsetzung mit Aminoplastbildnern und Carbonylverbindungen oder deren gegebenenfalls chemisch modifizierten Kondensationsprodukten stabilisierten Azulminsäure, die 0,5 bis 55 Gew.-% an ionischen Gruppen der Formel

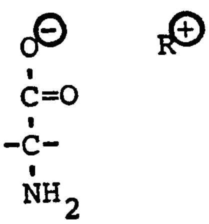

$(F_1)$

enthält, in welcher

R für Wasserstoff, Ammonium, ein Äquivalent einer protonisierten oder quaternierten organischen Stickstoffbase, eines Sulfonium-Kations oder für ein Äquivalent eines Metallkations steht,

und die 0,5 bis 15 Gew.-% an durch Decarboxylierungsreaktionen entstandenen Gruppen der Formel

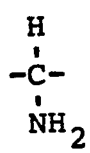

$(F_2)$

enthält, oder

b) einen Gehalt an einem Säureadditions-Salz und/oder einer Komplex-Verbindung dieser stabilisierten Azulminsäuren, und/oder

c) einen Gehalt an Mischprodukten dieser stabilisierten Azulminsäuren mit Zusatzstoffen und/oder

d) einen Gehalt an an der Oberfläche chemisch modifizierten Produkten der vorgenannten Stoffe.

2. Düngemittel, gekennzeichnet durch einen Gehalt an mindestens einem Stoff (a), (b), (c) oder (d) gemäß Anspruch 1.

3. Bodenverbesserungsmittel, gekennzeichnet durch einen Gehalt an mindestens einem Stoff (a), (b), (c) oder (d) gemäß Anspruch 1.

4. Verfahren zur Düngung von Pflanzen durch Einwirkenlassen von Düngemitteln auf die Pflanzen oder deren Lebensraum, gekennzeichnet durch die Verwendung von einem Stoff (a), (b), (c) oder (d)

gemäß Anspruch 1.

5. Verwendung von Stoffen (a), (b), (c), oder (d) gemäß Anspruch 1 Düngemittel.

6. Verwendung von Stoffen (a), (b), (c) oder (d) gemäß Anspruch 1 als Bodenverbesserungsmittel.

7. Verfahren zur Herstellung von Düngemitteln durch Vermischen von Stoffen (a), (b), (c) oder (d) mit Streckmitteln und/oder oberflächenaktiven Mitteln, gekennzeichnet durch die Verwendung von Stoffen (a), (b), (c) oder (d) gemäß Anspruch 1.

**Claims**

1. Agrochemical agents, characterised in that

a) they contain at least one azulmic acid stabilized by reaction with aminoplast-forming agents and carbonyl compounds or optionally chemically modified condensation products thereof, and containing 0.5 to 55 % by weight of ionic groups of the formula

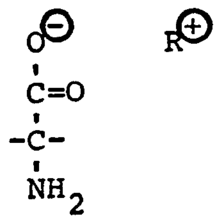

$(F_1)$

in which

R represents hydrogen, ammonium, one equivalent of a protonated or quaternised organic nitrogen base or of a sulphonium cation or one equivalent of a metal cation,

and containing 0.5 to 15 % by weight of groups formed by decarboxylation reactions, of the formula

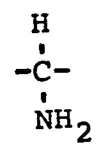

$(F_2)$

or

b) they contain an acid addition salt and/or a complex compound of these stabilized azulmic acids, and/or

c) they contain mixed products of these stabilized azulmic acids with additives and/or

d) they contain products of the aforesaid substances with are chemically modified on the surface.

2. Fertilizers, characterised in that they contain at least one of the substances (a), (b), (c) or (d) according to claim 1.

3. Soil-improving agents, characterised in that they contain at least one of the substances (a), (b), (c) or (d) according to claim 1.

4. Process for fertilizing plants by allowing fertilizers to act on the plants or their environment, characterised in that one of the substances (a), (b), (c) or (d) according to claim 1 is used.

5. Use of the substances (a), (b), (c) or (d) according to claim 1 as fertilizers.

6. Use of the substances (a), (b), (c) or (d) according to claim 1 as soil-improving agents.

7. Process for the production of fertilizers by mixing substances (a), (b), (c) or (d) with extenders and/or surface-active agents, characterised in that the substances (a), (b), (c) or (d) according to claim 1 are used.

**Revendications**

1. Compositions agrochimiques, caractérisées par :

a) une teneur en au moins un acide azulmique stabilisé par réaction avec des générateurs d'aminoplastes et des composés carbonyliques ou leurs produits de condensation éventuellement modifiés chimiquement, qui contient 0,5 à 55 % en poids de groupes ioniques de formule :

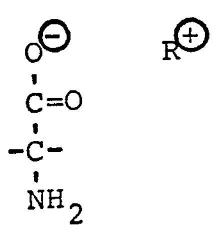

$(F_1)$

dans laquelle

R est l'hydrogène, l'ion ammonium, un équivalent d'une base organique azotée protonée ou quaternisée d'un cation sulfonium ou un équivalent d'un cation métallique,

et qui renferme 0,5 à 15 % en poids de groupes formés par des réactions de décarboxylation, de formule :

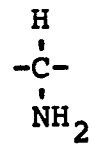

$(F_2)$

ou

b) une teneur en un sel d'addition d'acide et/ou en un composé complexe de ces acides azulmiques stabilisés, et/ou

c) une teneur en coproduits de ces acides azulmiques stabilisés avec des additifs et/ou

d) une teneur en produit, chimiquement modifiés en surface, des substances mentionnées ci-dessus.

2. Fertilisants caractérisés par une teneur en au moins une substance (a), (b), (c) ou (d) suivant la revendication 1.

3. Agents d'amendement du sol, caractérisés par une teneur en au moins une substance (a), (b), (c) ou (d) suivant la revendication 1.

4. Procédé de fertilisation de plantes par l'action de fertilisants sur les plantes ou sur leur milieu, caractérisé par l'utilisation d'une substance (a), (b), (c) ou (d) suivant la revendication 1.

5. Utilisation de substances (a), (b), (c) ou (d) suivant la revendication 1 comme fertilisants.

6. Utilisation de substances (a), (b), (c) ou (d) suivant la revendication 1 comme agents d'amendement du sol.

7. Procédé de production de fertilisants par mélange de substances (a), (b), (c) ou (d) avec des diluants et/ou des agents tensio-actifs, caractérisé par l'utilisation de substances (a), (b), (c) ou (d) suivant la revendication 1.